# EUROPEAN PATENT APPLICATION

(11) **EP 4 375 947 A1**
(43) Date of publication of application: **29.05.2024**
(21) Application number: 22846219.8
(22) Date of filing: 20.07.2022
(51) Int. Cl.: G06T 19/20, G06T 5/50, G06T 7/246, G06T 19/00, H04N 7/15, H04L 12/18, G06F 3/01

(54) **POINT CLOUD DATA TRANSMISSION DEVICE, POINT CLOUD DATA TRANSMISSION METHOD, POINT CLOUD DATA RECEPTION DEVICE, AND POINT CLOUD DATA RECEPTION METHOD**

(30) Priority: 20.07.2021 KR 20210094544; 20.07.2021 KR 20210094548; 20.10.2021 KR 20210139835
(71) Applicant: LG Electronics Inc., Yeongdeungpo-gu Seoul 07336 (KR)
(72) Inventor: HAN, Jaeshin, Seoul 06772 (KR); SUH, Jongyeul, Seoul 06772 (KR)
(74) Representative: Mooser, Sebastian Thomas
(86) International application number: PCT/KR2022/010606
(87) International publication number: WO 2023/003349

(57) **Abstract**

A point cloud data transmission method according to embodiments may comprise the steps of: encoding point cloud data; and transmitting a bitstream including the point cloud data. A point cloud reception method according to embodiments may comprise the steps of: receiving a bitstream including point cloud data; and decoding the point cloud data.

## Description

### [Technical Field]

Embodiments relate to a method and device for processing point cloud content.

### [Background Art]

Point cloud content is content represented by a point cloud, which is a set of points belonging to a coordinate system representing a three-dimensional space. The point cloud content may express media configured in three dimensions, and is used to provide various services such as virtual reality (VR), augmented reality (AR), mixed reality (MR), and self-driving services. However, tens of thousands to hundreds of thousands of point data are required to represent point cloud content. Therefore, there is a need for a method for efficiently processing a large amount of point data.

### [Disclosure]

### [Technical Problem]

Embodiments provide a device and method for efficiently processing point cloud data. Embodiments provide a point cloud data processing method and device for addressing latency and encoding/decoding complexity.

The technical scope of the embodiments is not limited to the aforementioned technical objects, and may be extended to other technical objects that may be inferred by those skilled in the art based on the entire contents disclosed herein.

### [Technical Solution]

According to embodiments, a method of transmitting point cloud data may include encoding point cloud data, and transmitting a bitstream containing the point cloud data. According to embodiments, a method of receiving point cloud data may include receiving a bitstream containing point cloud data, and decoding the point cloud data.

### [Advantageous Effects]

Devices and methods according to embodiments may process point cloud data with high efficiency.

The devices and methods according to the embodiments may provide a high-quality point cloud service.

The devices and methods according to the embodiments may provide point cloud content for providing general-purpose services such as a VR service and a self-driving service.

### [Description of Drawings]

The accompanying drawings, which are included to provide a further understanding of the disclosure and are incorporated in and constitute a part of this application, illustrate embodiment(s) of the disclosure and together with the description serve to explain the principle of the disclosure. For a better understanding of various embodiments described below, reference should be made to the description of the following embodiments in connection with the accompanying drawings. The same reference numbers will be used throughout the drawings to refer to the same or like parts.
FIG. 1 is a block diagram illustrating an exemplary communication system 1 according to embodiments.
FIG. 2 is a block diagram illustrating a wireless communication system to which methods according to embodiments are applicable.
FIG. 3 illustrates an example of a 3GPP signal transmission/reception method.
FIG. 4 illustrates an example of mapping a physical channel in a self-contained slot according to embodiments.
FIG. 5 illustrates an example of an ACK/NACK transmission procedure and a PUSCH transmission procedure.
FIG. 6 illustrates a downlink structure for media transmission of a 5GMS service according to embodiments.
FIG. 7 illustrates an example of a FLUS structure for an uplink service.
FIG. 8 illustrates a point cloud data processing system according to embodiments.
FIG. 9 illustrates an example of a point cloud data processing device according to embodiments.
FIG. 10 illustrates an example of a point cloud data processing device according to embodiments.
FIG. 11 illustrates an example of a point cloud data processing device according to embodiments.
FIG. 12 illustrates an example of a point cloud data processing device according to embodiments.
FIG. 13 illustrates an example of a point cloud data processing device according to embodiments.
FIG. 14 illustrates an example of a point cloud data processing device according to embodiments.
FIG. 15 illustrates a transmission structure for a UE on a visited network according to embodiments.
FIG. 16 illustrates a call connection between UEs according to embodiments.
FIG. 17 illustrates devices for transmitting and receiving point cloud data according to embodiments.
FIG. 18 illustrates a structure for XR communication on a 5G network according to embodiments.
FIG. 19 illustrates a structure for XR communication according to embodiments
FIG. 20 illustrates a protocol stack of XR interactive service on a 3GPP 5G network according to embodiments.
FIG. 21 illustrates a point-to-point XR videoconference according to embodiments.
FIG. 22 illustrates an extension of an XR videoconference according to embodiments.
FIG. 23 illustrates an extension of an XR videoconference according to embodiments.
FIG. 24 illustrates an example of a point cloud encoder according to embodiments.
FIG. 25 illustrates an example of a point cloud decoder according to embodiments.
FIG. 26 illustrates an exemplary operation flowchart of a transmission device according to embodiments.
FIG. 27 illustrates an exemplary operation flowchart of a receiving apparatus according to embodiments.
FIG. 28 illustrates conversational point cloud data according to embodiments.
FIG. 29 illustrates an example of filtering according to embodiments.
FIG. 30 illustrates a vector configuration according to embodiments.
FIG. 31 illustrates examples of partitioning according to embodiments.
FIG. 32 illustrates an example of generating an axis for an object of interactive point cloud data according to embodiments.
FIG. 33 illustrates axis selection, estimation, transformation, angle generation, and rotation matrix generation according to embodiments.
FIG. 34 illustrates a method of transforming point cloud data according to embodiments.
FIG. 35 illustrates a camera point, an image point, and an image plane according to embodiments.
FIG. 36 illustrates a reference of point cloud data according to embodiments.
FIG. 37 illustrates a relationship between a point, a camera, and a laser projector according to embodiments.
FIG. 38 illustrates a distance and a constant value according to embodiments.
FIG. 39 illustrates mask sampling according to embodiments.
FIG. 40 illustrates a method of acquiring a sampling eye according to embodiments.
FIG. 41 illustrates a normal vector of a matrix for neighbor points according to embodiments.
FIG. 42 illustrates an example of generating a plane reference axis from a vector related to a shoulder and spine of a user according to embodiments.
FIG. 43 illustrates a facial point source and an eye point source according to embodiments.
FIG. 44 illustrates a vector related to a source point according to embodiments.
FIG. 45 illustrates a head spine feature point according to embodiments.
FIG. 46 shows metadata according to embodiments.
FIG. 47 shows metadata according to embodiments.
FIG. 48 shows metadata according to embodiments.
FIG. 49 shows metadata according to embodiments.
FIG. 50 shows metadata according to embodiments.
FIG. 51 illustrates a point cloud data transmission method according to embodiments.
FIG. 52 illustrates a point cloud data reception method according to embodiments.

### [Best Model

Preferred embodiments of the embodiments are described in detail, examples of which are shown in the accompanying drawings. The following detailed description with reference to the accompanying drawings is intended to illustrate a preferred embodiment of the embodiments rather than only showing embodiments that may be implemented in accordance with embodiments of the embodiments. The following detailed description includes details to provide a thorough understanding of the embodiments. However, it will be apparent to those skilled in the art that the embodiments may be practiced without these details.

Most terms used in embodiments are selected in general ones that are widely used in the art, but some terms are arbitrarily selected by the applicant and their meaning is described in detail in the following description as needed. Accordingly, embodiments should be understood based on the intended meaning of terms rather than a simple name or meaning of the term.

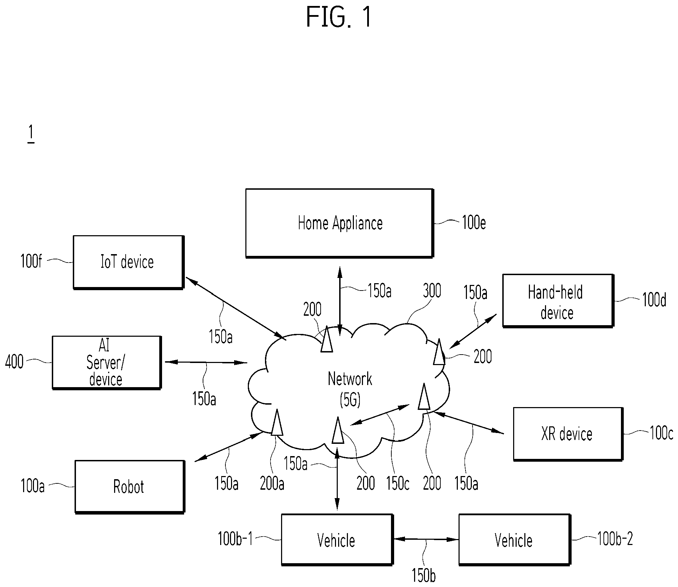

FIG. 1 is a block diagram illustrating an example of a communication system 1 according to embodiments.

Referring to FIG. 1, the communication system 1 includes wireless devices 100a to 100f, a base station (BS) 200, and a network 300. The BS 200 may be referred to as a fixed station, a Node B, an evolved-nodeb (enb), a next generation nodeb (gnb), a base transceiver system (BTS), an access point (AP), a network or 5th generation (5G) network node, an artificial intelligence (AI) system, a road side unit (RSU), a robot, an augmented reality (AR)/virtual reality (VR) system, a server, or the like. According to embodiments, a wireless device refers to a device that performs communication with a BS and/or another wireless device using a wireless access technology (e.g., 5G New RAT (NR) or Long Term Evolution (LTE)), and may be referred to as a communication/wireless/5G device or a user equipment (UE). The wireless devices are not limited to the above embodiments, and may include a robot 100a, vehicles 100b-1 and 100b-2, an extended reality (XR) device 100c, a hand-held device 100d, a home appliance 100e, an Internet of Thing (IoT) device 100f, and an AI device/server 400. The XR device 100c represents devices that provide XR content (e.g., augmented reality (AR)/virtual reality (VR)/mixed reality (MR) content, etc.). According to embodiments, the XR device may be referred to as an AR/VR/MR device. The XR device 100c may be implemented in the form of a head-mounted device (HMD), a head-up display (HUD) provided in a vehicle, a television, a smartphone, a computer, a wearable device, a home appliance, a digital signage, a vehicle, a robot, and the like, according to embodiments. For example, the vehicles 100b-1 and 100b-2 may include a vehicle having a wireless communication function, an autonomous vehicle, a vehicle capable of performing vehicle-to-vehicle communication, and an unmanned aerial vehicle (UAV) (e.g., a drone). The hand-held device 100d may include a smartphone, a smart pad, a wearable device (e.g., a smart watch, a smart glass), and a computer (e.g., a laptop computer). The home appliance 100e may include a TV, a refrigerator, and a washing machine. The IoT device 100f may include a sensor and a smart meter. The wireless devices 100a to 100f may be connected to the network 300 via the BS 200. The wireless devices 100a to 100f may be connected to the AI server 400 over the network 300. The network 300 may be configured using a 3G network, a 4G network (e.g., an LTE network), a 5G network (e.g., an NR network), a 6G network, or the like. The wireless devices 100a to 100f may communicate with each other over the BS 200/the network 300. Alternatively, the wireless devices 100a to 100f may perform direct communication (e.g., sidelink communication) without using the BS/network.

Wireless signals may be transmitted and received between the wireless devices 100a to 100f and the BS 200 or between the BSs 200 through wireless communications/connections 150a, 150b, and 150c. The wireless communications/connections according to the embodiments may include various radio access technologies (e.g., 5G, NR, etc.) such asw an uplink/downlink communication 150a, which is a communication between a wireless device and a BS, a sidelink communication 150b (or D2D communication), which is a communication between wireless devices, and a communication 150c (e.g., a relay and an integrated access backhaul (IAB) between BSs. The wireless devices 100a to 100f and the BS 200 may transmit/receive signals on various physical channels for the wireless communications/connections 150a, 150b, and 150c. For the wireless wireless communications/connections 150a, 150b, and 150c, at least one of various configuration information setting procedures for transmitting/receiving wireless signals, various signal processing procedures (e.g., channel encoding/decoding, modulation/demodulation, resource mapping/demapping, etc.), and a resource allocation procedure, and the like may be performed.

According to embodiments, a UE (e.g., an XR device (e.g., the XR device 100c of FIG. 1)) may transmit specific information including XR data (or AR/VR data) necessary for providing XR content such as audio/video data, voice data, and surrounding information data to a BS or another UE through a network. According to embodiments, the UE may perform an initial access operation to the network. In the initial access procedure, the UE may acquire cell search and system information to acuiqre downlink (DL) synchronization. The DL according to the embodiments refers to communication from a base station (e.g., a BS) or a transmitter, which is a part of the BS, to a UE or a receiver included in the UE. According to embodiments, a UE may perform a random access operation for accessing a network. In the random access operation, the UE may transmit a preamble to acquire uplink (UL) synchronization or transmit UL data, and may perform a random access response reception operation. The UL according to the embodiments represents communication from a UE or a transmitter, which is part of the UE, to a a BS or a receiver, which is part of the BS. In addition, the UE may perform a UL grant reception operation to transmit specific information to the BS. In embodiments, the UL grant is configured to receive time/frequency resource scheduling information for UL data transmission. The UE may transmit the specific information to the BS through the 5G network based on the UL grant. According to embodiment, the BS may perform XR content processing. The UE may perform a DL grant reception operation to receive a response to the specific information through the 5G network. The DL grant represents receiving time/frequency resource scheduling information to receive DL data. The UE may receive a response to the specific information through the network based on the DL grant.

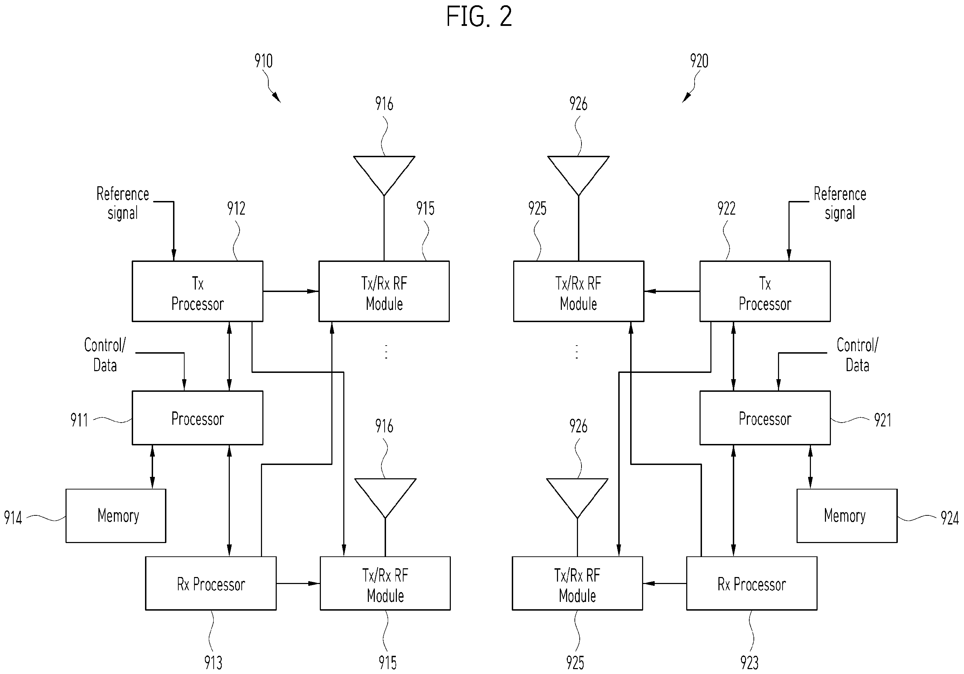

FIG. 2 is a block diagram illustrating a wireless communication system to which methods according to embodiments are applicable.

The wireless communication system includes a first communication device 910 and/or a second communication device 920. "A and/or B" may be interpreted as having the same meaning as "at least one of A or B." The first communication device may represent the BS, and the second communication device may represent the UE (or the first communication device may represent the UE and the second communication device may represent the BS).

The first communication device and the second communication device include a processor 911, 921, a memory 914, 924, one or more TX/RX RF modules 915, 925, a TX processor 912, 922, an RX processor 913, 923, and an antenna 916, 926. The Tx Tx/Rx modules are also referred to as transceivers. The processor 911 may perform a signal processing function of a layer (e.g., layer 2 (L2)) of a physical layer or higher. For example, in downlink or DL (communication from the first communication device to the second communication device), an upper layer packet from the core network is provided to the processor 911. In the DL, the processor 911 provides multiplexing between a logical channel and a transport channel and radio resource allocation to the second communication device 920, and is responsible for signaling to the second communication device. The first communication device 910 and the second communication device 920 may further include a processor (e.g., an audio/video encoder, an audio/video decoder, etc.) configured to process data from a layer higher than the upper layer packet processed by the processors 911 and 921. The processor according to the embodiments may process video data processed according to various video standards (e.g., MPEG2, AVC, HEVC, WC, etc.) and audio data processed by various audio standards (e.g., MPEG 1 Layer 2 Audio, AC3, HE-AAC, E-AC-3, HE-AAC, NGA, etc.). Also, according to embodiments, the processor may process XR data or XR media data processed by a Video-Based Point Cloud Compression (V-PCC) or Geometry-Based Point Cloud Compression (G-PCC) scheme. The processor configured to process higher layer data may be coupled to the processors 911 and 921 to be implemented as one processor or one chip. Alternatively, the processor configured to process higher layer data may be implemented as a separate chip or a separate processor from the processors 911 and 921. The TX processor 912 implements various signal processing functions for layer L1 (i.e., the physical layer). The signal processing function of the physical layer may facilitate forward error correction (FEC) in the second communication device. The signal processing function of the physical layer includes coding and interleaving. Signals that have undergone encoding and interleaving are modulated into complex valued modulation symbols through scrambling and modulation. In the modulation, BPSK, QPSK, 16 QAM, 64 QAM, 246 QAM, etc. may be used according to a channel. The complex valued modulation symbols (hereinafter, modulation symbols) are divided into parallel streams. Each stream is mapped to an OFDM subcarrier, multiplexed with a reference signal in the time and/or frequency domain, and combined together using IFFT to generate a physical channel for carrying a time-domain OFDM symbol stream. The OFDM symbol stream is spatially precoded to generate a multi-spatial stream. Each spatial stream may be provided to a different antenna 916 via an individual Tx/Rx module (or transceiver) 915. Each Tx/Rx module may frequency up-convert each spatial stream to an RF subcarrier for transmission. In the second communication device, each Tx/Rx module (or transceiver) 925 receives a signal of the RF subcarrier through each antenna 926 of each Tx/Rx module. Each Tx/Rx module reconstructs a baseband signal from the signal of the RF subcarrier and provides the same to the RX processor 923. The RX processor implements various signal processing functions of L1 (i.e., the physical layer). The RX processor may perform spatial processing on the information to recover any spatial stream directed to the second communication device. If multiple spatial streams are directed to the second communication device, they may be combined into a single OFDMA symbol stream by multiple RX processors. An RX processor converts an OFDM symbol stream, which is a time-domain signal, into a frequency-domain signal using a Fast Fourier Transform (FFT). The frequency-domain signal includes an individual OFDM symbol stream for each subcarrier of the OFDM signal. The modulation symbols on each subcarrier and the reference signal are recovered and demodulated by determining the most likely constellation points transmitted by the first communication device. These soft decisions may be based on channel estimation values. The soft decisions are decoded and deinterleaved to recover the data and control signal originally transmitted by the first communication device on the physical channel. The data and control signal are provided to the processor 921.

The UL (communication from the second communication device to the first communication device) is processed by the first communication device 910 in a manner similar to that described in connection with the receiver function of the second communication device 920. Each TX RX/RX module 925 receives a signal through each antenna 926. Each Tx/Rx module provides RF subcarrier and information to the RX processor 923. The processor 921 may be related to the memory 924 that stores program code and data. The memory may be referred to as a computer-readable medium.

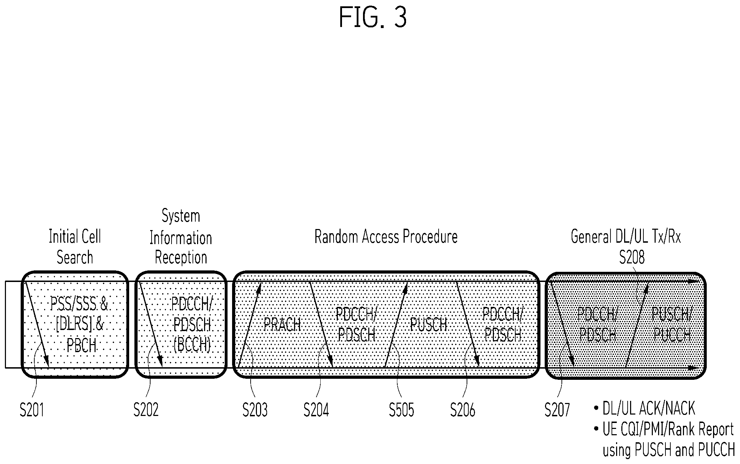

FIGS. 3 to 5 illustrate examples of one or more signal processing methods and/or operations for layer L1 (i.e., the physical layer). The examples disclosed in FIGS. 3 to 5 may be the same as or similar to the example of a signal processing method and/or operations performed by the TX processor 912 and/or the TX processor 922 described with reference to FIG. 2.

FIG. 3 illustrates an example of a 3GPP signal transmission/reception method.

According to embodiments, when a UE is turned on or enters a new cell, the UE may perform an initial cell search such as synchronization with a BS (S201). The UE may receive a primary synchronization channel (P-SCH) and a secondary synchronization channel (S-SCH) from the BS to synchronize with the BS and acquire information such as cell ID. In the LTE system and the NR system, the P-SCH and the S-SCH may be referred to as a primary synchronization signal (PSS) and a secondary synchronization signal (SSS), respectively. After the initial cell search, the UE may receive a physical broadcast channel (PBCH) from the BS to acquire broadcast information in the cell. In the initial cell search operation, the UE may receive a DL reference signal (DL-RS) and check the state of the DL channel.

After the initial cell search, the UE may acquire more detailed system information by receiving a PDSCH according to the information carried on the PDCCH and the PDCCH (S 202).

When the UE initially accesses the BS or does not have radio resources for signal transmission, the UE may perform a random access procedure for the BS (operations S203 to S206). To this end, the UE may transmit a specific sequence as a preamble through the PRACH (S203 and S205), and receive a random access response (RAR) message for the preamble through the PDCCH and the corresponding PDSCH (S204 and S206). In the case of a contention-based random access procedure, a contention resolution procedure may be additionally performed.

After performing the above-described procedure, the UE may perform PDCCH DL/PDSCH reception (S207) and PUSCH DL/PUCCH transmission (S208) as a general UL/DL signal transmission procedure. In particular, the UE receives DCI through a PDCCH. The UE monitors a set of PDCCH candidates on monitoring occasions configured in one or more control element sets (CORESETs) on a serving cell according to corresponding search space configurations. The set of PDCCH candidates to be monitored by the UE may be defined in terms of search space sets. The search space set according to the embodiments may be a common search space set or a UE-specific search space set. A CORESET consists of a set of (physical) resource blocks having a time duration of 1 to 3 OFDM symbols. The network may configure the UE to have a plurality of CORESETs. The UE monitors PDCCH candidates in one or more search space sets. Here, the the monitoring means attempting to decode the PDCCH candidate(s) in the search space. When the UE succeeds in decoding one of the PDCCH candidates in the search space, the UE may determine that the PDCCH has been detected from the corresponding PDCCH candidate, and perform PDSCH reception or PUSCH transmission based on the DCI within the detected PDCCH. The PDCCH according to the embodiments may be used to schedule DL transmissions on the PDSCH and UL transmissions on the PUSCH. The DCI on the PDCCH may include a DL assignment (i.e., a DL grant) including at least a modulation and coding format and resource allocation information related to a DL shared channel, or a UL grant including a modulation and coding format and resource allocation information related to a UL shared channel.

The UE may acquire DL synchronization by detecting an SSB. The UE may identify the structure of the SSB burst set based on the detected SSB (time) index (SSBI), thereby detecting the symbol/slot/half-frame boundary. The number assigned to the frame/half-frame to which the detected SSB belongs may be identified based on the system frame number (SFN) information and half-frame indication information. The UE may acquire, from the PBCH, a 10-bit SFN for a frame to which the PBCH belongs. The UE may acquire 1-bit half-frame indication information and determine whether the PBCH belongs to a first half-frame or a second half-frame of the frame. For example, the half-frame indication equal to 0 indicates that the SSB to which the PBCH belongs belongs to the first half-frame in the frame. The half-frame indication bit equal to 1 indicates that the SSB to which the PBCH belongs belongs to the second half-frame in the frame. The UE may acquire the SSBI of the SSB to which the PBCH belongs, based on the DMRS sequence and the PBCH payload carried by the PBCH.

Table G1 below represents the random access procedure of the UE.

**TABLE G1**

| Signal type Acquired operation/information |
|---|
| Step 1 PRACH preamble on UL * Initial beam acquisition |
| * Random selection of random access preamble ID |
| Step 2 Random access response on PDSCH * Timing advance information |
| * Random access preamble ID |
| * Initial UL grant, Temporary C-RNTI |
| Step 3 UL transmission on PUSCH * RRC Connection request |

| UE identifier |
|---|
| Step 4 Contention resolution on DL Temporary C-RNTI for initial access C-RNTI on PDCCH for the UE that is in RRC_CONNECTED |

The random access procedure is used for various purposes. For example, the random access procedure may be used for network initial access, handover, and UE-triggered UL data transmission. The UE may acquire UL synchronization and UL transmission resources through the random access procedure. The random access procedure is divided into a contention-based random access procedure and a contention free random access procedure.

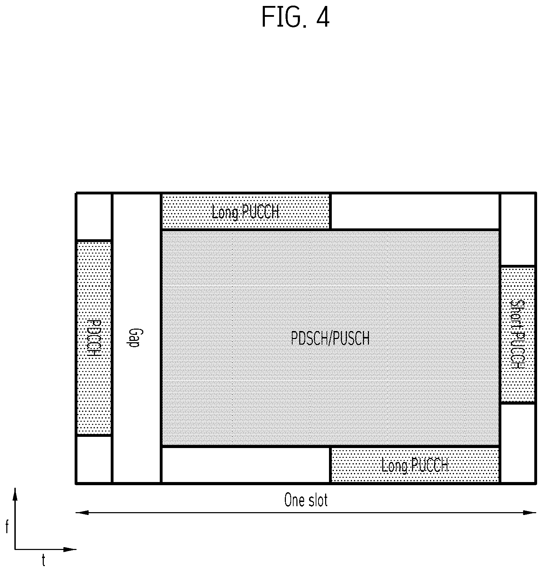

FIG. 4 illustrates an example of mapping a physical channel in a self-contained slot according to embodiments.

A PDCCH may be transmitted in the DL control region, and a PDSCH may be transmitted in the DL data region. A PUCCH may be transmitted in the UL control region, and a PUSCH may be transmitted in the UL data region. The GP provides a time gap in a process in which the BS and the UE switch from a transmission mode to a reception mode or from the reception mode to the transmission mode. Some symbols at the time of switching from DL to UL in a subframe may be set to the GP.

The PDCCH according to the embodiments carries downlink control information (DCI). For example, the PCCCH (i.e., DCI) carries a transmission format and resource allocation of a downlink shared channel (DL-SCH), resource allocation information about an uplink shared channel (UL-SCH), paging information about a paging channel (PCH), system information on the DL-SCH, resource allocation information about a higher layer control message such as a random access response transmitted on a PDSCH, a transmt power control command, and activation/release of configured scheduling (CS). The DCI includes a cyclic redundancy check (CRC). The CRC is masked/scrambled with various identifiers (e.g., radio network temporary identifier (RNTI)) according to the owner or usage purpose of the PDCCH. For example, when the PDCCH is for a specific UE, the CRC is masked with a UE identifier (e.g., a cell-RNTI (C-RNTI)). When the PDCCH is for paging, the CRC is masked with a paging-RNTI (P-RNTI). When the PDCCH is related to system information (e.g., a system information block (SIB)), the CRC is masked with a system information RNTI (SI-RNTI). When the PDCCH is for a random access response, the CRC is masked with a random access-RNTI (RA-RNTI).

The PDCCH is composed of 1, 2, 4, 8, or 16 control channel elements (CCEs) according to an aggregation level (AL). A CCE is a logical allocation unit used to provide a PDCCH having a predetermined code rate according to a radio channel state. The CCE consists of 6 resource element groups (REGs). An REG is defined as one OFDM symbol and one (P)RB. The PDCCH is transmitted through a control resource set (CORESET). The CORESET is defined as an REG set with a given numerology (e.g., SCS CP length, etc.). Multiple CORESETs for one UE may overlap each other in the time/frequency domain. The CORESET may be configured through system information (e.g., master information block (MIB)) or UE-specific higher layer (e.g., radio resource control (RRC) layer) signaling. Specifically, the number of RBs and the number of OFDM symbols (up to 3 symbols) that constitute a CORESET may be configured by higher layer signaling.

For PDCCH reception/detection, the UE monitors PDCCH candidates. The PDCCH candidates represent the CCE(s) to be monitored by the UE for PDCCH detection. Each PDCCH candidate is defined as 1, 2, 4, 8, and 16 CCEs according to the AL. The monitoring includes (blind) decoding PDCCH candidates. A set of PDCCH candidates monitored by the UE is defined as a PDCCH search space (SS). The SS includes a common search space (CSS) or a UE-specific search space (USS). The UE may acquire the DCI by monitoring PDCCH candidates in one or more SSs configured by the MIB or higher layer signaling. Each CORESET is associated with one or more SSs, and each SS is associated with one CORESET. The SS may be defined based on the following parameters.
- controlResourceSetId: Indicates the CORESET related to the SS.
- monitoringSlotPeriodicityAndOffset: Indicates the PDCCH monitoring periodicity (in slots) and PDCCH monitoring interval offset (in slots)
- monitoringSymbolsWithinSlot: Indicates the PDCCH monitoring symbols within the slot (e.g., first symbol(s) of CORESET)
- nrofCandidates: Indicates the number of PDCCH candidates (one of 0, 1, 2, 3, 4, 5, 6, and 8) for AL={1, 2, 4, 8, 16}.

* An occasion (e.g., time/frequency resource) on which PDCCH candidates should be monitored is defined as a PDCCH (monitoring) occasion. One or more PDCCH (monitoring) occasions may be configured within the slot.

The PUCCH carries uplink control information (UCI). The UCI includes the following.
- Scheduling request (SR): Information used to request UL-SCH resources.
- Hybrid automatic repeat request (HARQ)-acknowledgement (ACK): A response to a DL data packet (e.g., a codeword) on a PDSCH. It indicates whether a DL data packet has been successfully received. In response to a single codeword, 1 bit of HARQ-ACK may be transmitted. In response to two codewords, two bits of HARQ-ACK may be transmitted. The HARQ-ACK response includes a positive ACK (simply, ACK), a negative ACK (NACK), DTX or NACK/DTX. The HARQ-ACK, HARQ ACK/NACK and the ACK/NACK may be used interchangeably.
- Channel state information (CSI): Feedback information about a DL channel. Multiple Input Multiple Output (MIMO)-related feedback information includes a rank indicator (RI) and a precoding matrix indicator (PMI).

The PUSCH carries UL data (e.g., UL-SCH transport block (UL-SCH TB)) and/or uplink control information (UCI), and is transmitted based on a cyclic prefix-orthogonal frequency division multiplexing (CP-OFDM) waveform or a discrete fourier transform-spread-orthogonal frequency division multiplexing (DFT-s-OFDM) waveform. When the PUSCH is transmitted based on the DFT-s-OFDM waveform, the UE transmits the PUSCH by applying transform precoding. For example, when the transform precoding is not available (e.g., the transform precoding is disabled), the UE transmits a PUSCH based on the CP-OFDM waveform. When the transform precoding is available (e.g., the transform precoding is enabled), the UE may transmit the PUSCH based on the CP-OFDM waveform or the DFT-s-OFDM waveform. The PUSCH transmission may be dynamically scheduled by a UL grant in the DCI, or may be semi- statically scheduled based on higher layer (e.g., RRC) signaling (and/or Layer 1 (L1) signaling (e.g., PDCCH)). The PUSCH transmission may be performed on a codebook basis or a non-codebook basis.

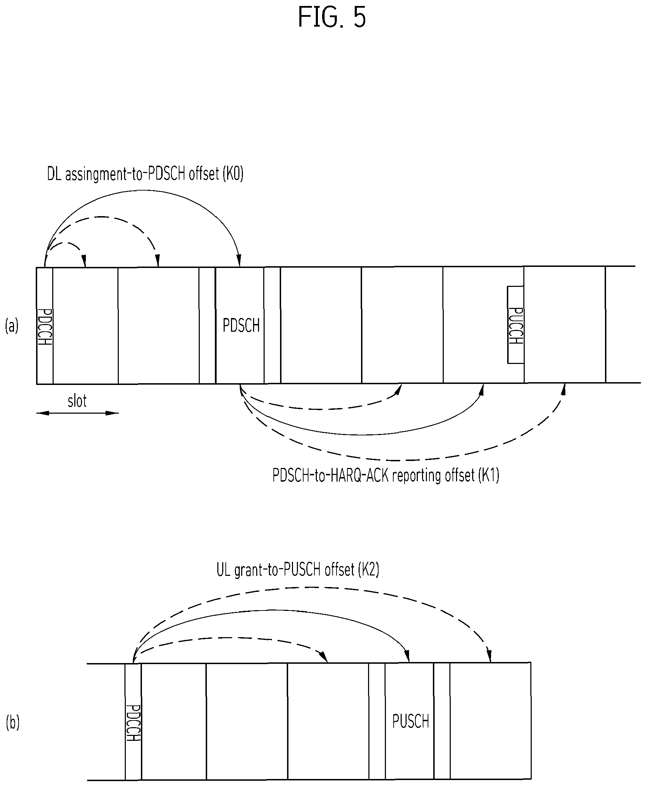

FIG. 5 illustrates an example of an ACK/NACK transmission procedure and a PUSCH transmission procedure.

FIG. 5-(a) illustrates an example of an ACK/NACK transmission procedure.

The UE may detect the PDCCH in slot #n. Here, the PDCCH contains DL scheduling information (e.g., DCI formats 1_0 and 1_1), and the PDCCH indicates DL assignment-to-PDSCH offset (KO) and PDSCH-HARQ-ACK reporting offset (K1). For example, DCI formats 1_0 and 1_1 may include the following information.
- Frequency domain resource assignment: Indicates an RB set allocated to the PDSCH
- Time domain resource assignment: K0, indicates a start position (e.g., an OFDM symbol index) and length (e.g., the number of OFDM symbols) of a PDSCH in a slot
- PDSCH-to-HARQ_feedback timing indicator: Indicates K1.
- HARQ process number (4 bits): Indicates a HARQ process identity (ID) for data (e.g., PDSCH, TB)

Thereafter, the UE may receive the PDSCH in slot #(n+K0) according to the scheduling information of slot #n, and then transmit the UCI through the PUCCH in slot #(n+K1). Here, the UCI includes a HARQ-ACK response for the PDSCH. When the PDSCH is configured to transmit up to 1 TB, the HARQ-ACK response may be configured in 1 bit. In the case where the PDSCH is configured to transmit up to two TBs, the HARQ-ACK response may be configured in 2 bits when spatial bundling is not configured, and may be configured in 1 bit when spatial bundling is configured. When the HARQ-ACK transmission time for a plurality of PDSCHs is designated as slot #(n+K1), the UCI transmitted in slot #(n+K1) includes a HARQ-ACK response for the plurality of PDSCHs. The BS/UE has a plurality of parallel DL HARQ processes for DL transmission. The plurality of parallel HARQ processes allows DL transmissions to be continuously performed while waiting for HARQ feedback for successful or unsuccessful reception for a previous DL transmission. Each HARQ process is associated with a HARQ buffer of a medium access control (MAC) layer. Each DL HARQ process manages state variables related to the number of transmissions of a MAC Physical Data Block (PDU) in a buffer, HARQ feedback for the MAC PDU in the buffer, a current redundancy version, and the like. Each HARQ process is distinguished by a HARQ process ID.

FIG. 5-(b) illustrates an example of a PUSCH transmission procedure.

The UE may detect the PDCCH in slot #n. Here, the PDCCH includes UL scheduling information (e.g., DCI formats 0_0 and 0_1). DCI formats 0_0 and 0_1 may include the following information.
- Frequency domain resource assignment: Indicates an RB set allocated to a PUSCH

Time domain resource assignment: slot offset K2, indicates a start position (e.g., a symbol index) and length (e.g., the number of OFDM symbols) of a PUSCH in a slot. The start symbol and the length may be indicated through a Start and Length Indicator Value (SLIV), or may be indicated individually. The UE may transmit the PUSCH in slot #(n+K2) according to the scheduling information of slot #n. Here, the PUSCH includes a UL-SCH TB.

Embodiments may be applied to 5G-based media streaming (5GMS) systems. The 5GMS structure is a system that supports a mobile network operator (MNO) and a media DL streaming service of a third party. The 5GMS structure supports a related network or a UE function and API, and provides backward compatibility regardless of supportability of the MBMS and/or the 5G standard and EUTRAN installation. Streaming used in media using 5G is defined by the generation and transfer of temporally continuous media, and the definition of a streaming point indicates that a transmitter and a receiver directly transmit and consume media. The 5GMS structure basically operates in DL and UL environments and has bi-directionality. It is a method for streaming according to a desired scenario and a device capability between the UE and the server, and the functional blocks are technically configured and operated differently. When media is delivered on the DL, the network is an entity that produces the media and the UE is defined as a consumer device that consumes the media. The 5GMS service may use a network such as a 3G, 4G, or 6G network, as well as the 5G network, and is not limited to the above-described embodiment. Embodiments may also provide a network slicing function according to a service type.

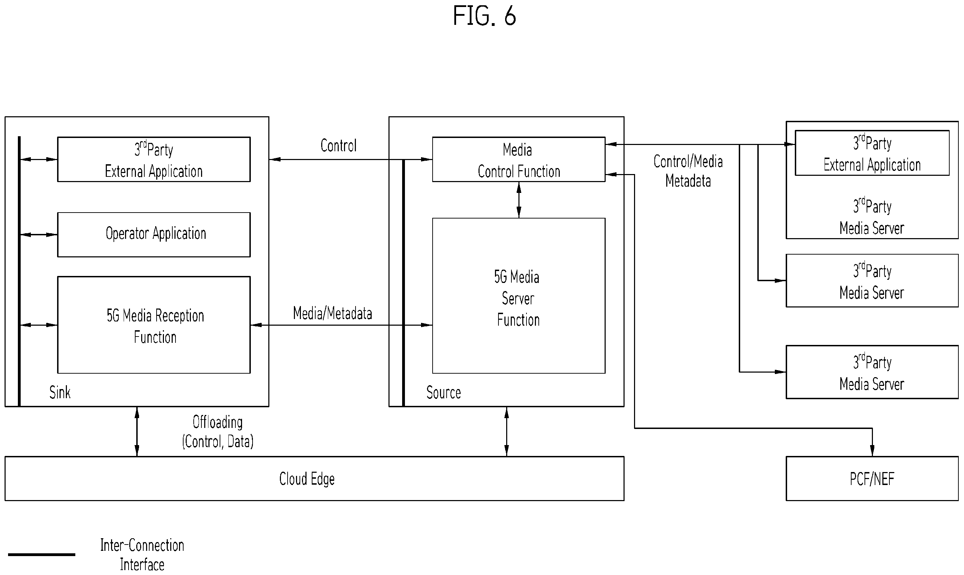

FIG. 6 illustrates a DL structure for media transmission of a 5GMS service according to embodiments.

FIG. 6 illustrates a media transmission hierarchy for at least one of 4G, 5G, and 6G networks, and a method for operating a device in a unidirectional DL media streaming environment. Since the system is a DL system, media is produced from the network and the Trusted Media Function. The media is delivered to the UE. Each block diagram is conceptually configured as a set of functions necessary for media transmission and reception. The inter-connection interface represents a link for sharing or adjusting a specific part of functions for each media block and is used when not all necessary element technologies are utilized. For example, the 3rd party external application and the operator application may perform independent application operations. However, they may be communicatively connected through the inter-connection interface when a function such as information share (user data, a media track, etc.) is required. According to embodiments, the media may include both information such as time-continuous, time-discontinuous, image, picture, video, audio, and text, and a medium, and may additionally include a format for transmitting the media, and a size of the format.

In FIG. 6, the sink represents a UE, a processor (e.g., the processor 911 for signal processing of the higher layer described with reference to FIG. 2, etc.) included in the UE, or hardware constituting the UE. According to embodiments, the sink may perform a reception operation of receiving a streaming service in a unicast manner from a source providing media to the sink. The sink may receive control information from the source and perform signal processing based on the control information. The sink may receive media/metadata (e.g., XR data or extended media data) from the source. The sink may include a 3rd Party External Application block, an Operator Application block, and/or a 5G Media Reception Function block. According to embodiments, the 3rd Party External Application block and the Operator Application block of the sink represent UE applications operating at the sink stage. The 3rd Party External Application block is an application operated by a third party present outside the 4G, 5G, and 6G networks, and may drive an API connection of the sink. The 3rd Party External Application block may receive information through the 4G, 5G, or 6G network, or through direct point-to-point communication. Therefore, the UE of the sink may receive an additional service through a native or downloaded installed application. The Operator Application block may manage an application (5G Media Player) associated with a media streaming driving environment including a media application. When the application is installed, the UE of the sink may start accessing the media service through the API using an application socket and transmit and receive related data information. The API allows data to be delivered to a particular end-system by configuring a session using the socket. The socket connection method may be delivered through a general TCP-based Internet connection. The sink may receive control/data information from a cloud edge, and may perform offloading for transmitting control/data information and the like to the cloud edge. Although not shown in the drawings, the sink may include an Offloading Management block. The offloading management according to the embodiments may control operations of the Operator Application block and/or the 3rd Party Application block to control the offloading of the sink.

According to embodiments, the 5G Media Reception block may receive operations related to offloading from the Offloading Management block, acquire media that may be received through the 4G, 5G, or 6G network, and process the media. According to embodiments, the 5G Media Reception Function block may include a general Media Access Client block, a DRM Client block, a media decoder, a Media Rendering Presentation block, an XR Rendering block, and an XR Media Processing block. These blocks are merely an example, and the names and/or operations thereof are not limited to the embodiments.

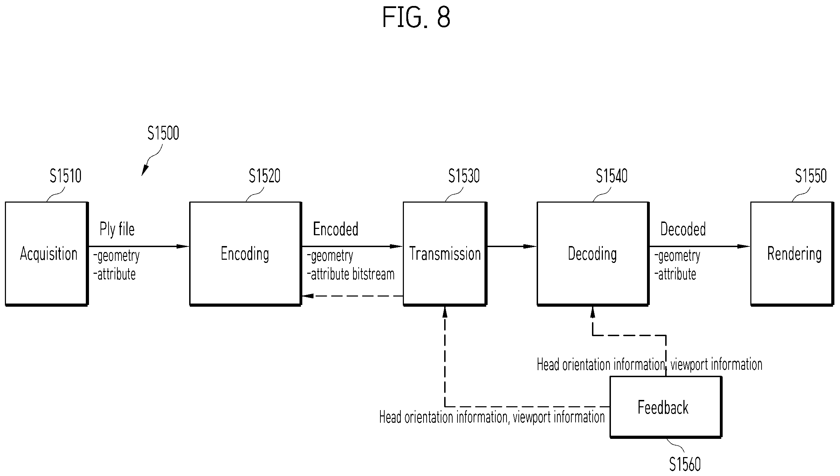

According to embodiments, the Media Access Client block may receive data, for example, a media segment, through at least one of the 4G, 5G, and 6G networks. According to embodiments, the Media Access Client block may de-format (or decapsulate) various media transmission formats such as DASH, CMAF, and HLS. The data output from the Media Access Client block may be processed and displayed according to each decoding characteristic. The DRM Client block may determine whether the received data is used. For example, the DRM Client block may perform a control operation to allow an authorized user to use the media information within the access range. The Media Decoding block is a general audio/video decoder and may decode audio/video data processed according to various standards (including video standards such as MPEG2, AVC, HEVC, and WC, and audio standards such as MPEG 1 Layer 2 Audio, AC3, HE-AAC, E-AC-3, HE-AAC, and NGA) among the de-formatted data. The Media Rendering Presentation block may render media so as to be suitable for the reception device. The Media Rendering Presentation block may be included in the Media Decoding block. The XR Media Processing block and the XR Rendering block are configured to process XR data among the de-formatted data (or decapsulated data). The XR Media Processing block (e.g., the processor 911 described with reference to FIG. 2 or a processor for processing higher layer data) may use XR data received from the source or information (e.g., object information, position information, etc.) received from the Offloading Management block to process XR media. The XR Rendering block may render and display XR media data among the received media data. The XR Media Processing block and the XR Rendering block may process and render point cloud data processed according to a Video-Based Point Cloud Compression (V-PCC) or Geometry-Based Point Cloud Compression (G-PCC) scheme. The V-PCC or G-PCC scheme are described in detail below with reference to FIGS. 8 to 14. The XR Media Processing block and the XR Rendering block according to the embodiments may be configured as a single XR decoder.

The source represents a media server or a UE capable of providing media using at least one of the 4G, 5G, or 6G network and may perform the functions of Control Function and Server Function. The Server Function initiates and hosts 4G, 5G, and 6G media services. The 3rd Party Media Server represents various media servers operated by third parties present outside the 4G, 5G, and 6G networks, and may be a Network External Media Application Server. In general, the External Server operated by a third-party service may perform media production, encoding, formatting, and the like in places other than the 4G, 5G, and 6G networks in the same manner. The Control Function represents a network-based application function, and may include a sink and other media servers, as well a control-oriented information delivery function when performing media authentication. Thus, the Source may initiate a connection through API connection of an internal application using the Control Function and may establish a media session or request additional information. The Source may also exchange PCF information with other network functions through the Control Function. Through the Control Function, the Source may identify external network capabilities using the NEF and perform general monitoring and provisioning through the exposure process. Accordingly, the NEF may receive other network information and store the received information as structured data using a specific standardized interface. The stored information may be exposed/re-exposed to other networks and applications by the NEF, and the information exposed in various network environments may be collected and used for analysis. As shown in FIG. 6, when the service configuration connection is established, the API Control Plane is formed. When the session connection is established, tasks such as security (authentication, authorization, etc.) may be included and an environment allowing media to be transmitted is formed. If there are multiple 4G, 5G, and 6G media functions in the source, multiple APIs may be created or one API may be used to create a control plane. Similarly, an API may be created from a third-party media server, and the Media Control Function and the API of the UE may form a media user plane API. The source may generate and deliver media using various methods to perform the Downlink Media Service function, and may include all functions, from simply storing media to playing a media relaying role, to deliver media to the UE corresponding to the sink, which is the final destination,. Modules or blocks within the sink and source according to embodiments may deliver and share information via the inter-connection link and inter-connection interface that are bidirectional.

The embodiments describe a UL structure and method for transmitting media content produced in real time in a 5GMS system to social media, users, servers, etc. Uplink is basically defined as creating media and delivering the same to the media server from the UE perspective, rather than as delivering media to the user in the form of distribution. Unlike the downlink system, the uplink system is configured in the form of direct content provision by individual users, and accordingly the system configuration method handled by the UE, use cases to utilize, and the system structure may be different from those for the downlink. The FLUS system consists of a source entity that produces media and a sink entity that consumes media, and delivers services such as voice, video, and text through 1:1 communication. Accordingly, techniques such as signaling, transport protocol, packet-loss handling, and adaptation may be applied, and the FLUS system may provide expectable media quality and flexibility. The FLUS source may be a single UE or multiple distributed UEs, a capture devices, or the like. Since the network is assumed to be a 5G network, 3GPP IMS/MTSI services may be supported, and IMS services may be supported through the IMS control plane. Also, services may be supported in compliance with the MTSI service policy. If IMS/MTSI services are not supported, uplink services may be supported by various user plane instantiations through the Network Assistance function.

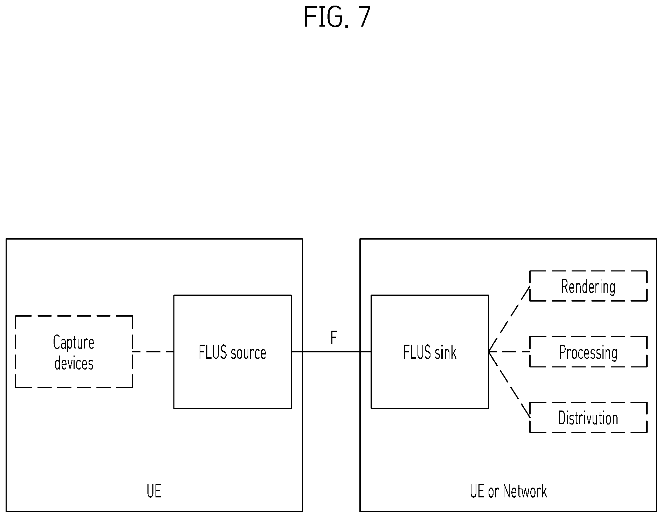

FIG. 7 illustrates an example of a FLUS structure for an uplink service.

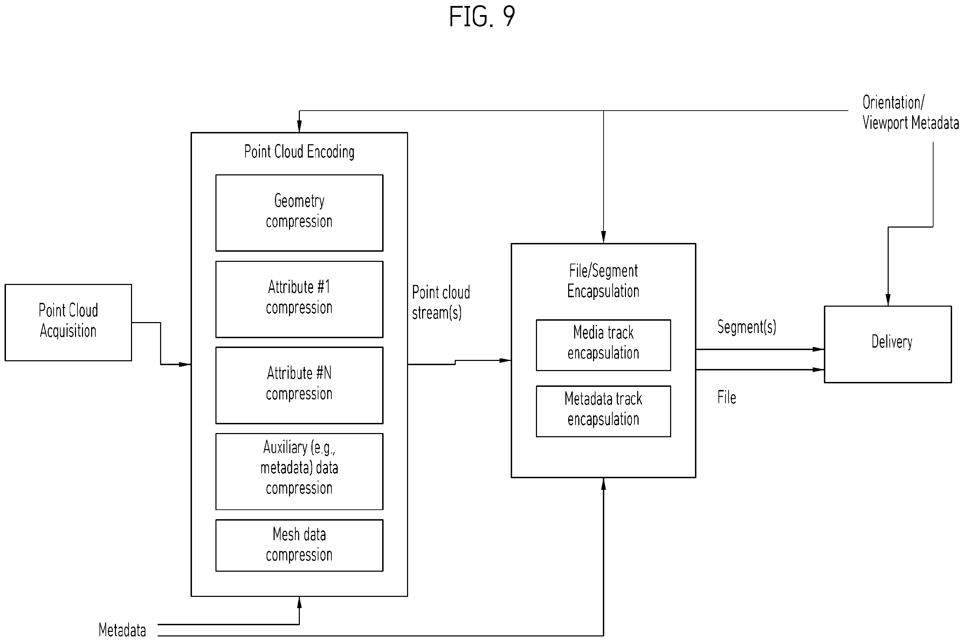

The FLUS structure may include a source and a sink as described with reference to FIG. 6. The source may correspond to a UE. The sink may correspond to a UE or a network. An Uplink may include a source and a sink according to the goal of generating and delivering media, where the source may be a UE that is a terminal device and the sink may be another UE or a network. The source may receive media content from one or more capture devices. The capture devices may or may not be connected to a part of the UE. If the sink to receive the media is present in the UE and not in the network, the Decoding and Rendering Functions are included in the UE and the received media shall be delivered to those functions. Conversely, if the sink corresponds to the network, the received media may be delivered to the Processing or Distribution Sub-Function. If the sink is positioned in the network, it may include the role of the Media Gateway Function or Application Function, depending on its role. The F link, shown in FIG. 9, serves to connect the source and the sink, and specifically enables the control and establishment of FLUS sessions through this link. Authentication/authorization between the source and the sink through the F link may also be included. More specifically, the F link may be divided into Media Source and Sink (F-U end-points), Control Source and Sink (F-C end-points), Remote Controller and Remote Control Target (F-RC end-points), and Assistance Sender and Receiver (F-A end-points). The source and the sink are distinguished by the Logical Functions. Therefore, the functions may be present in the same physical device, or may be separated and not present in the same device. Each function may also be separated into multiple physical devices and connected by different interfaces. A single FLUS source may have multiple F-A and F-RC points. Each point is independent of the FLUS sink and may be generated according to the offered service. As described earlier, the F link point assu may assume all F point-specifically present sub-functions and the security function of the link and may include the corresponding authentication process.

FIG. 8 illustrates a point cloud data processing system according to embodiments.

The point cloud processing system 1500 illustrated in FIG. 8 may include a transmission device (e.g., a BS or UE described with reference to FIGS. 1 to 7) that acquires, encodes, and transmits point cloud data, and a reception device (e.g., a UE described with reference to FIGS. 1 to 7) that receives and decodes video data to acquire point cloud data. As shown in FIG. 8, the point cloud data according to the embodiments may be acquired through a process of capturing, synthesizing, or generating the point cloud data. In the acquisition operation, 3D position (x, y, z)/attribute (color, reflectance, transparency, etc.) data (e.g., Polygon File format (PLY) (or the Stanford Triangle format) files, etc.) about the points may be generated. For videos having multiple frames, one or more files may be acquired. In the capture operation, metadata related to the point cloud data (e.g., metadata related to the capture) may be generated. A transmission device or encoder according to embodiments may encode the point cloud data using a Video-based Point Cloud Compression (V-PCC) or Geometry-based Point Cloud Compression (G-PCC) scheme, and output one or more video streams (S1520). V-PCC is a method of compressing point cloud data based on a 2D video codec such as HEVC or WC, and G-PCC is a method of encoding point cloud data by dividing the data into two streams: a geometry (or geometry information) stream and an attribute (or attribute information) stream. The geometry stream may be generated by reconstructing and encoding the position information about points, while the attribute stream may be generated by reconstructing and encoding the attribute information (e.g., color, ect.) related to each point. V-PCC is compatible with 2D video, but may require more data (e.g., geometry video, attribute video, occupancy map video, and auxiliary information) to recover V-PCC processed data than G-PCC, resulting in longer latency in offering a service. The one or more output bitstreams, together with related metadata, may be encapsulated in the form of a file or the like (e.g., a file format such as ISOBMFF) and transmitted over a network or digital storage medium (S1530). In some embodiments, the point cloud-related metadata itself may be encapsulated in a file.

A device (UE) or processor (e.g., the processor 911 or processor 921 described with reference to FIG. 2, a higher layer processor, or the sink or XR Media Processing block included in the sink described with reference to FIG. 6) may decapsulate the received video data to acquire one or more bitstreams and related metadata, and decode the acquired bitstreams according to the V-PCC or G-PCC scheme to reconstruct the three-dimensional point cloud data (S1540). The renderer (e.g., the sink or the XR rendering block included in the sink described with reference to FIG. 6) may render the decoded point cloud data and provide the user with content adapted to the VR/AR/MR/service via a display (S1550). As shown in FIG. 8, the device or processor according to the embodiments may perform a feedback process of deliving various kinds of feedback information acquired during the rendering/display process to the transmission device, or to the decoding process (S1560). The feedback information may include head orientation information, and viewport information indicating the area the user is currently viewing. Since an interaction between the user and the service (or content) provider is performed in the feedback process, the devices according to embodiments may provide various services considering greater user convenience, and may provide a faster data processing speed or organize clearer video using the V-PCC or G-PCC scheme described above.

FIG. 9 illustrates an example of a point cloud data processing device according to embodiments.

FIG. 9 illustrates a device performing point cloud data processing according to the G-PCC scheme. The point cloud data processing device illustrated in FIG. 9 may be included in or correspond to the UE described with reference to FIGS. 1 to 7 (e.g., the processor 911 or processor 921 described with reference to FIG. 2, a processor that processes higher layer data, or the sink or the XR Media Processing block included in the sink described with reference to FIG. 6) or a BS.

The point cloud data processing device according to the embodiments includes a point cloud acquirer (Point Cloud Acquisition), a point cloud encoder (Point Cloud Encoding), a file/segment encapsulator (File/Segment Encapsulation), and/or a deliverer (Delivery). Each element of the processing device may be a module/unit/component/hardware/software/processor, etc. The geometry, attributes, auxiliary data, mesh data, and the like of the point cloud may each be configured in separate streams or stored on different tracks in the file. Furthermore, they may be contained in separate segments.

The point cloud acquirer acquires a point cloud. For example, the point cloud data may be acquired through a process of capturing, synthesizing, or generating a point cloud through one or more cameras. By the acquisition operation, point cloud data including a 3D position (which may be represented by x, y, z position values, etc., hereinafter referred to as geometry) of each point and attributes (color, reflectance, transparency, etc.) of each point may be acquired and generated as, for example, a Polygon File format (PLY) (or Stanford Triangle format) file. In the case of point cloud data having multiple frames, one or more files may be acquired. In the process, metadata related to the point cloud (e.g., metadata related to the capture, etc.) may be generated.

The point cloud encoder may perform a G-PCC procedure, which includes prediction, transformation, quantization, and entropy coding, and output the encoded data (encoded video/image information) in the form of a bitstream. The point cloud encoder may divide the point cloud data into geometry (or geometry information) and attributes (attribute information) to be encoded. The encoded geometry information and attribute information may be output as bitstreams. The output bitstreams may be multiplexed into a single bitstream. The point cloud encoder may receive metadata. The metadata represents metadata related to the content for the point cloud. For example, there may be initial viewing orientation metadata. The metadata indicates whether the point cloud data represents the front or the rear. The point cloud encoder may receive orientation information and/or viewport information. The point cloud encoder may perform encoding based on the metadata, orientation information, and/or viewport information. The bitstream output from the point cloud encoder may contain point cloud related metadata. In some embodiments, the point cloud encoder may perform geometry compression, attribute compression, auxiliary data compression, and mesh data compression. In the geometry compression, geometry information about the point cloud data is encoded. The geometry (or geometry information) represents points (or the position of each point) in three-dimensional space. In the attribute compression, the attributes of the point cloud data are encoded. The attribute (or attribute information) represents a property (e.g., color or reflectance) of each point. In the attribute compression, one or more attributes for one or more points may be processed. In the auxiliary data compression, auxiliary data related to the point cloud is encoded. The auxiliary data represents metadata about the point cloud. In the mesh data compression, mesh data is encoded. The mesh data represents information about connection between point clouds. The mesh data may include mesh data representing a triangular shape.

The point cloud encoder encodes geometry, attributes, auxiliary data, and mesh data about the points, which are information needed to render the points. The point cloud encoder may encode the geometry, attributes, auxiliary data, and mesh data and deliver the same by a single bitstream. Alternatively, the point cloud encoder may encode the geometry, attributes, auxiliary data, and mesh data, respectively, and output one or more bitstreams carrying the encoded data, or output the encoded data (e.g., a geometry bitstream, an attribute bitstream, etc.), respectively. The operations of the point cloud encoder may be performed in parallel.

The file/segment encapsulator may perform media track encapsulation and/or metadata track encapsulation. The file/segment encapsulator creates tracks for delivering the encoded geometry (geometry information), encoded attributes, encoded auxiliary data, and encoded mesh data in a file format. A bitstream containing the encoded geometry, a bitstream containing the encoded attributes, a bitstream containing the encoded auxiliary data, and a bitstream containing the encoded mesh data may be included in one or more tracks. The file/segment encapsulator encapsulates the geometry, attributes, auxiliary data, and mesh data into one or more media tracks. In addition, the file/segment encapsulator adds the metadata in a media track or encapsulates the same into a separate metadata track. The file/segment encapsulator encapsulates the point cloud stream(s) in the form of a file and/or segment. When the point cloud stream(s) are encapsulated and delivered in the form of segment(s), they are delivered in DASH format. When the point cloud stream(s) are encapsulated in the form of a file, the file/segment encapsulator delivers the file.

The deliverer may deliver the point cloud bitstream(s) or a file/segment containing the bitstream(s) to the receiver of the reception device over a digital storage medium or network. Processing according to a transport protocol may be performed for transmission. Once processed for transmission, the data may be delivered over a broadcast network and/or broadband. The data may be delivered to the receiving side in an on-demand manner. The digital storage medium may include various storage media such as USB, SD, CD, DVD, Blu-ray, HDD, and SSD. The deliverer may include an element for generating a media file in a predetermined file format and may include an element for transmission over a broadcast/communication network. The deliverer receives orientation information and/or viewport information from the receiver. The deliverer may deliver the acquired orientation information and/or viewport information (or user-selected information) to the file/segment encapsulator and/or the point cloud encoder. Based on the orientation information and/or the viewport information, the point cloud encoder may encode all the point cloud data or may encode the point cloud data indicated by the orientation information and/or the viewport information. Based on the orientation information and/or the viewport information, the file/segment encapsulator may encapsulate all the point cloud data or may encapsulate the point cloud data indicated by the orientation information and/or the viewport information. Based on the orientation information and/or the viewport information, the deliverer may deliver all the point cloud data or may deliver the point cloud data indicated by the orientation information and/or the viewport information.

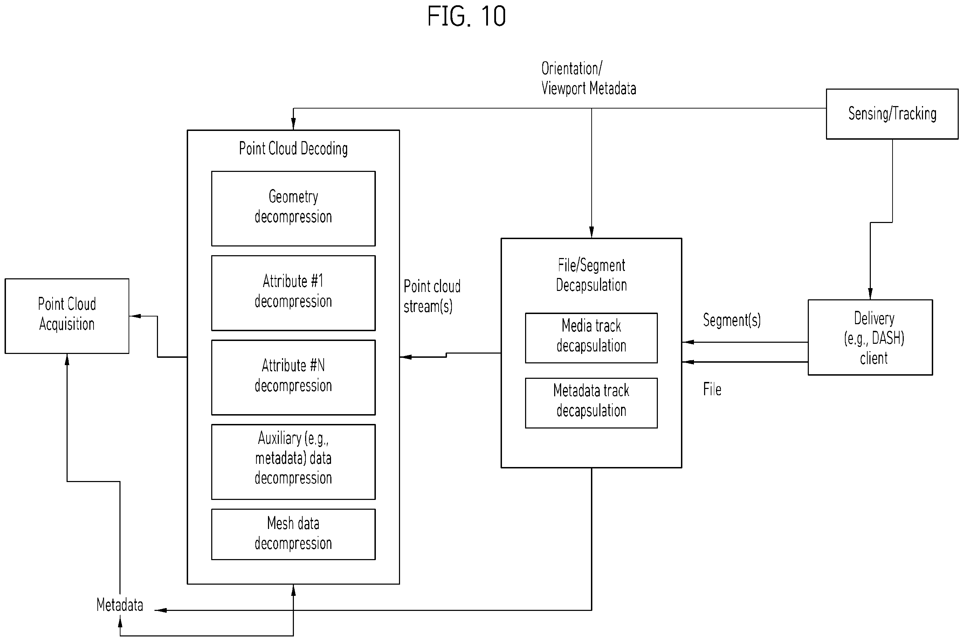

FIG. 10 illustrates an example of a point cloud data processing device according to embodiments.

FIG. 10 illustrates an example of a device configured to receive and process point cloud data processed according to the G-PCC scheme. The device of FIG. 10 may process the data using a method corresponding to the method described with reference to FIG. 9. The point cloud data processing device illustrated in FIG. 10 may correspond to or be included in the UE described with reference to FIGS. 1 to 10 (e.g., the processor 911 or processor 921 described with reference to FIG. 2, or the sink or the XR Media Processing block included in the sink described with reference to FIG. 8).

The point cloud data processing device according to the embodiments includes a delivery client, a sensing/tracking part, a file/segment decapsulator (File/Segment decapsulation), a point cloud decoder (Point Cloud Decoding), and/or a point cloud renderer (Point Cloud Rendering), and a display. Each element of the reception device may be a module/unit/component/hardware/software/processor, or the like.

The delivery client may receive point cloud data, a point cloud bitstream, or a file/segment including the bitstream transmitted by the point cloud data processing device described with reference to FIG. 9. The device of FIG. 10 may receive the point cloud data over a broadcast network or a broadband depending on the channel used for the transmission. Alternatively, it may receive the point cloud video data through a digital storage medium. The device of FIG. 10 may decode the received data and render the same according to the user viewport or the like. The device of FIG. 10 may include a reception processor (e.g., the processor 911 of FIG. 2, etc.) configured to process the received point cloud data according to a transmission protocol. That is, the reception processor may perform a reverse process to the operation of the transmission processor according to the processing performed for transmission on the transmitting side. The reception processor may deliver the acquired point cloud data to the decapsulation processor and the acquired point cloud related metadata to the metadata parser.

The sensing/tracking part acquires orientation information and/or viewport information. The sensing/tracking part may deliver the acquired orientation information and/or viewport information to the delivery client, the file/segment decapsulator, and the point cloud decoder.

Based on the orientation information and/or the viewport information, the delivery client may receive all point cloud data or the point cloud data indicated by the orientation information and/or the viewport information. Based on the orientation information and/or the viewport information, the file/segment decapsulator may decapsulate all the point cloud data or the point cloud data indicated by the orientation information and/or the viewport information. Based on the orientation information and/or the viewport information, the point cloud decoder may decode all the point cloud data or the point cloud data indicated by the orientation information and/or the viewport information.

The file/segment decapsulator (File/Segment Decapsulation) performs media track decapsulation and/or metadata track decapsulation. The decapsulation processor (file/segment decapsulation) may decapsulate the point cloud data in a file format received from the reception processor. The decapsulation processor (file/segment decapsulation) may decapsulate a file or segments according to ISOBMFF or the like and acquire a point cloud bitstream or point cloud-related metadata (or a separate metadata bitstream). The acquired point cloud bitstream may be delivered to the point cloud decoder, and the acquired point cloud-related metadata (or metadata bitstream) may be delivered to the metadata processor. The point cloud bitstream may contain the metadata (or metadata bitstream). The metadata processor may be included in the point cloud video decoder or may be configured as a separate component/module. The point cloud-related metadata acquired by the decapsulation processor may be in the form of a box or track in a file format. The decapsulation processor may receive metadata necessary for decapsulation from the metadata processor, when necessary. The point cloud-related metadata may be delivered to the point cloud decoder and used in a point cloud decoding procedure, or may be delivered to the renderer and used in a point cloud rendering procedure.

The point cloud decoder (Point Cloud Decoding) performs geometry decompression, attribute decompression, auxiliary data decompression, and/or mesh data decompression. The point cloud decoder may receive a bitstream and perform an operation corresponding to the operation of the point cloud encoder to decode the data. In this case, the point cloud decoder may decode the point cloud data by dividing the same into geometry and attributes, as will be described later. For example, the point cloud decoder may reconstruct (decode) geometry from the geometry bitstream included in the input bitstream, and reconstruct attribute values based on the attribute bitstream included in the input bitstream and the reconstructed geometry. The mesh may be reconstructed (decoded) based on the mesh bitstream included in the input bitstream and the reconstructed geometry. The point cloud may be reconstructed by restoring the position of each 3D point and the attribute information about each point based on the position information according to the reconstructed geometry and a (color) texture attribute according to the decoded attribute value. Operations of the point cloud decoder may be performed in parallel.

In the geometry decompression, geometry data is decoded from the point cloud stream(s). In the attribute decompression, attribute data is decoded from the point cloud stream(s). In the auxiliary data decompression, auxiliary data is decoded from the point cloud stream(s). In the mesh data decompression, mesh data is decoded from the point cloud stream(s).

The point cloud renderer (Point Cloud Rendering) reconstructs the position of each point in the point cloud and the attributes of the point based on the decoded geometry, attributes, auxiliary data, and mesh data, and renders the point cloud data. The point cloud renderer generates and renders mesh (connection) data between point clouds based on the reconstructed geometry, reconstructed attributes, reconstructed auxiliary data, and/or reconstructed mesh data. The point cloud renderer receives metadata from the file/segment encapsulator and/or the point cloud decoder. The point cloud renderer may render the point cloud data based on the metadata according to the orientation or viewport. Although not shown in FIG. 10, the device of FIG. 10 may include a display. The display may display the rendered results.

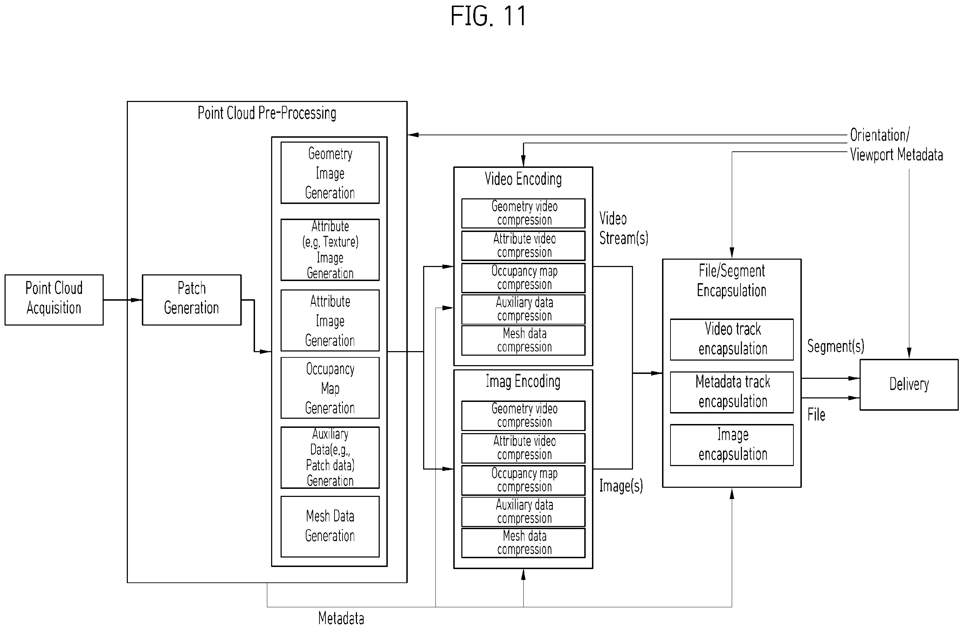

FIG. 11 illustrates an example of a point cloud data processing device according to embodiments.

FIG. 11 illustrates a device performing point cloud data processing according to the V-PCC scheme. The point cloud data processing device illustrated in FIG. 11 may be included in or correspond to the UE described with reference to FIGS. 1 to 8 (e.g., the processor 911 or processor 921 described with reference to FIG. 2, or the sink or the XR Media Processing block included in the sink described with reference to FIG. 6) or a BS.

The point cloud data processing device according to the embodiments may include a point cloud acquirer (Point Cloud Acquisition), a patch generator (Patch Generation), a geometry image generator (Geometry Image Generation), an attribute image generator (Attribute Image Generation), an occupancy map generator (Occupancy Map Generation), an auxiliary data generator (Auxiliary Data Generation), a mesh data data generator (Mesh Data Generation), a video encoder (Video Encoding), an image encoder (Image Encoding), a file/segment encapsulator (File/Segment Encapsulation), and a deliverer (Delivery). According to embodiments, the patch generation, geometry image generation, attribute image generation, occupancy map generation, auxiliary data generation, and mesh data generation may be referred to as point cloud pre-processing, pre-processor, or controller. The video encoder includes geometry video compression, attribute video compression, occupancy map compression, auxiliary data compression, and mesh data compression. The image encoder includes geometry video compression, attribute video compression, occupancy map compression, auxiliary data compression, and mesh data compression. The file/segment encapsulator includes video track encapsulation, metadata track encapsulation, and image encapsulation. Each element of the transmission device may be a module/unit/component/hardware/software/processor, or the like.

The geometry, attributes, auxiliary data, mesh data, and the like of the point cloud may each be configured in separate streams or stored on different tracks in the file. Furthermore, they may be contained in separate segments.

The point cloud acquirer (Point Cloud Acquisition) acquires a point cloud. For example, the point cloud data may be acquired through a process of capturing, synthesizing, or generating a point cloud through one or more cameras. By the acquisition operation, point cloud data including a 3D position (which may be represented by x, y, z position values, etc., and be hereinafter referred to as geometry) of each point and attributes (color, reflectance, tr a ansparency, etc.) of each point may be acquired, and, for example, a Polygon File format (PLY) (or Stanford Triangle format) file containing the same may be generated. In the case of point cloud data having multiple frames, one or more files may be acquired. In this process, metadata related to the point cloud (e.g., metadata related to the capture, etc.) may be generated.

The patch generation, or patch generator, generates patches from the point cloud data. The patch generator generates one or more pictures/frames from the point cloud data or point cloud video. A picture/frame may be a unit that typically represents a single image at a particular time. When dividing the points constituting a point cloud video into one or more patches (a set of points constituting the point cloud, where points belonging to the same patch are adjacent to each other in three-dimensional space and are mapped in the same direction among the six-face bounding box planes during the mapping to a 2D image) and mapping the same to the 2-D plane, an occupancy map picture/frame may be generated, which is a binary map that indicates whether data is present at a position in the 2D plane with a value of 0 or 1. Also, a geometry picture/frame, which is a depth map type picture/frame that represents the position information (geometry) about each point constituting the point cloud video on a patch-by-patch basis, may be generated. A texture picture/frame, which is a picture/frame that represents the color information about each point constituting the point cloud video on a patch-by-patch basis, may be generated. In this process, metadata needed to reconstruct the point cloud from the individual patches may be generated. The metadata may include information about the patches, such as the position of each patch in the 2D/3D space and the size thereof. These pictures/frames may be generated chronologically in succession to configure a video stream or a metadata stream.

Additionally, patches may be used for 2D image mapping. For example, the point cloud data may be projected onto each face of a cube. After the patch generation, a geometry image, one or more attribute images, an occupancy map, auxiliary data, and/or mesh data may be generated based on the generated patches.

The geometry image generation, attribute image generation, occupancy map generation, auxiliary data generation, and/or mesh data generation may be performed by the pre-processor or controller.

In the geometry image generation, a geometry image is generated based on the output of the patch generation. A geometry represents a point in 3D space. Based on the patches, a geometry image is generated using the occupancy map, auxiliary data (patch data), and/or mesh data, which contain information about 2D image packing of the patches. The geometry image is related to information such as a depth (e.g., near, far) of the generated patches after the patch generation.

In the attribute image generation, an attribute image is generated. For example, an attribute may represent a texture. The texture may be a color value matched to each point. In some embodiments, an iamge of multiple (N) attributes (attributes such as color and reflectance) including the texture may be generated. The plurality of attributes may include material (information about the material) and reflectance. In addition, according to embodiments, the attributes may further include information such as the color that may vary depending on the view and light even for the same texture.

In the occupancy map generation, an occupancy map is generated from the patches. The occupancy map includes information indicating the presence or absence of data in a pixel of a corresponding geometry or attribute image.

In the auxiliary data generation, auxiliary data that includes information about a patch is generated. In other words, the auxiliary data represents metadata about the patch of a point cloud object. For example, it may indicate information such as a normal vector for the patch. Specifically, according to embodiments, the auxiliary data may include information necessary to reconstruct the point cloud from the patches (e.g., information about the positions, size, and the like of the patches in 2D/3D space, projection plane (normal) identification information, patch mapping information, etc.).

In the mesh data generation, mesh data is generated from the patches. Mesh represents the information about connection between neighboring points. For example, it may represent triangular data. For example, in some embodiments, the mesh data represents connectivity between points.

The point cloud pre-processor or controller generates metadata related to the patch generation, geometry image generation, attribute image generation, occupancy map generation, auxiliary data generation, and mesh data generation.

The point cloud transmission device performs video encoding and/or image encoding in response to the output generated by the pre-processor. The point cloud transmission device may generate point cloud video data as well as point cloud image data. In some embodiments, the point cloud data may include only video data, only image data, and/or both video data and image data.

The video encoder performs geometry video compression, attribute video compression, occupancy map compression, auxiliary data compression, and/or mesh data compression. The video encoder generates video stream(s) containing the respective encoded video data.

Specifically, the geometry video compression encodes point cloud geometry video data. The attribute video compression encodes the point cloud attribute video data. The auxiliary data compression encodes auxiliary data related to the point cloud video data. The mesh data compression encodes mesh data of the point cloud video data. The operations of the point cloud video encoder may be performed in parallel.

The image encoder performs geometry image compression, attribute image compression, occupancy map compression, auxiliary data compression, and/or mesh data compression. The image encoder generates image(s) containing the respective encoded image data.

Specifically, the geometry image compression encodes point cloud geometry image data. The attribute image compression encodes the attribute image data of the point cloud. The auxiliary data compression encodes the auxiliary data related to the point cloud image data. The mesh data compression encodes the mesh data related to the point cloud image data. The operations of the point cloud image encoder may be performed in parallel.

The video encoder and/or the image encoder may receive metadata from the pre-processor. The video encoder and/or the image encoder may perform each encoding process based on the metadata.

The file/segment encapsulator encapsulates the video stream(s) and/or image(s) in the form of a file and/or segment. The file/segment encapsulator may perform video track encapsulation, metadata track encapsulation, and/or image encapsulation.

In the video track encapsulation, one or more video streams may be encapsulated into one or more tracks.

In the metadata track encapsulation, metadata related to the video stream and/or image may be encapsulated into the one or more tracks. The metadata may include data related to the content of the point cloud data. For example, the metadata may include initial viewing orientation metadata. According to embodiments, the metadata may be encapsulated into a metadata track, or may be co-encapsulated in a video track or image track.

In the image encapsulation, one or more images may be encapsulated into one or more tracks or items.

For example, according to embodiments, when four video streams and two images are input to the encapsulator, the four video streams and two images may be encapsulated in a single file.

The file/segment encapsulator may receive metadata from the pre-processor. The file/segment encapsulator may perform encapsulation based on the metadata.

The files and/or segments generated by the file/segment encapsulation are transmitted by the point cloud transmission device or transmitter. For example, the segment(s) may be delivered based on a DASH-based protocol.

The deliverer may deliver a point cloud bitstream or a file/segment containing the bitstream to the receiver of the reception device over a digital storage medium or network. Processing according to a transport protocol may be performed for transmission. Once processed for transmission, the data may be delivered over a broadcast network and/or broadband. The data may be delivered to the receiving side in an on-demand manner. The digital storage medium may include various storage media such as USB, SD, CD, DVD, Blu-ray, HDD, and SSD. The deliverer may include an element for generating a media file in a predetermined file format and may include an element for transmission over a broadcast/communication network. The deliverer receives orientation information and/or viewport information from the receiver. The deliverer may deliver the acquired orientation information and/or viewport information (or user-selected information) to the pre-processor, the video encoder, the image encoder, the file/segment encapsulator, and/or the point cloud encoder. Based on the orientation information and/or the viewport information, the point cloud encoder may encode all the point cloud data or may encode the point cloud data indicated by the orientation information and/or the viewport information. Based on the orientation information and/or the viewport information, the file/segment encapsulator may encapsulate all the point cloud data or may encapsulate the point cloud data indicated by the orientation information and/or the viewport information. Based on the orientation information and/or the viewport information, the deliverer may deliver all the point cloud data or may deliver the point cloud data indicated by the orientation information and/or the viewport information.

For example, the pre-processor may perform the above-described operations on all the point cloud data or on the point cloud data indicated by the orientation information and/or the viewport information. The video encoder and/or the image encoder may perform the above-described operations on all the point cloud data or on the point cloud data indicated by the orientation information and/or the viewport information. The file/segment encapsulator may perform the above-described operations on all the point cloud data or on the point cloud data indicated by the orientation information and/or the viewport information. The transmitter may perform the above-described operations on all the point cloud data or on the point cloud data indicated by the orientation information and/or the viewport information.

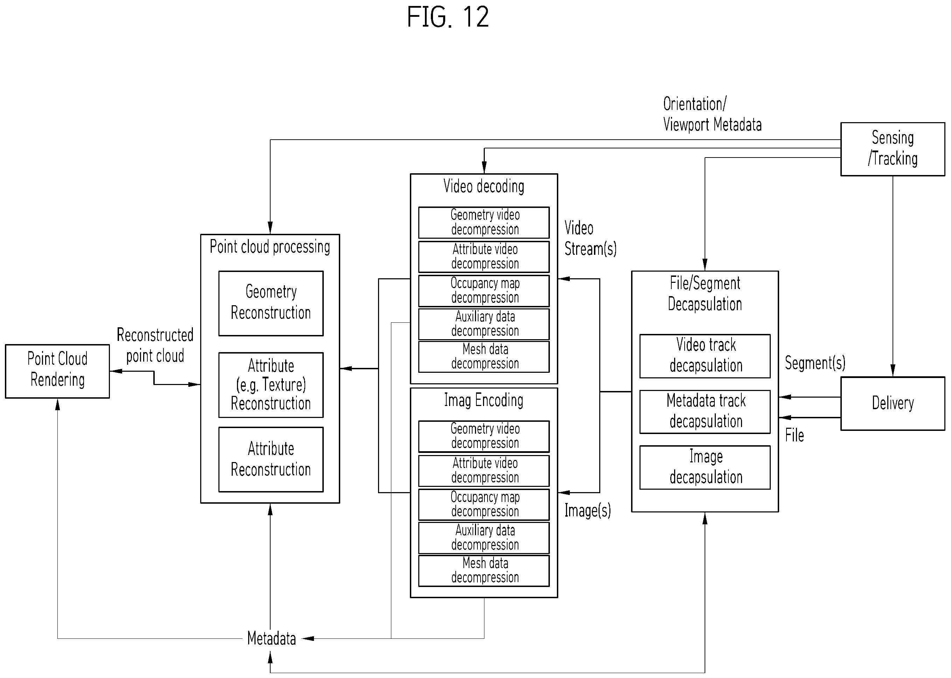

FIG. 12 illustrates an example of a point cloud data processing device according to embodiments.

FIG. 12 illustrates an example of a device that receives and processes point cloud data processed according to the V-PCC scheme. The point cloud data processing device illustrated in FIG. 12 may process the data using a method corresponding to the method described with reference to FIG. 11. The point cloud data processing device illustrated in FIG. 12 may correspond to or be included in the UE described with reference to FIGS. 1 to 8(e.g., the processor 911 or processor 921 described with reference to FIG. 2, a processor that processes higher layer data, or the sink or the XR Media Processing block included in the sink described with reference to FIG. 6).

The point cloud data processing device according to the embodiments includes a delivery client, a sensing/tracking part, a file/segment decapsulator (File/Segment decapsulation), a video decoder (Video Decoding), an image decoder (Image decoding), a point cloud processing and/or point cloud rendering part, and a display. The video decoder includes geometry video decompression, attribute video decompression, occupancy map decompression, auxiliary data decompression, and/or mesh data decompression. The image decoder includes geometry image decompression, attribute image decompression, occupancy map decompression, auxiliary data decompression, and/or mesh data decompression. The point cloud processing includes geometry reconstruction and attribute reconstruction.

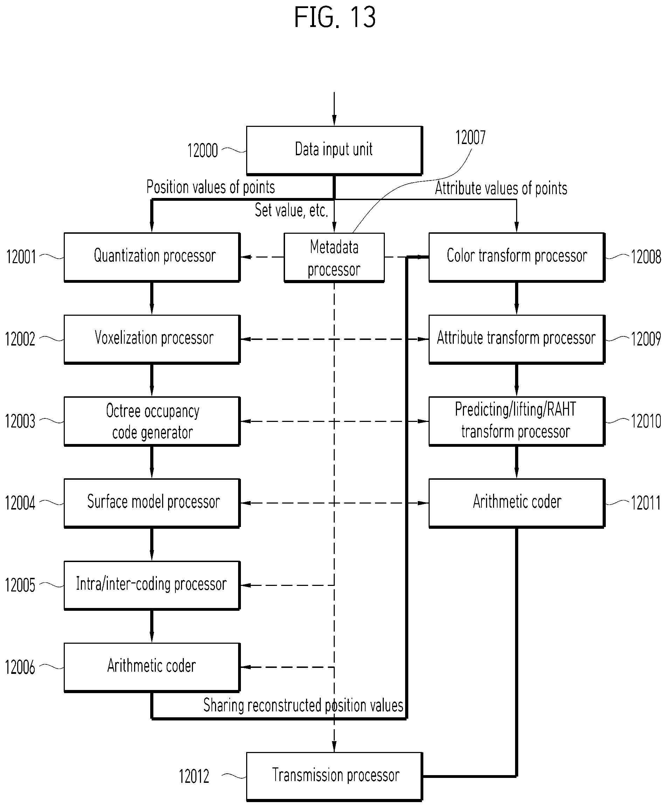

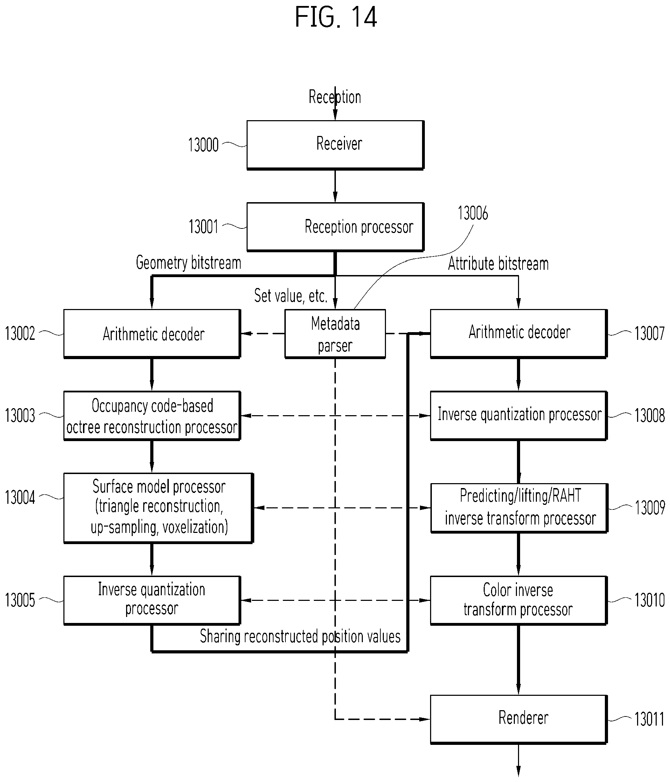

The delivery client may receive point cloud data, a point cloud bitstream, or a file/segment containing the bitstream transmitted by the point cloud data processing device of FIG. 13. Depending on the channel for the transmission, the device of FIG. 14 may receive the point cloud data over a broadcast network or a broadband. Alternatively, it may receive the point cloud video data over a digital storage medium. The device of FIG. 14 may decode the received data and render the same according to a user's viewport or the like. Although not shown in the figure, the device of FIG. 14 may include a reception processor (e.g., processor 911 of FIG. 2, etc.) not shown. The reception processor may perform processing on the received point cloud data according to a transmission protocol. The reception processor may perform a reverse process to the above-described operation of the transmission processor according to the processing performed for transmission on the transmitting side. The reception processor may deliver the acquired point cloud data to the decapsulation processor and the acquired point cloud related metadata to the metadata parser.

The sensing/tracking part acquires orientation information and/or viewport information. The sensing/tracking part may deliver the acquired orientation information and/or viewport information to the delivery client, the file/segment decapsulator, and the point cloud decoder.

Based on the orientation information and/or the viewport information, the delivery client may receive all point cloud data or the point cloud data indicated by the orientation information and/or the viewport information. Based on the orientation information and/or the viewport information, the file/segment decapsulator may decapsulate all the point cloud data or the point cloud data indicated by the orientation information and/or the viewport information. Based on the orientation information and/or the viewport information, the point cloud decoder (the video decoder and/or the image decoder) may decode all the point cloud data or the point cloud data indicated by the orientation information and/or the viewport information. The point cloud processor may process all the point cloud data or the point cloud data indicated by the orientation information and/or the viewport information.

The file/segment decapsulator (File/Segment Decapsulation) performs video track decapsulation, metadata track decapsulation, and/or image decapsulation. The decapsulation processor (file/segment decapsulation) may decapsulate the point cloud data in a file format received from the reception processor. The decapsulation processor (file/segment decapsulation) may decapsulate a file or segments according to ISOBMFF or the like and acquire a point cloud bitstream or point cloud-related metadata (or a separate metadata bitstream). The acquired point cloud bitstream may be delivered to the point cloud decoder, and the acquired point cloud-related metadata (or metadata bitstream) may be delivered to the metadata processor. The point cloud bitstream may contain the metadata (or metadata bitstream). The metadata processor may be included in the point cloud video decoder or may be configured as a separate component/module. The point cloud-related metadata acquired by the decapsulation processor may be in the form of a box or track in a file format. The decapsulation processor may receive metadata necessary for decapsulation from the metadata processor, when necessary. The point cloud-related metadata may be delivered to the point cloud decoder and used in a point cloud decoding procedure, or may be delivered to the renderer and used in a point cloud rendering procedure. The file/segment decapsulator may generate metadata related to the point cloud data.

In the video track decapsulation, video tracks contained in files and/or segments are decapsulated. Video stream(s) containing geometry video, attribute video, an occupancy map, auxiliary data, and/or mesh data are decapsulated.

In the metadata track decapsulation, a bitstream containing metadata and/or auxiliary data related to the point cloud data is decapsulated.

In the image decapsulation, image(s) including a geometry image, an attribute image, an occupancy map, auxiliary data, and/or mesh data are decapsulated.

The video decoder performs geometry video decompression, attribute video decompression, occupancy map decompression, auxiliary data decompression, and/or mesh data decompression. The video decoder decodes the geometry video, attribute video, auxiliary data, and/or mesh data in response to the process performed by the video encoder of the point cloud transmission device according to embodiments.

The image decoder performs geometry image decompression, attribute image decompression, occupancy map decompression, auxiliary data decompression, and/or mesh data decompression. The image decoder decodes the geometry image, the attribute image, the auxiliary data, and/or the mesh data in response to the process performed by the image encoder of the point cloud transmission device according to embodiments.

The video decoder and/or the image decoder may generate metadata related to the video data and/or the image data.

The point cloud processor (Point Cloud Processing) may perform geometry reconstruction and/or attribute reconstruction.

In the geometry reconstruction, a geometry video and/or a geometry image is reconstructed based on the occupancy map, auxiliary data, and/or mesh data from the decoded video data and/or the decoded image data.

In the attribute reconstruction, the attribute video and/or attribute image is reconstructed based on the occupancy map, the auxiliary data, and/or the mesh data from the decoded attribute video and/or the decoded attribute image. According to embodiments, for example, the attribute may be a texture. In some embodiments, the attribute may represent a plurality of pieces of attribute information. When there are multiple attributes, the point cloud processor performs multiple attribute reconstructions.

The point cloud processor may receive metadata from the video decoder, the image decoder, and/or the file/segment decapsulator, and process the point cloud based on the metadata.

The point cloud renderer (Point Cloud Rendering) renders the reconstructed point cloud. The point cloud renderer may receive metadata from the video decoder, the image decoder, and/or the file/segment decapsulator, and render the point cloud based on the metadata. Although not shown in FIG. 12, the device of FIG. 12 may include a display. The display may display the rendered results.

FIG. 13 illustrates an example of a point cloud data processing device according to embodiments.

FIG. 13 illustrates an example of a device that performs point cloud data processing according to the G-PCC scheme described with reference to FIG. 9. The point cloud data processing device according to the embodiments may include a data input unit 12000, a quantization processor 12001, a voxelization processor 12002, an octree occupancy code generator 12003, a surface model processor 12004, an intra/inter-coding processor 12005, an arithmetic coder 12006, a metadata processor 12007, a color transform processor 12008, an attribute transform processor 12009, a prediction/lifting/RAHT transform processor 12010, an arithmetic coder 12011 and/or a transmission processor 12012.

The data input unit 12000 according to the embodiments receives or acquires point cloud data. The data input unit 12000 may correspond to the point cloud acquirer 10001 of FIG. 1 according to embodiments.

The quantization processor 12001 quantizes the geometry of the point cloud data, for example, position value information about the points.

The voxelization processor 12002 voxelizes the position value information about the quantized points.

The octree occupancy code generator 12003 may represent the voxelized position value information about the points as an octree based on the octree occupancy code.

The surface model processor 12004 may process an octree representation for the position value information about the points in the point cloud based on a surface model method.

The intra/inter-coding processor 12005 may intra/inter- code the point cloud data.

The arithmetic coder 12006 may encode the point cloud data based on an arithmetic coding method.

The metadata processor 12007 according to the embodiments processes metadata about the point cloud data, for example, a set value, and provides the same to a necessary process such as a geometry encoding process and/or an attribute encoding process. In addition, the metadata processor 12007 according to the embodiments may generate and/or process signaling information related to the geometry encoding and/or the attribute encoding. The signaling information may be encoded separately from the geometry encoding and/or the attribute encoding. The signaling information may be interleaved.

The color transform processor 12008 may transform the color of the point cloud data based on attributes of the point cloud data, for example, attribute values and/or reconstructed position values of the points.

According to embodiments, the attribute transform processor 12009 may transform the attribute values of the point cloud data.

The prediction/lifting/RAHT transform processor 12010 may perform attribute coding on the point cloud data based on a combination of prediction, lifting, and/or RAHT.

The arithmetic coder 12011 may encode the point cloud data based on the arithmetic coding.

The transmission processor 12012 according to the embodiments may transmit each bitstream containing encoded geometry information and/or encoded attribute information or metadata, or transmit one bitstream configured with the encoded geometry information and/or the encoded attribute information and the metadata. When the encoded geometry information and/or the encoded attribute information and the metadata according to the embodiments are configured in one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS) for signaling of a tile level, and slice data. The slice data may include information about one or more slices. One slice according to embodiments may include one geometry bitstream Geom00 and one or more attribute bitstreams Attr00 and Attr10. The TPS according to the embodiments may include information about each tile (e.g., coordinate information and height/size information about a bounding box) for one or more tiles. The geometry bitstream may contain a header and a payload. The header of the geometry bitstream according to the embodiments may contain a parameter set identifier (geom_geom_parameter_set_id), a tile identifier (geom_tile_id) and a slice identifier (geom_slice_id) included in the GPS, and information about the data contained in the payload. As described above, the metadata processor 12007 according to the embodiments may generate and/or process the signaling information and transmit the same to the transmission processor 12012. According to embodiments, the process for the position values of the points and the process for the attribute values of the points may share data/information with each other to perform each operation.

FIG. 14 illustrates an example of a point cloud data processing device according to embodiments.

FIG. 14 illustrates an example of a device that performs point cloud data processing according to the G-PCC scheme described with reference to FIG. 10. The point cloud data processing device shown in FIG. 14 may perform the reverse process to the operation of the point cloud data processing device described with reference to FIG. 13.

The point cloud data processing device according to the embodiment may include a receiver 13000, a reception processor 13001, an arithmetic decoder 13002, an occupancy code-based octree reconstruction processor 13003, a surface model processor (triangle reconstruction, up-sampling, voxelization) 13004, an inverse quantization processor 13005, a metadata parser 13006, an arithmetic decoder 13007, an inverse quantization processor 13008, a prediction/lifting/RAHT inverse transform processor 13009, a color inverse transform processor 13010, and/or a renderer 13011.

The receiver 13000 receives point cloud data. The reception processor 13001 may acquire a geometry bitstream and/or an attribute bitstream included in the received point cloud data, metadata including signaling information, and the like.

The arithmetic decoder 13002 according to the embodiments may decode the geometry bitstream based on an arithmetic method.

The occupancy code-based octree reconstruction processor 13003 may reconstruct an octree from the decoded geometry based on the Occupancy code.

The surface model processor (triangle reconstruction, up-sampling, voxelization) 13004 may perform triangle reconstruction, up-sampling, voxelization, and/or a combination thereof on the point cloud data based on a surface model method.

The inverse quantization processor 13005 may inverse quantize the point cloud data.

The metadata parser 13006 may parse metadata contained in the received point cloud data, for example, a set value. The metadata parser 13006 may pass the metadata to a geometry decoding process and/or an attribute decoding process. Each process according to the embodiments may be performed based on necessary metadata.

The arithmetic decoder 13007 may decode the attribute bitstream of the point cloud data based on the arithmetic method based on the reconstructed position value.

The inverse quantization processor 13008 may inverse quantize the point cloud data.

The prediction/lifting/RAHT inverse transform processor 13009 may process the point cloud data based on a prediction/lifting/RAHT method and/or a combination thereof.

The color inverse transform processor 13010 may inversely transform the color value of the point cloud data. The renderer 13011 may render the point cloud data.

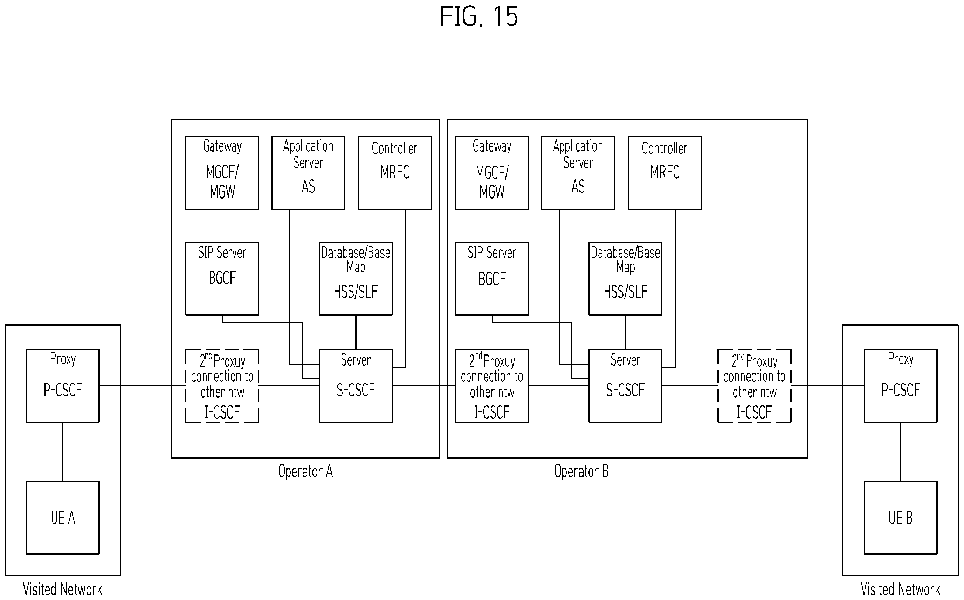

FIG. 15 illustrates a transmission structure for a UE on a random visited network according to embodiments..

In the 3rd Generation Partnership Project (3GPP), the Multimedia Division establishes and distributes standards for transmitting and receiving media by defining protocols related to media codecs. The definition of media and transmission scenarios cover a wide range. The scenarios include cases where personal computers or portable receivers provide mobile/fixed reception along with radio access and Internet-based technologies. This extensive standardization carried out by 3GPP has enabled ubiquitous multimedia services to cover a variety of users and use cases, allowing users to quickly experience high-quality media anytime, anywhere. In particular, in 3GPP, media services are classified according to their unique characteristics and divided into conversational, streaming, and other services according to the target application. The conversational service extends from the session initiation protocol (SIP)-based phone service network. The multimedia telephony service for the IP multimedia subsystem (MTSI) aims to provide a low-latency real-time conversational service. The streaming service delivers real-time or re-acquired content in a unicast manner based on the packet switched service (PSS). In 3GPP, broadcast services within the PSS system may be available on mobile TVs through the multimedia broadcast/multicast service (MBMS). In addition, the 3GPP provides messaging or reality services. The three base services described above are constantly revising or updating their standards to ensure the high quality user experience, and provides scalability to ensure that they are compatible with available network resources or existing standards. Media includes video codecs, voice, audio, images, graphics, and even text corresponding to each service.

In 3GPP, a standardized platform for mobile multimedia reception was designed to facilitate network expansion or mobile reception. The IP multimedia subsystem (IMS) is designed to meet these requirements and enables access to various technologies or roaming services. The IMS is based on the Internet engineering task force (IETF) standard. The IETF standard operates on the Internet platform, and accordingly it may simply extending the Setup, Establishment, and Management functions of the existing Internet protocol. The IMS uses the SIP protocol as its basic protocol and manages multimedia sessions efficiently through this protocol.

In 3GPP standard technology, the service is based on a mobile platform. Accoridngly, when a user is connected to a mobile network or platform of a third party or another region, the user must roam to the other network. In this scenario, a method for the client to maintain a session across multiple mobile networks is required. Additionally, as IP-based media service requirements increase, the requirements for high-capacity IP-based data transmission, conversation, and multimedia transmission have increased. Therefore, IP packets have been required to be transmitted in an interchangeable form across 3G, 4G, and 5G networks, rather than using the general IP routing. In order to maintain QoS in a mixed network environment, flexible data information exchange and platforms are needed in the process of exchanging services. In order to integrate the Internet network and wireless mobile network over the past 10 years, the 3GPP standard established the IP-based IP multimedia subsystem (IMS) standard and enabled transmission of IP voice, video, audio, and text in the PS domain. The multimedia telephony service for IMS (MTSI), which is a standard for transmitting conversational speech, video, and text through RTP/RTCP based on the IMS, was established to provide services having efficiency higher than or equal to that of the existing Circuit Switched (CS)-based conversational service for the user through flexible data channel handling. The MTSI includes signalling, transport, jitter buffer, management, packet-loss handling, adaptation, as well as adding/dropping media during call, and is formed to create, transmit, and receive predictable media. Since the MTSI uses the 3GPP network, NR, LTE, HSPA, and the like are connected to the IMS and are also extended and connected to Wi-Fi, Bluetooth, and the like. The MTSI transmits and receives data negotiation messages to and from the existing IMS network. Once the transmission and reception are completed, data is transferred between users. Therefore, the IMS network may be used equally, and the MTSI additionally defines only audio encoder/decoder, video encoder/decoder, text, session setup and control, and data channel. The data channel capable MTSI (DCMTSC) represents a capable channel to support media transmission, and uses the Stream Control Transmission Protocol (SCTP) over Datagram Transport Layer Security (DTLS) and Web Real-Time Communication (WebRTC). The SCTP is used to provide security services between network layers/transport layers of the TCP. Because it is extended from an existing platform, it defines media control and media codec as well as media control data for managing media, and general control is processed through media streaming setup through the SIP/SDP. Since setup/control is delivered between clients, adding/dropping of media is also included. The MTSI also includes IMS messaging, which is a non-conversational service. To transport media through 3GPP layer 2, the packet data convergence protocol (PDCP) is used. The PDCP delivers IP packets from a client to the base station, and generally performs user plane data, control plane data, header compression, and ciphering/protection.

FIG. 15 shows a transmission structure for transmission between two UEs having a call session in any visited network when there are UE A/UE B. UE A/UE B may be present in operator A or B or the same network. To describe the entire MTSI system, it is assumed that there are four other networks. To perform a call, UEs A and B perform session establishment for transmission of media within the IMS system. Once a session is established, UEs A and B transmit media through the IP network. The main function of the IMS is the call state control function (CSCF), which manages multimedia sessions using the SIP. Each CSCF serves as a server or proxy and performs a different type of function depending on its purpose. The proxy CSCF (P-CSCF) serves as a SIP proxy server. It is the first to access the IMS network and is the first block to connect UEs A and B. The P-CSCF serves to internally analyze and deliver SIP messages in order to receive all SIP messages and deliver them to a target UE. The P-CSCF may perform resource management and is closely connected to the network gateway. The gateway is connected to the general packet radio service (GPRS), which is an IP access bearer. Although the GPRS is a second-generation wireless system, it is connected to basic functions configured to support PS services. The P-CSCF and the GPRS should be in the same network. In this figure, UE A is rpesent in a random visited network. UE A and the P-CSCF are present within the network. The serving CSCF (S-CSCF), which is a SIP server, is present in the home network of a subscriber and provides a session control service for the subscriber. If a proxy or visited network is not present, UE A or B may be present in operator A or B, and a UE may be present in the home network. In the IMS system, the S-CSCF serves as a major function in signaling and serves as a SIP register. Thus, it may create a user's SIP IP address or create the current IP address. The S-CSCF may also authenticate users through the home subscriber server (HSS) or acuiqre profiles of various users present in the HSS. All incoming SIP messages should pass through the S-CSCF. The S-CSCF may receive messages and connect with other nearby CSCFs or the application server (AS) to deliver SIP messages to other ASs. The interrogating CSCF (I-CSCF) performs the same proxy server function as the P-CSCF, but is connected to an external network. It may peform the process of encrypting SIP messages by observing network availability, network configuration, and the like. The HSS is a central data server that contains information related to users. The subscriber location function (SLF) represents an information map linking a user's address to the corresponding HSS. The multimedia resource function (MRF) contains multimedia resources in the home network. The MRF consists of a multimedia resource function controller (MRFC) and a multimedia resource function processor (MRFP). The MRFC is the control plane of MRC and perfors a control function in managing stream resources within the MRFP. The breakout gateway control function (BGCF) is a SIP server. It represents a gateway connected to the public-switched telephone network (PSTN) or the communication server (CS) to delvier SIP messages. The media gateway control function (MGWF) and the media gateway (MGW) serves as an interface to deliver media to the CS network and deliver signaling.

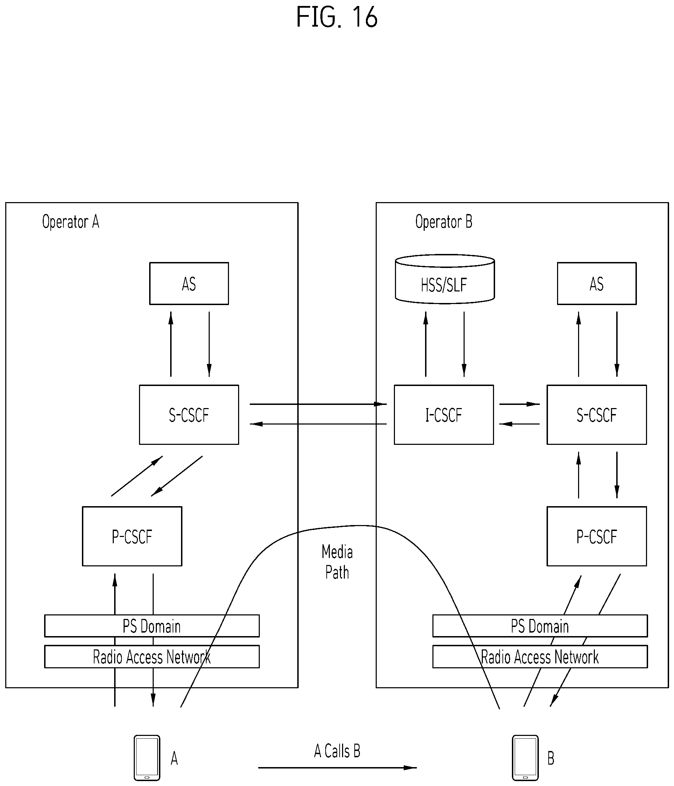

FIG. 16 illustrates a call connection between UEs according to embodiments.

In an IMS-based network, an environment enabling IP connection is required, The IP connection is performed in the home network or visited network. When the IP connection is establshed, a conversational environment, which is a detailed element of XR, is configured, and information in which virtual reality data such as 360 video/ geometry-based point cloud compression (G-PCC)/ video-based point cloud compression (V-PCC) is compressed is exchanged or data is delivered. XR data to be delivered may be subdivided into two areas. When it is transmitted based on the MTSI standard, the AS delivers the call/hold/resume method through route control plane signaling using the CSCF mechanism and performs a third-party call connection. When the call connection is performed, the media is simply delivered between UE A/B. When there are two UEs, the MTSI operates within the IMS network as shown in FIG. 16.

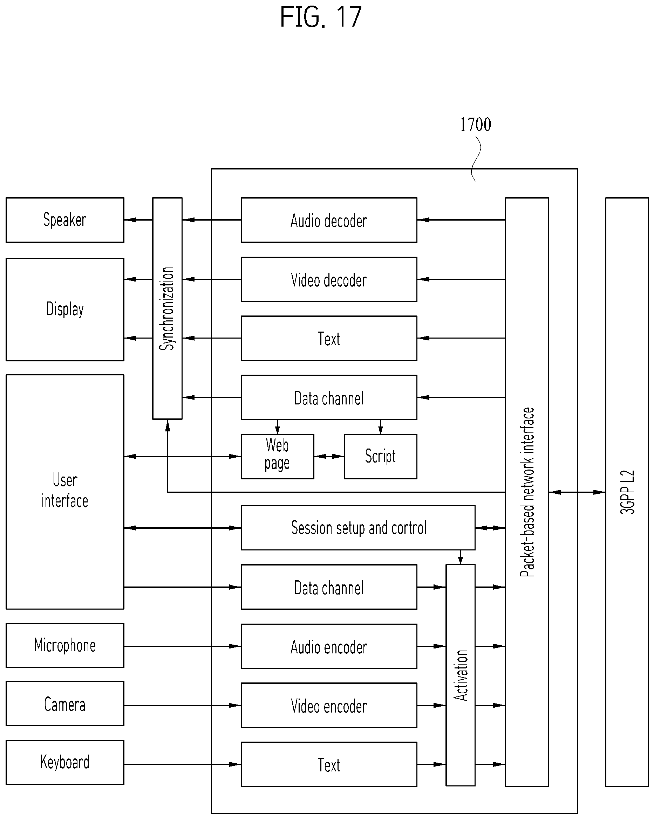

FIG. 17 illustrates devices for transmitting and receiving point cloud data according to embodiments.

The video encoder and audio encoder may correspond to the XR device 100c, the encoding S1520 of FIG. 8, the point cloud encoder of FIGS. 9, 11, and 13, and the like.

The video decoder and audio decoder may correspond to the XR device 100c, the decoding S1540 of FIG. 8, the point cloud decoder FIGS. 10, 12, and 14, and the like.

The MTSI limits the relevant elements and connection points of the client terminal within the IMS network, and thus the scope of the configuration thereof is defined as shown in FIG. 17.

In FIG. 17, decisions about the physical interaction of synchronization related to the speaker, display, user interface, microphone, camera, and keyboard are not discussed in the MTSI. The parts in the box 170 determine the scope of the method to control the media or control relarted media. In general, the delivery of the SIP falls under the IMS, and thus the control of a specific SIP is not included in the MTSI. Therefore, the structure and delivery of the data and the definition of the service may determine the scope of the MTSI and IMS. If they are defined as in the MTSI, they may be defined as a standard in the following scope.

To support conversational XR services, SDP and SDP capability negotiation based on RFC 4566 and a related streaming setup should be used.

For the setup and control, independent interaction of UE A/B is neede, and media components perform an adding or dropping operation.

The transmission medium for transmitting the media should comply with the packet-based network interface as well as the coded media (applying a transport protocol).

To transmit data, the RTP stream of RFC 3550 may be used, and the SCTP (RFC 4960) or WebRTC data channel may be employed as a data channel.

A device for transmitting and receiving point cloud data according to embodiments may include any device, such as a cell phone, desktop, and AR glass. When it s assumed that the device is a cell phone, it may have a speaker, a display, a user interface, a microphone, a camera, and a keyboard, and the input signal may be transferred to the encoding/decoding block.

The method/operation according to embodiments may be processed by the video encoder of FIG. 17. It may be operatively connected to software.

In the method/operation according to the embodiments, the G-PCC structure call flow may be included in the session setup & control part.

Each component of FIG. 17 may correspond to hardware, software, processors, and/or a combination thereof.

### IP Connectivity

The point cloud data transmission/reception device according to embodiments may support IP connectivity.

In the scope of the multimedia subsystem, the XR range is assumed to be present in a radio access network (RAN) such as a universal mobile telecommunications system (UMTS) and a visited network such as a serving sprc support node (SGSN) or gateway GPRS support note (GGSN), and scenarios for roaming services and IP connectivity should be considered. When IP connectivity needs to be considered, IP services should be proided even in places that are not present in the IMS network, and the general packet radio service (GPRS) roaming should also be connected to the home network. If an IMS-based network is provided, end-to-end quality of service (QoS) should be provided to maintain the IP connectivity. QoS requirements may generally use the session initiation protocol (SIP) to define a session, change a session, or terminate a session, and may convey the following information: type of media, direction of traffic (up or down), bitrate of media, packet size, packet transport frequency, RTP payload, and bandwidth adaptation.

### IP Policy Control/Secure Communication

The point cloud data transmission/reception device according to embodiments may perform IP policy control/secure communication.

Negotiation may be performed at the application level. If QoS between UEs is established, the UE or an entity that is to provide XR service compresses and packetize the data and delivers the same over the IP network using a transport protocol such as TCP or UDP using an appropriate transport protocol (such as RTP). In addition, when the IP network is used, the bearer traffic should be controlled and managed, and the following tasks may be performed between the access network and the IMS within the IMS session.

The policy control element may activate the appropriate bearer for the media traffic through a SIP message and prevent the operator from misusing bearer resources. The IP address and bandwidth for transmission and reception may be adjusted at the same bearer level.

The policy control element may be used to set start or stop points for media traffic and to resolve synchronization related issues.

The policy control element may be used to deliver acknowledgment messages over the IP network and to modify, suspend, or terminate the services of the bearer.

The privacy may be requested for the security of the UE.

### Internetworking with other networks (Service Control).

The point cloud data transmission/reception device according to embodiments may be operatively connected to other networks.

Because the IMS services provided by 3GPP are not maintained in the same time, connections and terminations of network subscriptions between terminals cannot be communicated quickly. Therefore, for any type of terminals, an IMS network is required to connect as many different users and networks as possible. This may include not only PSTN or ISDN, but also mobile and Internet users. In the case of 2G networks, which are rarely used currently, if roaming is used, the entity visiting the visited network provides services and control information for the user to perform registration/session establishment within the Internet network. When roaming is present in the visited network as in this case, there may be service control constraints, and there are points to consider according to various roaming model scenarios. In addition, when a service is provided, the quality thereof may be degraded due to the service speed on the visited network. If roles such as security or charging are added in the middle, the areas of service control and execution method for the home network/visited network should be considered.

### Plane Separation

The 3GPP standard defines a layered architecture within the IMS network. Therefore, the transport/bearer is defined separately. In particular, the application plane may be generally divided into the scope of application servers, the control plane into HSS, CSCF, BGCF, MRFC, MRFP, SGW, SEG, etc., and the user plane into SGSN, GGSN, IM-MGW, etc.

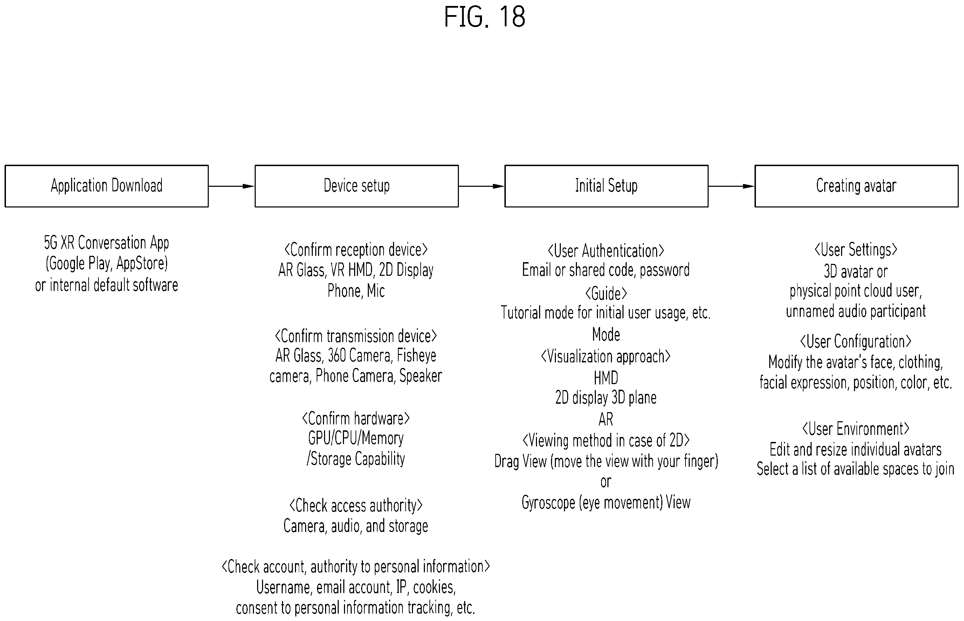

FIG. 18 illustrates a structure for XR communication on a 5G network according to embodiments.

The point cloud data transmission/reception device according to embodiments may efficiently perform XR communication based on a communication network, as shown in FIG. 18.

Real-time point cloud two-way communication using a 5G network may be achieved using three methods: 1) exchange of point cloud data using an IMS telephone network, 2) streaming of point cloud data using a 5GMS media network, and 3) web-based media transmission using WebRTC. Therefore, a definition of an XR conversational service scenario is required to transfer the data. Scenarios may be delivered in various forms and may be divided into processes and scenarios for all end-to-end services using a 5G network, starting from the process of acquiring data.

In order to proceed with XR teleconference, application download should be performed in advance. TO exchangE data using a 5G network, an embedded or downloadable application program is required. This program select the transmission type of data transmitted by 5G from among 1) a telephone network 2) a media network 3) A web network. When the program is installed, the basic environment for sending and receiving data may be checked by checking the general access of the device and permissions to account and personal information. Point cloud equipment, including a reception device and transmission device for receiving data from a counterpart, includes capture equipment, a converter capable of converting dimensional data into three dimensions, or any video input device capable of transmitting or converting data into three dimensions in 360 degrees. For voice data, a built-in microphone or speaker is provided, and hardware capabilities to minimize the processing of point cloud data is also checked. Hardware includes the function of the GPU/CPU capable of performing pre-rendering or post-rendering and may also include the capacity of the hardware to perform the processing, and the size of the memory. The personal information includes account information for accessing the application, IP, cookies, and other things that may additionally carry real-time information about the user, and consent is obtained in advance to transfer the personal information..

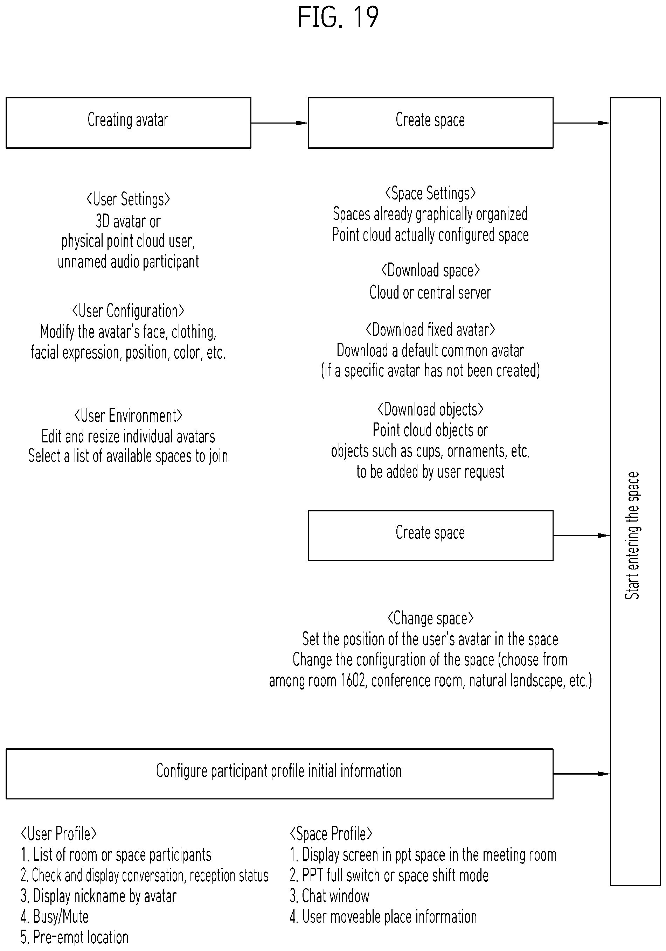

FIG. 19 illustrates a structure for XR communication according to embodiments.

After verifying the permissions to obtain the initial data and the state of the device, the user is authenticated and a distinguisher is created to differentiate between users. Generally, an email or a username and password is used to identify the user, and the tag of the authenticated user is formed automatically. In addition, a guide mode may be provided for the initial user to effectively exchange point cloud data or use the system. The state of the user device may determine a method for accessing the field of view. If the device is capable of directly capturing or receiving the point cloud, it may transmit and receive the data as it is. If the point cloud is received using an HMD, it should be scaled or transformed to fit the 360 environment. If the receiving display is not a device that receives three-dimensional data, but a 2D display based on a commonly used cell phone or monitor, it should be able to faithfully represent the data three-dimensionally within the two-dimensional screen. For example, the three-dimensional view may be realized or checked within the two-dimensional display by rotating or zooming the image on the screen with a finger. Alternatively, a gyroscope may be used to check a three-dimensional space on the two-dimensional screen. To represent a user in a three-dimensional space, an avatar should be created. The avatar may be virtual data from a graphic, a three-dimensional transformed form of a person or object directly acquired as a point cloud, or may e audio without any data. If audio data is input, the user does not exist and the data may be organized in the same form as a voice conference. The three-dimensional representation of the avatar may be modified by a user definition or choice. For example, in the case of a human, the avatar may change the shape of its face, wear clothes, hats, accessories, etc. that may express the personality of the human, and may be transformed into various forms to express the personality. In addition, emotions may be expressed through conversations between humans. The emotions may be controlled by changes in the text or the shape of the face in graphics.

The created avatar participates in a virtual space. In the case of a 1:1 conversation, each data is transmitted to the counterpart, but the space in which the counterpart receives the data should be simple. If there are multiple participants, spaces that may be shared by multiple participants should be created. The spaces may be any graphically configured spaces or data spaces acquired directly as point clouds. Depending on the size and context of the data being shared, the data may be stored on individual devices for quick processing, or may be stored and shared in the cloud or on a central server if the data is large. The user's avatar may be pre-generated using a library. A default, common avatar may thus be used, eliminating the need to create a new avatar or capture and send data for the users. Similarly, various objects used in the space may be added at the request from a user, and the data may be graphical or acquired as a point cloud. Assuming a typical meeting room, objects may be easily accessible or familiar objects in the meeting room, such as documents, cups, and laser pointers. When a space is created, it may be populated by users, each with their own avatar, and users may join the meeting by moving their avatar into the created space. The space is determined by the host organizing the meeting and may be changed by the host by selecting the space. Acquiring a familiar meeting place in advance may give the effect of joining a company meeting room at home, while traveling abroad or acquiring a famous historical site abroad may give the effect of meeting at that site from home. Spaces generated from virtual, random graphics rather than point clouds are also subject to the ideas and implementation of the space organizer who creates the space for the user. When a user joins a space, they may enter the space by forming a user profile. The user profile is used to distinguish the list of participants in the room or space. If there are multiple users, it may be checked whether conversations are possible and that the user's reception is working correctly. Also, when an avatar is present, the user's name or nickname should be displayed and it should be indicated whether the user is currently busy or mute. Space constraints may vary depending on the utilization of the applications that make up the host or server. In environments where free movement is restricted, users should be allowed to move where they want to be. In addition to the user's profile, the profile of the space also needs to determined. To share a large number of files in a meeting room, there should be a space to display the PPT in the room. Thus, the effect of viewing the presentation in a virtual room may be obtained, and the screen image may be replaced with a screen image for sharing documents, just like in a normal audio conference. A place for chatting also needs to be provided. If users move around, a definition of how far and where they can move is required.

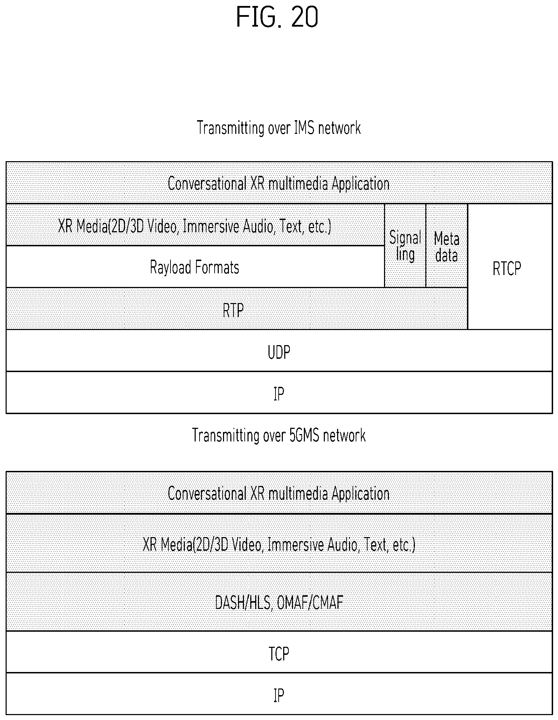

FIG. 20 illustrates a protocol stack of XR interactive service on a 3GPP 5G network according to embodiments.

5G XR media may be transmitted in various ways including: 1) exchanging point cloud data using an IMS telephone network; 2) streaming point cloud data using a 5GMS media network; and 3) Web-based media transmission using WebRTC. In the WebRTC method, two data are shared at the application level. In addition, IMS and 5GMS have their own transmission protocols and transmission and reception should be performed in accordance with the standards. Unlike the existing two-dimensional or 360 video, the XR conversational service should be delivered with dimensional information and data parameters for monitoring of QoS added. When the service is delivered over the IMS network, fast data processing and low-latency conversational service may be implemented because the data is delivered using a real-time telephone network. However, there is a disadvantage that the conversation should rely on continuous feedback information because there is no protocol for recovering from transmission errors in the middle of transmission. When performing XR conversation services with 5GMS, errors may be corrected and a larger amount of data may be transmitted. However, there may be delays caused by the process of controlling errors. Both methods are technically feasible in current 5G systems, and which one to use may depend on the environment and context in which the service is to be implemented.

### Description of Use-case of MTSI-based XR Conversational Conference

Real-time two-way video conversations based on point clouds may be categorized into two types: 1:1 conversational transmission, such as a single phone call, and participation in multiple video conferences. However, both scenarios require a processor that processes media rather than directly delivering data and should be provided in an environment that allows for virtual meetings.

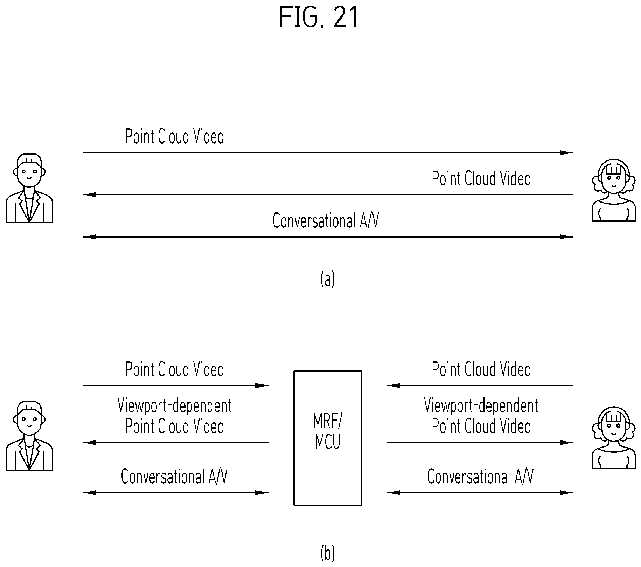

FIG. 21 illustrates a point-to-point XR videoconference according to embodiments.

### Point to Point XR Teleconference.

The basic call request for a conversation is driven by network functions. When using an MTSI network, a media source function (MRF) or media control unit (MCU) may be used to transmit and receive media. The MRF/MCU receives the point cloud compressed data. In the case where the sender intenda to send auxiliary information (view of the field of view, camera information, direction of the field of view, etc.) in addition to the compressed data. After acquiring different point cloud data from multiple senders using the MRF, a single video is created through internal processes. The video includes a main video and multiple thumbnails. The processed video is then delivered back to the respective receivers, where processing such as transcoding and resizing may occur. If the MRF requires processes such as transcoding, it may increase the maximum latency by as much as the processing time. In addition, thumbnail data may be sent to each transmitter and receiver in advance to perform preprocessing. In addition to processing media, the MRF performs functions of audio and media analysis, operative connection of the application server and billing server, and resource management. The application server (AS), which is connected to the MRF, provides MRF connection and additional functions, including HSS interworking function for inquiring the status of subscribers in the telephone network. Additional functions include password call service, lettering service, call connecting tone service, and call prohibition service, on the actual phone.

The one-to-one point cloud conversation service requires each user to have a three-dimensional point cloud capture camera. The camera should contain color information, position information, and depth information related to the user. If depth is not represented, a converter may be used to convert a two-dimensional image into a three-dimensional image. The captured information used may include Geometry-based Point Cloud Compression (G-PCC) or Video-based Point Cloud Compression (V-PCC) data. The transmitter should have equipment capable of receiving the other party's data. The receptin equipment generally refers to any equipment capable of representing the data of the acquired point cloud. Accordingy, it may be a 2D-based display and may include any equipment capable of visually representing the graphics of the point cloud, such as an HMD or hologram. To represent data, the receiver should receive data from the MRF/MCU, where the data from the transmitter and receiver is processed, and process the received data. The captured point cloud data is delivered to the MRF/MCU and the received data is generated by an internal process to deliver the data to each user. The basic information about the conversation, the virtual space of the conversation where the conversation is required, or the view information from the perspective desired by the other party may be delivered, or compressed data may be delivered.
1. Bonnie (B) and Clyde (C) use a conference call to make an access. Through the access, each other's face may be presented in a plane or a simple virtual space, and the virtual space A allows B and C to see each other's faces from where they arrive.
   In a one-on-one conversation, the virtual space is simply used as a space in which the point cloud is projected and simplified. If the projection space is not used, all data captured by the camera is simply sent to the other party.
2. B and C require an application to operate the video conference. The application checks the following basic service operations.

Checking the reception device: AR glass, VR HMD, 2D display, phone speaker, etc.

Checking the transmission device: AR glass, 360 camera, fisheye camera, phone camera, Mic, Kinnect, LiDAR, etc.

Checking hardware performance: GPU, CPU, memory, storage capability

Checking access authority: camera, audio, storage, etc.

Checking permissions to account and personal information: username, email account, IP, cookies, and consent to personal information tracking

3. Before engaging in a conversation, B and C use a point cloud capture camera to acquire point data to be transmitted to the other party. The point data is typically acquired data about the faces or body shapes of B and C, and data acquired using their own equipment may be output.

In the above scenario, a transmission delivery may be implemented based on a simple telephone network in an environment where no media is known. Prior to the creation of the telephone network, the preliminary data needs to be received through the MRF/MCU, which receives all the incoming data from B and C.

The scenario of a video conversation between two people for a point cloud is divided into two scenarios as follows.

In scenario (a), all data is transmitted in a one-to-one conversation. All of B's point cloud information may be delivered directly to C, and C may process all the B's data or partially process the same based on auxiliary information delivered from B. Similarly, B should receive all the point cloud data transmitted by C and process some of the data based on auxiliary information transmitted from C. In scenario (b), the MRF/MCU are located between telephone networks, and B and C deliver point cloud data to the MRF/MCU located therebetween. The MRF/MCU processes the received data and delivers the data to B and C according to the specific conditions required by B and C. Therefore, B and C may not receive all the point cloud that they transmit to each other. In scenario (b), the multiparty video conference function may also be extended to include an additional virtual space A, which may be delivered to B or C. For example, instead of receiving a direct point cloud, B and C may be placed in a virtual meeting space and the entire virtual space may be delivered to B and C in the form of third person or first person. David (D) may also join in, and thus B, C, and D may freely converse with each other in space A.

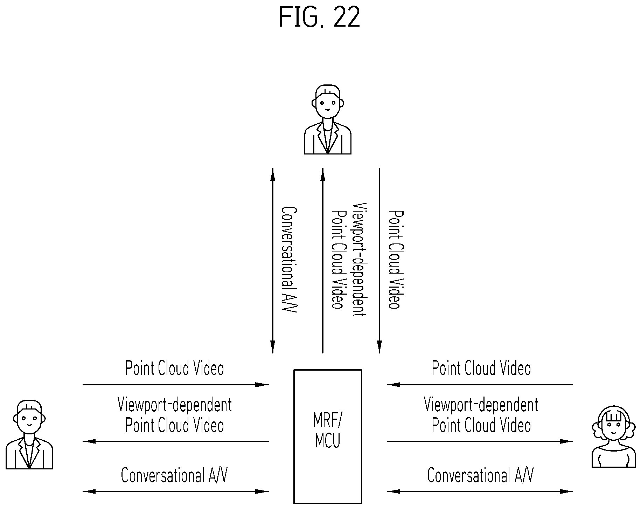

FIG. 22 illustrates an extension of an XR videoconference according to embodiments.

As opposed to a conversation between two persons, a virtual conferencing system involving three or more persons may not allow for direct data transmission. Instead, the MRF/MCU may receive each piece of data and process a single piece of data, which is schematically shown in FIG. 22.

B, C, and D deliver the acquired point cloud data to the MRF/MCU. Each piece of the received data is transcoded to form a unit frame and generate a scene that may organize the data of the aggregated points. The configuration of the scene is given to the person who requests hosting among B, C, and D. In general, various scenes may be formed to create a point space. Depending on the user's location or the location they wish to observe, not all data needs to be delivered, and the MRF/MCU may deliver all or part of the point cloud data based on the received data information and the camera viewpoints and viewports requested by B, C, and D.

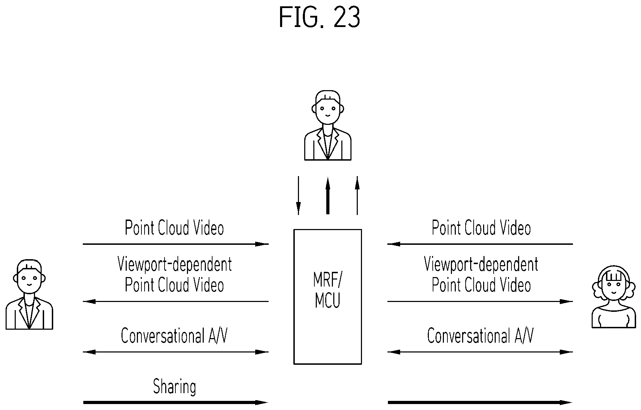

FIG. 23 illustrates an extension of an XR videoconference according to embodiments.

Second, B having the authority of the host may share its own data or screen with the conference participants. The data that may be shared includes media that may be delivered to a third party in addition to the video conversation, such as an overlay, an independent screen, or data. If the sharing function is used, B may transmit data to be shared to the MRF/MCU, and C and D may receive data shared by a request thereof. In order to share the data, the number of overlays or layings may be determined using the SDP. Capability should be measured regarding the ability to receive all the data and the ability to receive all the data to be delivered in the Offer/Answer process. This process may be determined at multiple conference participation initiations. The data processing capability for each user may be checked when a telephone network is created when the data sharing function should be basically provided. The shared data is generally generated to share some or a partial or entire screen of an application operating in the host in a conversation through a presentation file, an excel file, a screen of a desktop, or the like. The generated data is transmitted to a user who desires to receive the data by converting the compression or resolution.

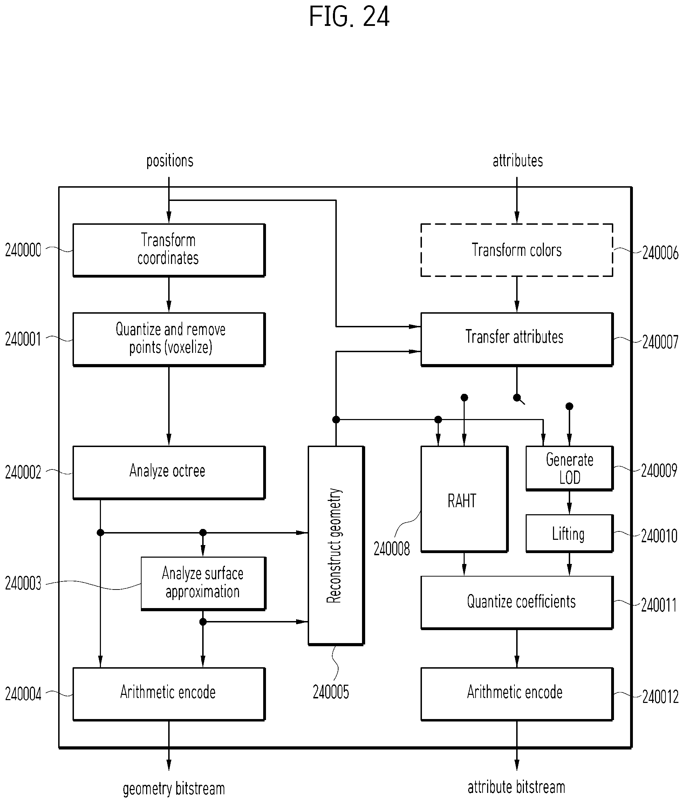

FIG. 24 illustrates an exemplary point cloud encoder according to embodiments.

FIG. 24 shows the GPCC encoder of FIG. 9 in detail.

The point cloud encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described, the point cloud encoder may perform geometry encoding and attribute encoding. The geometry encoding is performed before the attribute encoding.

The point cloud encoder according to the embodiments includes a coordinate transformer (Transform coordinates) 240000, a quantizer (Quantize and remove points (voxelize)) 240001, an octree analyzer (Analyze octree) 240002, and a surface approximation analyzer (Analyze surface approximation) 240003, an arithmetic encoder (Arithmetic encode) 240004, a geometric reconstructor (Reconstruct geometry) 240005, a color transformer (Transform colors) 240006, an attribute transformer (Transform attributes) 240007, a RAHT transformer (RAHT) 240008, an LOD generator (Generate LOD) 240009, a lifting transformer (Lifting) 240010, a coefficient quantizer (Quantize coefficients) 240011, and/or an arithmetic encoder (Arithmetic encode) 240012.

The coordinate transformer 240000, the quantizer 240001, the octree analyzer 240002, the surface approximation analyzer 240003, the arithmetic encoder 240004, and the geometry reconstructor 240005 may perform geometry encoding. The geometry encoding according to the embodiments may include octree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 240000 according to the embodiments receives positions and transforms the same into coordinates. For example, the positions may be transformed into position information in a three-dimensional space (e.g., a three-dimensional space represented by an XYZ coordinate system). The position information in the three-dimensional space according to the embodiments may be referred to as geometry information.

The quantizer 240001 according to the embodiments quantizes the geometry. For example, the quantizer 240001 may quantize the points based on a minimum position value of all points (e.g., a minimum value on each of the X, Y, and Z axes). The quantizer 240001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 240001 according to the embodiments performs voxelization based on the quantized positions to reconstruct quantized points. As in the case of a pixel, which is the minimum unit containing 2D image/video information, points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 240001 may match groups of points in the 3D space with voxels. According to embodiments, one voxel may include only one point. According to embodiments, one voxel may include one or more points. In order to express one voxel as one point, the position of the center of a voxel may be set based on the positions of one or more points included in the voxel. In this case, attributes of all positions included in one voxel may be combined and assigned to the voxel.

The octree analyzer 240002 according to the embodiments performs octree geometry coding (or octree coding) to present voxels in an octree structure. The octree structure represents points matched with voxels, based on the octal tree structure.

The surface approximation analyzer 240003 according to the embodiments may analyze and approximate the octree. The octree analysis and approximation according to the embodiments is a process of analyzing a region containing a plurality of points to efficiently provide octree and voxelization.

The arithmetic encoder 240004 according to the embodiments performs entropy encoding on the octree and/or the approximated octree. For example, the encoding scheme includes arithmetic encoding. As a result of the encoding, a geometry bitstream is generated.

The color transformer 240006, the attribute transformer 240007, the RAHT transformer 240008, the LOD generator 240009, the lifting transformer 240010, the coefficient quantizer 240011, and/or the arithmetic encoder 240012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 240006 according to the embodiments performs color transform coding of transforming color values (or textures) included in the attributes. For example, the color transformer 240006 may transform the format of color information (for example, from RGB to YCbCr). The operation of the color transformer 240006 according to embodiments may be optionally applied according to the color values included in the attributes.

The geometry reconstructor 240005 according to the embodiments reconstructs (decompresses) the octree and/or the approximated octree. The geometry reconstructor 240005 reconstructs the octree/voxels based on the result of analyzing the distribution of points. The reconstructed octree/voxels may be referred to as reconstructed geometry (restored geometry).

The attribute transformer 240007 according to the embodiments performs attribute transformation to transform the attributes based on the reconstructed geometry and/or the positions on which geometry encoding is not performed. As described above, since the attributes are dependent on the geometry, the attribute transformer 240007 may transform the attributes based on the reconstructed geometry information. For example, based on the position value of a point included in a voxel, the attribute transformer 240007 may transform the attribute of the point at the position. As described above, when the position of the center of a voxel is set based on the positions of one or more points included in the voxel, the attribute transformer 240007 transforms the attributes of the one or more points. When the trisoup geometry encoding is performed, the attribute transformer 240007 may transform the attributes based on the trisoup geometry encoding.

The attribute transformer 240007 may perform the attribute transformation by calculating the average of attributes or attribute values of neighboring points (e.g., color or reflectance of each point) within a specific position/radius from the position (or position value) of the center of each voxel. The attribute transformer 240007 may apply a weight according to the distance from the center to each point in calculating the average. Accordingly, each voxel has a position and a calculated attribute (or attribute value).

The attribute transformer 240007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 240007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 240008 and/or the LOD generator 240009.

The RAHT transformer 240008 according to the embodiments performs RAHT coding for predicting attribute information based on the reconstructed geometry information. For example, the RAHT transformer 240008 may predict attribute information of a node at a higher level in the octree based on the attribute information associated with a node at a lower level in the octree.

The LOD generator 40009 according to the embodiments generates a level of detail (LOD) to perform prediction transform coding. The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 240010 according to the embodiments performs lifting transform coding of transforming the attributes a point cloud based on weights. As described above, lifting transform coding may be optionally applied.

The coefficient quantizer 240011 according to the embodiments quantizes the attribute-coded attributes based on coefficients.

The arithmetic encoder 240012 according to the embodiments encodes the quantized attributes based on arithmetic coding.

Although not shown in the figure, the elements of the point cloud encoder may be implemented by hardware including one or more processors or integrated circuits configured to communicate with one or more memories included in the point cloud providing device, software, firmware, or a combination thereof. The one or more processors may perform at least one of the operations and/or functions of the elements of the point cloud encoder described above. Additionally, the one or more processors may operate or execute a set of software programs and/or instructions for performing the operations and/or functions of the elements of the point cloud encoder of FIG. 4. The one or more memories according to the embodiments may include a high speed random access memory, or include a non-volatile memory (e.g., one or more magnetic disk storage devices, flash memory devices, or other non-volatile solid-state memory devices).

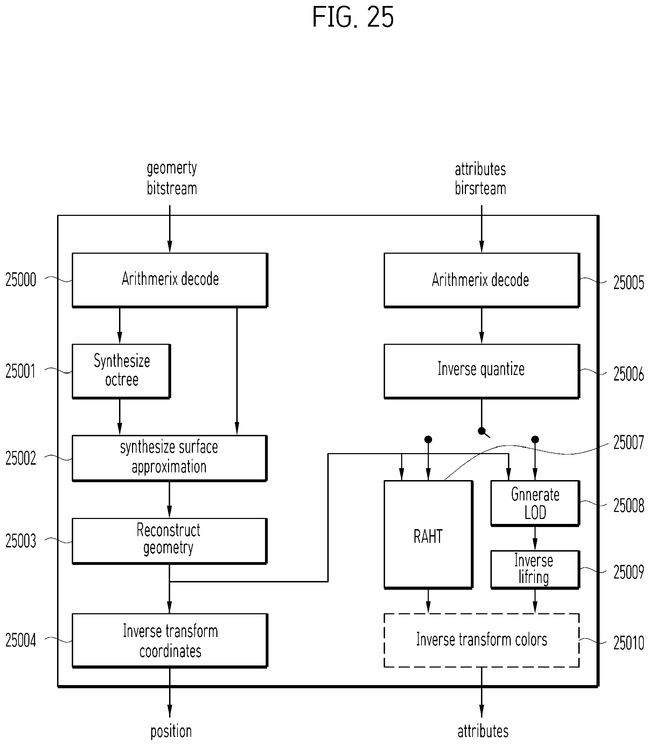

FIG. 25 illustrates a point cloud decoder according to embodiments.

The point cloud decoder illustrated is an example of the point cloud decoder, and may perform a decoding operation, which is the reverse process to the encoding operation of the point cloud encoder.

The point cloud decoder may perform geometry decoding and attribute decoding. The geometry decoding is performed before the attribute decoding.

The point cloud decoder according to the embodiments includes an arithmetic decoder (Arithmetic decode) 25000, an octree synthesizer (Synthesize octree) 25001, a surface approximation synthesizer (Synthesize surface approximation) 25002, and a geometry reconstructor (Reconstruct geometry) 25003, a coordinate inverse transformer (Inverse transform coordinates) 25004, an arithmetic decoder (Arithmetic decode) 25005, an inverse quantizer (Inverse quantize) 25006, a RAHT transformer 25007, an LOD generator (Generate LOD) 25008, an inverse lifter (inverse lifting) 25009, and/or a color inverse transformer (Inverse transform colors) 11010.

The arithmetic decoder 25000, the octree synthesizer 25001, the surface approximation synthesizer 25002, and the geometry reconstructor 25003, and the coordinate inverse transformer 25004 may perform geometry decoding. The geometry decoding according to the embodiments may include direct coding and trisoup geometry decoding. The direct coding and trisoup geometry decoding are selectively applied. The geometry decoding is not limited to the above-described example, and is performed as an inverse process of the geometry encoding/

The arithmetic decoder 25000 according to the embodiments decodes the received geometry bitstream based on the arithmetic coding. The operation of the arithmetic decoder 25000 corresponds to the reverse process to the arithmetic encoder 240004.

The octree synthesizer 25001 according to the embodiments may generate an octree by acquiring an occupancy code from the decoded geometry bitstream (or information on the geometry secured as a result of decoding). The occupancy code is configured as described in detail with reference to FIG. 24.

When the trisoup geometry encoding is applied, the surface approximation synthesizer 25002 according to the embodiments may synthesize a surface based on the decoded geometry and/or the generated octree.

The geometry reconstructor 25003 according to the embodiments may regenerate geometry based on the surface and/or the decoded geometry. As described with reference to FIG. 24, direct coding and trisoup geometry encoding are selectively applied. Accordingly, the geometry reconstructor 25003 directly imports and adds position information about the points to which direct coding is applied. When the trisoup geometry encoding is applied, the geometry reconstructor 25003 may reconstruct the geometry by performing the reconstruction operations of the geometry reconstructor 40005, for example, triangle reconstruction, up-sampling, and voxelization. The reconstructed geometry may include a point cloud picture or frame that does not contain attributes.

The coordinate inverse transformer 25004 according to the embodiments may acquire positions of the points by transforming the coordinates based on the reconstructed geometry.

The arithmetic decoder 25005, the inverse quantizer 25006, the RAHT transformer 25007, the LOD generator 25008, the inverse lifter 25009, and/or the color inverse transformer 25010 may perform the attribute decoding. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 25005 according to the embodiments decodes the attribute bitstream by arithmetic coding.

The inverse quantizer 25006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud encoder.

According to embodiments, the RAHT transformer 25007, the LOD generator 25008, and/or the inverse lifter 25009 may process the reconstructed geometry and the inversely quantized attributes. As described above, the RAHT transformer 25007, the LOD generator 25008, and/or the inverse lifter 25009 may selectively perform a decoding operation corresponding to the encoding of the point cloud encoder.

The color inverse transformer 25010 according to the embodiments performs inverse transform coding to inversely transform a color value (or texture) included in the decoded attributes. The operation of the color inverse transformer 25010 may be selectively performed based on the operation of the color transformer 240006 of the point cloud encoder.

Although not shown in the figure, the elements of the point cloud decoder of FIG. 25 may be implemented by hardware including one or more processors or integrated circuits configured to communicate with one or more memories included in the point cloud providing device, software, firmware, or a combination thereof. The one or more processors may perform at least one or more of the operations and/or functions of the elements of the point cloud decoder of FIG. 25 described above. Additionally, the one or more processors may operate or execute a set of software programs and/or instructions for performing the operations and/or functions of the elements of the point cloud decoder of FIG. 25.

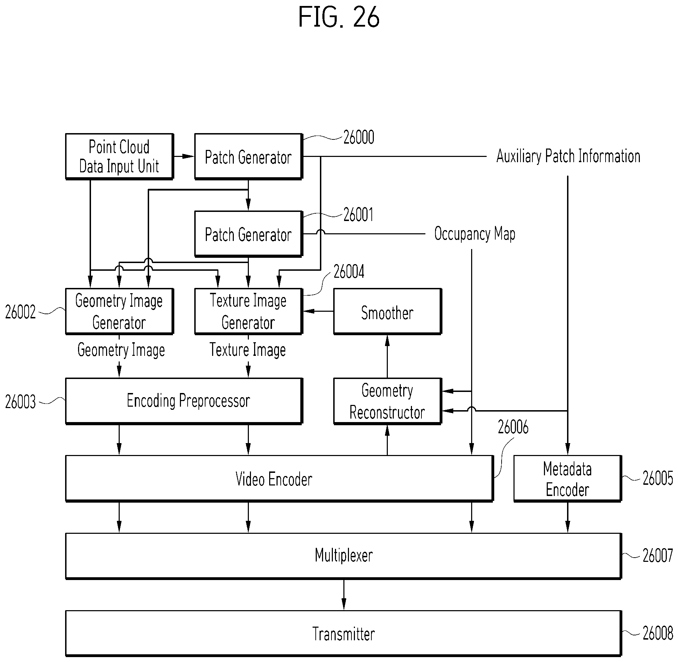

FIG. 26 is a flowchart illustrating operation of a transmission device according to embodiments of the present disclosure.

FIG. 26 represents the VPCC encoder of FIG. 11, Each component of the transmission device may correspond to software, hardware, a processor and/or a combination thereof.

An operation process of the transmission terminal for compression and transmission of point cloud data using V-PCC may be performed as illustrated in the figure.

The point cloud data transmission device according to the embodiments may be referred to as a transmission device.

Regarding a patch generator 26000, a patch for 2D image mapping of a point cloud is generated. Auxiliary patch information is generated as a result of the patch generation. The generated information may be used in the processes of geometry image generation, texture image generation, and geometry reconstruction for smoothing.

Regarding a patch packer 26001, a patch packing process of mapping the generated patches into the 2D image is performed. As a result of patch packing, an occupancy map may be generated. The occupancy map may be used in the processes of geometry image generation, texture image generation, and geometry reconstruction for smoothing.

A geometry image generator 26002 generates a geometry image based on the auxiliary patch information and the occupancy map. The generated geometry image is encoded into one bitstream through video encoding.

An encoding preprocessor 26003 may include an image padding procedure. The geometry image regenerated by decoding the generated geometry image or the encoded geometry bitstream may be used for 3D geometry reconstruction and then be subjected to a smoothing process.

A texture image generator 26004 may generate a texture image based on the (smoothed) 3D geometry, the point cloud, the auxiliary patch information, and the occupancy map. The generated texture image may be encoded into one video bitstream.

A metadata encoder 26005 may encode the auxiliary patch information into one metadata bitstream.

A video encoder 26006 may encode the occupancy map into one video bitstream.

A multiplexer 26007 may multiplex the video bitstreams of the generated geometry image, texture image, and occupancy map and the metadata bitstream of the auxiliary patch information into one bitstream.

A transmitter 26008 may transmit the bitstream to the reception terminal. Alternatively, the video bitstreams of the generated geometry image, texture image, and the occupancy map and the metadata bitstream of the auxiliary patch information may be processed into a file of one or more track data or encapsulated into segments and may be transmitted to the reception terminal through the transmitter.

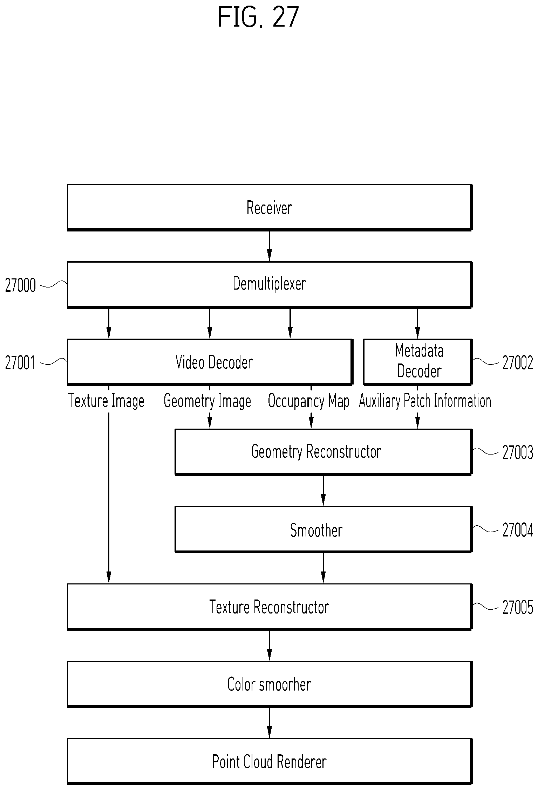

FIG. 27 is a flowchart illustrating operation of a reception device according to embodiments.

Each component of the reception device may correspond to software, hardware, a processor and/or a combination thereof.

The operation of the reception terminal for receiving and reconstructing point cloud data using V-PCC may be performed as illustrated in the figure. The operation of the V-PCC reception terminal may follow the reverse process of the operation of the V-PCC transmission terminal of FIG. 26.

The point cloud data reception device according to the embodiments may be referred to as a reception device.

The bitstream of the received point cloud is demultiplexed into the video bitstreams of the compressed geometry image, texture image, occupancy map and the metadata bitstream of the auxiliary patch information by a demultiplexer 27000 after file/segment decapsulation. A video decoder 27001 and a metadata decoder 27002 decode the demultiplexed video bitstreams and metadata bitstream. 3D geometry is reconstructed by a geometry reconstructor 27003 based on the decoded geometry image, occupancy map, and auxiliary patch information, and is then subjected to a smoothing process performed by a smoother 27004. A color point cloud image/picture may be reconstructed by a texture reconstructor 27005 by assigning color values to the smoothed 3D geometry based on the texture image. Thereafter, a color smoothing process may be additionally performed to improve the objective/subjective visual quality, and a modified point cloud image/picture derived through the color smoothing process is shown to the user through the rendering process (through, for example, the point cloud renderer). In some cases, the color smoothing process may be skipped.

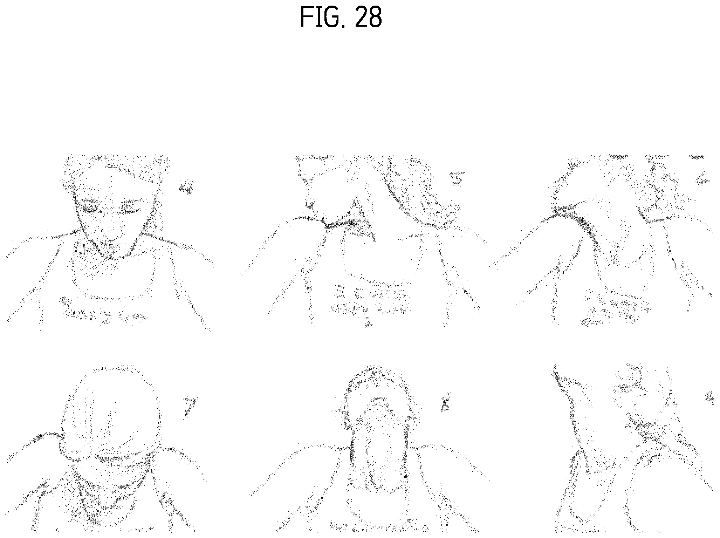

FIG. 28 illustrates conversational point cloud data according to embodiments.

FIG. 28 illustrates an example of conversational point cloud data processed by a method/device according to embodiments corresponding to the XR device 100c, a wireless communication system (FIG. 2) including an encoder/decoder, a point cloud data processing system (FIGS. 8 to 14) connected to a communication network, a point cloud data transmission/reception device (FIGS. 17 and 24 to 27), and the like.

The method/device for transmitting and receiving point cloud data according to embodiments may compress and reconstruct the conversational point cloud data as shown in FIG. 28. The point cloud data transmission/reception method/device according to the embodiments may be referred to as a method/device according to embodiments.

The method/device according to the embodiments may include and perform a method of generating an upper body-based rotation axis and parameters for real-time virtual conversation and conference systems (Method of shoulder-neck reference axis for XR conversational systems).

Embodiments include an efficient human recognition method for a realistic virtual conversation and conference system capable of three-dimensionally acquireing a user's face in real-time and bi-directionally and having a conversation in a virtual environment. In order to implement a conversation between users, a camera field capable of recognizing multiple humans, a point camera capable of physically acquireing a shape or face of a user, a color camera, and a camera capable of expressing depth are used. It is important to recognize and classify an object of a human or a thing in an environment where humans are recognizable. Most of the 3D technology uses a sensor recognition method using a LIDAR, and uses a method of recognizing point cloud data acquired in real time as an animal, a human, or an object such as a vehicle.

However, in an environment where conversations between users occur in real time, camera-based computer recognition or artificial intelligence-based object learning functions are imposed, and multiple convolution operations are required to learn the objects. In addition, real-time recognition and classification of objects, rather than artificial intelligence, requires a verification device that recognizes objects within LiDAR hardware, and the verification device requires complex receiver processing to minimize delay time and reduce changes in image quality within the LiDAR view. The existing object recognition method includes forming a random recognition box according to the size of the point according to the cluster or density of points and distinguishing the shape of the object based on the shape of the box. In this method, which improves the resolution and detection method, the entire area of the object recognized by the LiDAR sensor is detected, and the number of points is checked to remove or adopt part of the configuration of the points. On the other hand, the inter-user conversational virtual camera has a fixed shape of the expected user that does not change significantly. Additionally, LiDAR sensors and other low-resolution or positioning camera equipment inevitably limit the performance available to users. Accordingly, embodiments may include a fixed screen-based object recognition and an object recognition method that may quickly acquire points and acquire features in an environment where motion is determined.

Embodiments include VR of MTSI from 3GPP TS 26.114 and XR from TR26.928 and include the 3GPP TS26.223 standard, in which IMS-based telepresence is discussed. The standards may allow mobile or detachable receivers to attend virtual meetings to participate in immersive meetings. In the case where conversational data may be delivered in a media format, embodiments include 5G Media Architecture of 3GPP TS26.501, TS26.512, and TS26.511. Additionally, to specify services, related standards may include TS26.238, TS26.939, TS24.229, TS26.295, TS26.929, and TS26.247.

In the method/device according to embodiments, the existing method of recognizing objects in real time through an encoder/decoder, a point cloud is acquired in two dimensions in a bird-view or front-view form, and a depth map is formed in each acquisition method. Using the formed points and depth, the RGP camera forms a 3D object and performs an algorithm to determine the object based on the acquired information. A bounding box is created based on the points and objects in the box are recognized. Since the points in a point cloud do not exchange information with each other, the method of tracking the shape of an object based on the object recognized in the box and the existing database is widely used. However, in a real-time conversational system, the preprocessing process and the process of learning and recognizing objects are less required than in a real-time automated system. The recognized shape of an object is limited to a human or a thing, and a point cloud is constructed in a relatively fixed shape rather than a variable shape of the object.

For example, human recognition generates a reference point based on the full body shape of a human. When the front part of a human is recognized by the camera, the rotation axis of the human is created based on the spine of the pelvis and the waist, stomach, and hands where points are relatively concentrated. Once the axis of the pelvis is created, a skeleton is formed by averaging the density of points at the center of the pelvis and arbitrary points of the head, shoulders, hands, legs, and feet. The skeleton value is then applied to the avatar of 3D graphics to express the movement or motion of the graphic image or is used to recognize the movement of objects in games.

The method/device according to embodiments is designed for a fast recognition method in which a pre-preprocessing function is not required based on that the main user is a human and that a change in an object included in the camera is relatively small, based on the characteristic of the conversational acamera. The designed method uses an initial recognition method using the angles of the head, shoulders, and neck, which is conversational, rather than based on the human's waist and spine. The angle may be easily acquireed using the angle of the vector expressed on the 2D screen of the point, and the reference point may be easily created in the 3D conversional system, simplifying the processing speed in the real-time 3D conversational system.

The method/device according to embodiments recognizes an object recognized in three dimensions as a human based on the neck and shoulders in a two-dimensional plane for low-computation and low-latency processing of conversational point cloud data. However, actual point data requires data information to recognize whether the 2D screen of the input point cloud is a human or an object. Since information about objects other than humans is not transmitted through 3D real-time conversation, the position of the central object may be roughly determined based on a set of points centered on the camera. The figure described below shows various cases where a human may be recognized on a 2D screen when an actual 3D recognition camera is applied.

Referring to FIG. 28, it may be seen that the recognition structure of an object shown in front of a camera may be expressed differently depending on the shape of the shoulders and face of a real human, and that the screen is transmitted based on the upper body, unlike the whole body points. In order to distinguish a human object, information about the 2D space and 3D depth information using an IR camera may be pre-acquired. The 3D depth information is used to express the dimensions of an object and has depth information about points in a 2D plane. Therefore, the noise of surrounding objects may be removed in advance through the intersection of the data of the outermost depth of objects in the point cluster, and the primary filtered information in the 2D picture may be acquired. The filtering process is performed in two steps.
1. Presenting a 2D map of points that intersect with information corresponding to the color depth and 2D position information excluding points within the depth with a specific critical point.
2. When the size of the vector drawn in the generated 2D point cloud image is smaller than a certain threshold, excluding the point corresponding to the vector.
3. If necessary, creatnig a straight outline along the outermost part of the point cluster on the 2D plan.

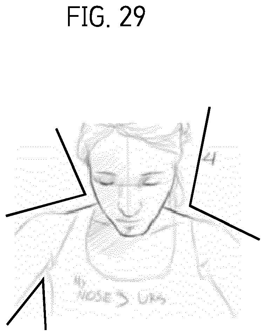

FIG. 29 illustrates an example of filtering according to embodiments.

FIG. 29 illustrates the filtering process described with reference to FIG. 28.

The picture determined by the three types of filtering may be schematized as shown in FIG. 29.

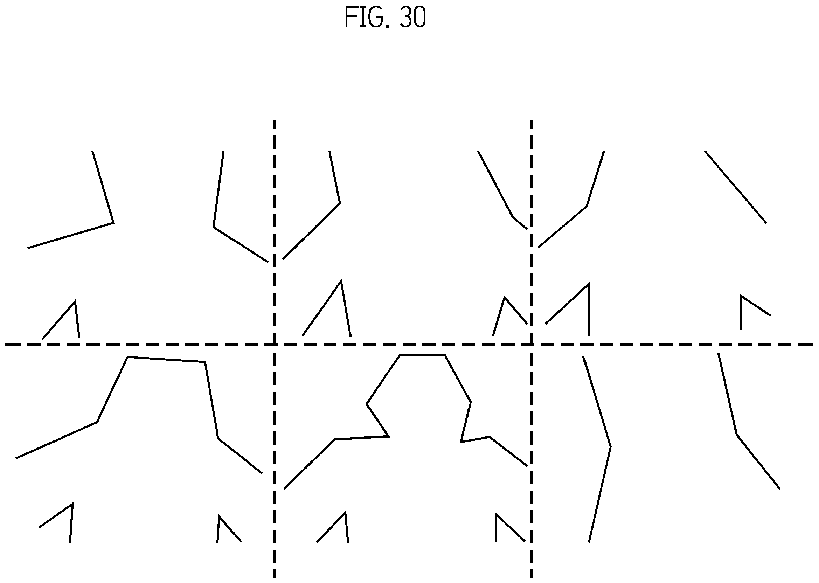

FIG. 30 shows vector configuration according to embodiments.

FIG. 30 shows that the data of FIG. 29 is generated in various types of vector configurations.

Referring to FIG. 30, reference points of a human's spine and pelvis cannot be created using the outline and point data of the 2D screen of the point cloud that has not been identified. Assuming that the data is fixedly divided into 16 points within the range of the point cloud box formed based on the non-regression method, areas where more than 50% of the points are concentrated may be highlighted.

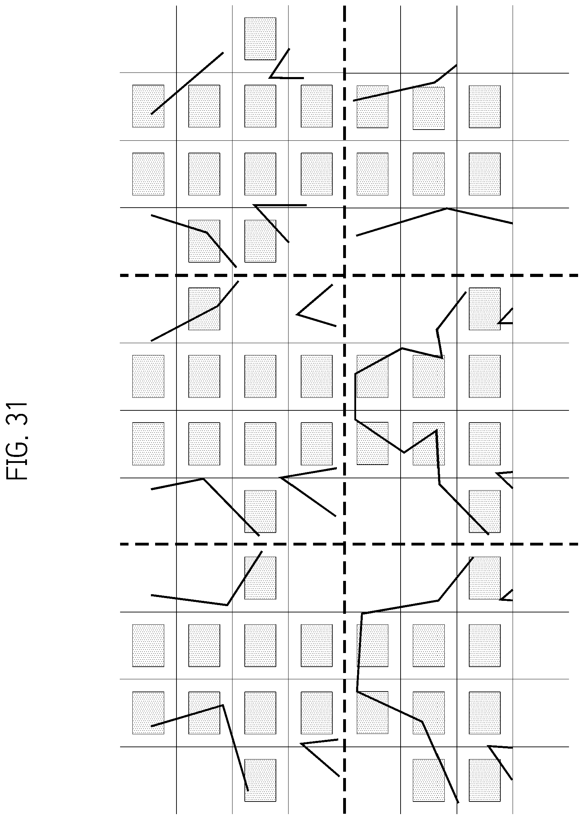

FIG. 31 illustrates examples of partitioning according to embodiments.

The method/device according to embodiments may create a vector of point cloud data as shown in FIG. 30, divide the data into 16 parts within the range of the point cloud box as shown in FIG. 31, and detect and present dense areas based on the distribution of points.

The method/device according to embodiments may generate a central axis according to the object of the thing, as shown in FIG. 31, and may generate a head spine angle and a shoulder angle.

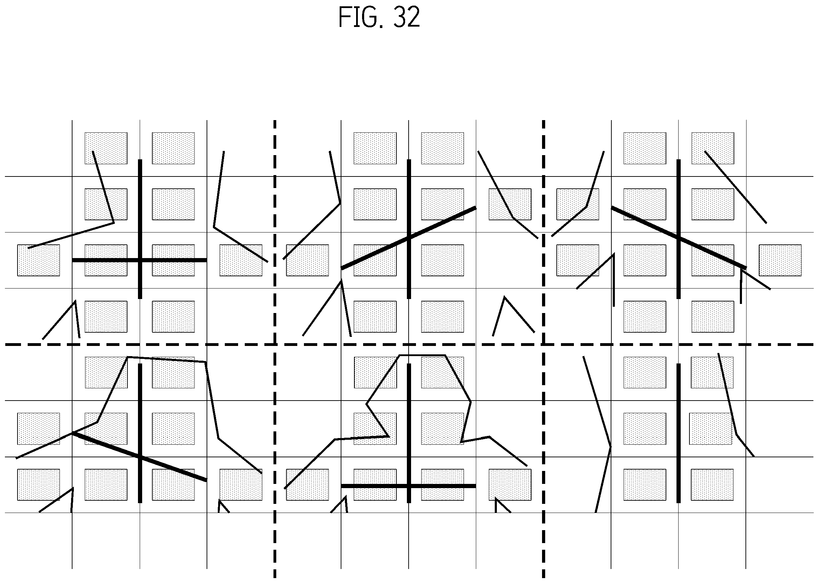

FIG. 32 illustrates an example of generating an axis for an object of conversational point cloud data according to embodiments.

Through the above-described process, the method/device according to the embodiments may acquire the central axis and center point of the human on the conversational 2D screen, as shown in FIG. 32. If the shoulder axis is not found, it may be recognized as an object other than a human, but only the rotation head spine axis is defined based on the center position of the point. When two axes are created, they may be recognized as the head spine and shoulder axes, and form the center coordinate and shoulder reference. If only one reference is recognized on the two axes, the existing data processing method or data pre-processing is omitted and the recognized data is stored and delivered in a conversational format. Additionally, if any of the data is not recognized, changes in behavior parameters for recognizing human behavior may not be applied.

The following operations are performed by the transform system (converter or processor) of the point cloud data transmission and reception device (encoder/decoder) according to embodiments. Crystallization-based center coordinates and transform system are used to find the angle of the shoulder axis. The angles of the head and shoulders are used for angular transformation to correct the front of the user screen, or as a correction value for auto transformation of 2D tilt and 3D graphic mapping. The method of finding the optimal angle based on a probabilistic distribution represents the angle of the vector that matches the reference head/shoulder angle and may extract all vector angles from places where 50% or more of the points are concentrated within the range of the point cloud box formed based on the non-regression method. A related method will be described in detail with reference to the following drawing.

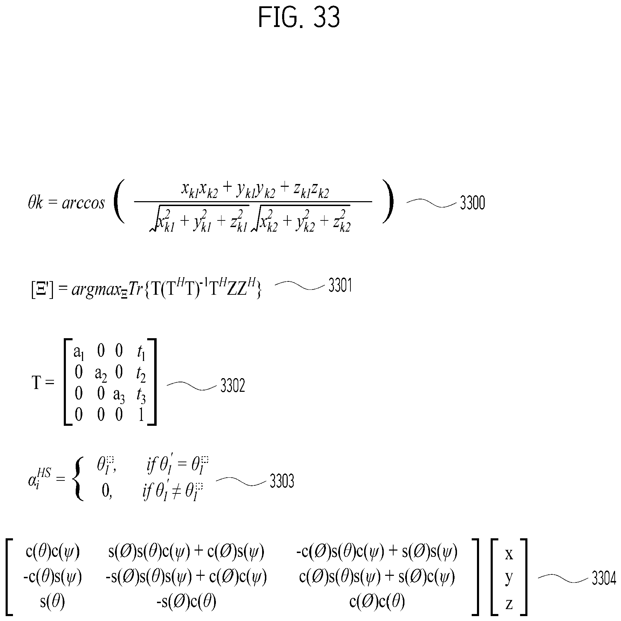

FIG. 33 illustrates axis selection, estimation, transformation, angle generation, and rotation matrix generation according to embodiments.

Regarding operation 3300, Theta_k denotes the angle between one vector k_1 present in the k-th box and k_2, and each vector consists of x-, y- and z-axis position values as (x_k1, y_k1, z_k1) and (x_k2, y_k2, z_k2). Based on the screen or recognized vector information transformed using operation 3300, the selection of the angle of the transformed point on the x, y, z axes for the point that is first recognized by the camera and the head/shoulder axis may be estimated as in operation 3301.

The angular matrix Ξ predicted in operation 3301 is an equation for estimation of the diagonal matrix Z consisting of all Theta values including the k-th eleemnt within the fixed available variable set Ξ. For example, if three vector angles are generated, Z=[θ_1, 0, 0; 0, θ_2, 0; 0, 0, θ_3] is configured. The matrix T is a transformation matrix and is generally configured as a diagonal matrix. However, when a transformation bias is created, a transformation constant may be considered after zero padding. If bias is generated, the transformation matrix T may be the same as in operation 3302.

In operation 3302, a_1, a_2, and a_3 denote weight values corresponding to the first, second, and third input values, and t_1, t_2, and t_3 denote addition values corresponding to the first, second, and third input values. Only when there is an angle equal to the initial input Theta value among the angles of predicted ΞDiag[ θθθ... θ]^ (e.g., θθ), the variable is processed, and the value of the head/shoulder of the i-th 2D frame, angle alpha_i^HS, is calculated as in operation 3303.

In operation 3303, the angle of rotation is used as an initial view correction value in tracking the front of a human. The rotational transformation may be switched to the (x, y) axis, (y, z) axis, or (z, x) axis depending on the depth of view and the box position of the point. The head/shoulder angle, alpha_i^HS, may transform the x, y, z points by rotation as shown below, and the rotation matrix is defined as in operation 3304.

In operation 3304, psi denotes the rotation value of the z-axis, theta denotes the rotation value of the y-axis, and phi denotes the rotation value of the x-axis, and may be applied by substituting alpha_i^HS for each value.

Accordingly, the transmission device and reception device according to embodiments may provide the following effects.

For real-time conversational XR transmission, the initial data recognition method is based on point distribution rather than a database, and thus the human shapes may be recognized quickly, efficiently, and accurately.

Because an object is not created based on the skeleton of the body, the central axis may be quickly formed based on the face, neck, spine and both shoulders, which are the main forms of conversation suitable for two-way communication.

The formed central axis is simple and fast compared to data learning recognition, and the correction angle for rotation correction may be easily acquired, thereby reducing the preprocessing of the calculation and acquiring a more accurate initial rotation value.

The partitioning methods according to embodiments (FIGS. 28 to 32, etc.) according to embodiments may easily interwork with geometry information used in the geometry-based point cloud or video-based point cloud compression scheme because the fixed-type boxes may be distinguished from each other individually.

Based on simplified recognition of objects, patterns for users or objects may be easily created.

Objects for the entire screen may be divided and used as fixed reference information for calculation standards when switching to global coordinates.

The created simplified object may be used as a reference value for tracking sophisticated objects that are tracked based on a thing, if necessary.

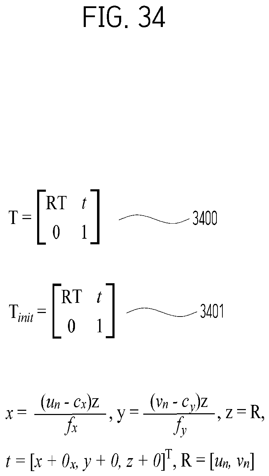

FIG. 34 illustrates a method of transforming point cloud data according to embodiments.

FIG. 34 illustrates a method of transforming point cloud data for conversation convenience by the method/device according to the embodiments corresponding to the XR device 100c, a wireless communication system (FIG. 2) including an encoder/decoder, a point cloud data processing system (FIGS. 8 to 14) connected to a communication network, a point cloud data transmission/reception device (FIGS. 17 and 24 to 27), and the like.

The method/device according to embodiments may include and perform a method of tracking of eyes and facial direction for real-time XR conversational systems.

Embodiments further include a method of efficiently tracking and recognizing human eyes by an immersive virtual conversation and conference system capable of acquiring a user's face in 3D in real time and bi-directionally and having a conversation in a virtual environment. In order to implement a conversation between users, a camera field capable of recognizing multiple humans, a point camera capable of physically acquireing a shape or face of a user, a color camera, and a camera capable of expressing depth are used. It is important to recognize and classify an object of a human or a thing in an environment where humans are recognizable. Most of the 3D technology uses a sensor recognition method using a LIDAR, and uses a method of recognizing point cloud data acquired in real time as an animal, a human, or an object such as a vehicle.

However, in an environment where conversations between users occur in real time, camera-based computer recognition or artificial intelligence-based object learning functions are imposed, and multiple convolution operations are required to learn the objects. In addition, real-time recognition and classification of objects, rather than artificial intelligence, requires a verification device that recognizes objects within LiDAR hardware, and the verification device requires complex receiver processing to minimize delay time and reduce changes in image quality within the LiDAR view.

In particular, in conversational human recognition, a human's eyes and mouth are important elements that may recognize a human's psychology or mood. In video conversations, users may feel the realism of the conversation just by looking at a certain direction, and it may be an important clue to behavioral elements that cannot be expressed in language. Eye tracking technology was mainly designed to prevent accidents in self-driving cars by looking at the driver's eyes and recognizing eye patterns. In addition, many technologies are designed to track eye direction because it is necessary to predict the direction of the eye and prevent accidents in advance. Embodiments may further include a method of expressing a conversation with a human realistically by comprehensively extracting features of the eyes, the direction of the face, and the direction of the nose, which are standards for conversation, for real-time conversation with a human.

To track human eyes, 2D and 3D methods are widely used. Existing 2D video methods apply appearance or feature-based methods. The feature-based method is to extract facial features to recognize the face of a human. However, when the face is rotated more than 45 degrees, features may not be recognized. The appearance-based method utilizes the position of the head or the individual's face based preconfigured data information. In this method, it is easy to recognize humans, but errors in recognition occur when there is light or strong shadows. Additionally, the appearance-based method requires considerable preconfigured information to learn the data. The 3D recognition method includes a method of tracking by configuring a database with part of the patch, a method of averaging multiple human faces and storing the same on a graphics card for comparison, and a method of reducing simplified information and using the simplified information on the avatar. In addition, high-quality resolution images are required to track the eyes. Depending on the performance of the camera, an elliptical image of the eye directed forward may be tracked, but high-resolution 3D information is required for imaging.

In both 2D and 3D methods, accuracy increases when information is processed based on preconfigured data. however, the processing requires time, data, and computational processes. In this regard, the present disclosure is directed to a method of recognizing a human face and determining the face direction in real time while minimizing preconfigured information. In particular, rather than extracting information from all data in detail, the main featuers of a human acquireed in two and three dimensions may be tracked and the direction in which the human views from a large directional perspective may be determined. With this method, the axis reference and direction angle may be quickly determined in real-time conversation and the reference axis may be efficiently created in human-to-human conversation.

Embodiments allow objects recognized in 3D to be processed within a fixed range for low-computation and low-latency processing of 3D point cloud data. The figure below shows the appearance recognized on the screen when a 3D recognition camera is actually applied. As the camera, a 2D or infrared camera may be used to acquire information about the surface area of an object. The infrared camera may be used with additional devices such as a distance measurement device capable of measuring the depth. The initial recognition of objects is assumed to be performed according to the method of [Simplicity of recognition method: forming a box at a fixed position in the three-dimensional space of a hexahedron within the field of view, and calculating the unit of the object based on the fixed shape, regardless of the position of the object or point or the shape of the image] and [Omitting the preprocessor: generating spine and shoulder axes of a human based on the input data by omitting the preprocessor of the 3D video, and extracting automatic transformation rotation angle: calculating the angle of a 2D vector in a point-dense area. Automatic rotation angle extraction for frontal tracking. 2D and 3D transformers for acquisition of frontal data: Used as an initial value for the operation criteria when transforming the global coordinates. Therefore, the embodiments assume that data has been acquired in advance and that all general image preprocessing processes have been performed. Additionally, it is assumed that a human is recognized and that reference points for the head, neck, shoulders, and spine are formed in the recognized human. Therefore, the input unit recognizes the human and forms the reference axis of the human. Specifically, an initial transformation matrix may be created to acquire data on the orientation of the human and the eye. The transformation matrix is defined as 3400 in FIG. 34.

In method 3400, T denotes the transformation matrix, RT denotes the 3D rotation matrix, t denotes the translation transformation vector, and 0 denotes the zero vector. In order to recognize the screen and direction in real time rather than using stored data values, the value of T is the most important in finding the convergence value, and the method of finding the transformation value and median value of the nose of a human when the human is looking straight ahead is method 3401.

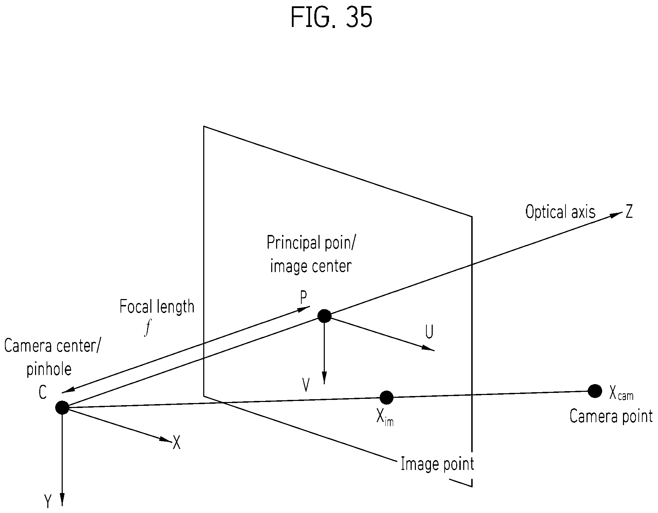

In method 3401, u_n and v_n are the median values acquired in a 2D plane and are values used to predict the median. c_x, c_y, f_x, and f_y are intrinsic camera parameters and denote principal points and focal lengths in a pinhole camera model. A schematic illustration of the values is shown in FIG. 35.

FIG. 35 illustrates a camera point, an image point, and an image plane according to embodiments.

o_x, o_y, o_z are offsets from the center and are determined as arbitrary values by the transformation system or shift values. For points determined without a database values are generally generated through the center pinhole of the camera, as shown in the figure above. When an image is being acquired from the camera according to the method of [forming a box at a fixed position in the three-dimensional space of a hexahedron within the field of view, and calculating the unit of the object based on the fixed shape, regardless of the position of the object or point or the shape of the image] and [generating spine and shoulder axes of a human based on the input data by omitting the preprocessor of the 3D video, and extracting automatic transformation rotation angle (calculating the angle of a 2D vector in a point-dense area. Automatic rotation angle extraction for frontal tracking), Used as an initial value for the operation criteria when transforming the global coordinates through 2D and 3D transformers for acquisition of frontal data], the following information may be acquired in advance:
1. Index of a point within the bounding box
2. Depth information about the point
3. Reference axis of head and shoulders

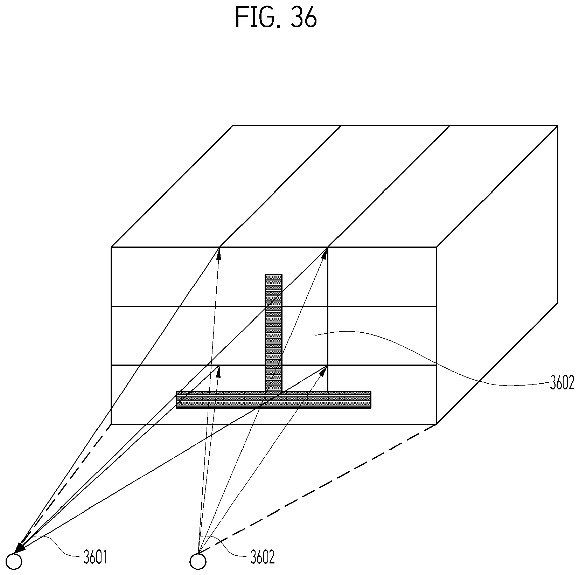

The data from which the reference is formed may be expressed as in FIG. 36.

FIG. 36 illustrates a reference of point cloud data according to embodiments.

FIG. 36 illustrates that a proposed method operates when one IR camera (left) and a laser projector (right) camera measure the depth of a point in three dimensions. The lines 3600 schematically show the reflection of the wave that is emitted from the laser and acquired as lines 3601. Assuming that a 3D rectangle is acquired as a 2D plane from 3D points, the figure shows a virtual creation of the arrival and reflection of the points. Here, it is assumed that there are nine bounding boxes currently based on the contents of [forming a box at a fixed position in the three-dimensional space of a hexahedron within the field of view, and calculating the unit of the object based on the fixed shape, regardless of the position of the object or point or the shape of the image]. Also, it is assumed that the head/shoulder axes are formed according to [generating spine and shoulder axes of a human based on the input data by omitting the preprocessor of the 3D video, and extracting automatic transformation rotation angle (calculating the angle of a 2D vector in a point-dense area. Automatic rotation angle extraction for frontal tracking), Used as an initial value for the operation criteria when transforming the global coordinates through 2D and 3D transformers for acquisition of frontal data]. If the axes are not formed, the initial point is created based on the currently widely used center principal point. If the axes are formed, only the depth map information related to the set bounding box where points are except for the shoulder axis is filtered based on the head spine axis (box 3602).

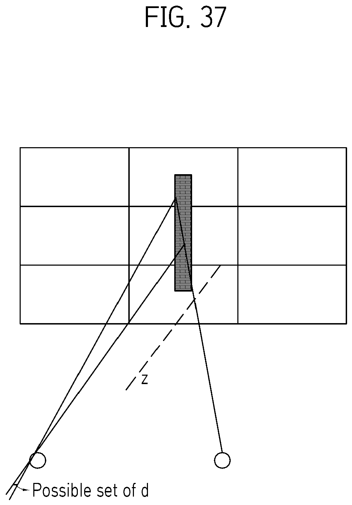

FIG. 37 illustrates a relationship between a point, a camera, and a laser projector according to embodiments.

When only the points in region 3602, the IR camera, and the laser projector described with reference to FIG. 36 are defined separately, they are represented as shown in FIG. 37.

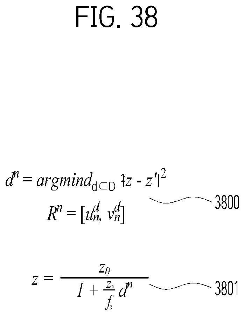

FIG. 38 illustrates a distance and a constant value according to embodiments.

In FIG. 37, the value d (distance) of the z-axis in the projector may be measured as the above-described value, and the equation for acquireing d is defined as the method 3800 of FIG. 38.

In the method 3800, u^d_n and v^d_n denote vectors u and v corresponding to d^n. d^n denotes the distance constant according to the reflection distance between the object plane and the reference plane d^n represents the optimal value within the set of alphabet D present in the bounding box 3602. The constant z denotes the distance between the camera for measuring the distance and the actually captured screen, and z' denotes the distance of the screen having the loss of the actually measured distance. In the proposed method, the image of the existing point is not determined as the median value of the camera, but is determined by a simple equation. The actual measurement reference value of the z-axis is determined as shown in method 3801 in FIG. 38.

In the method 3801, z_0 is a fixed constant, f_z is the focal length, and d (distance) denotes the projection distance difference between the reference plane and the object plane based on the camera.

With the method according to the embodiments, the reference point and the optimal human orientation may be quickly acquired. However, they are not based on data on the human face, the following errors may occur. 1) If a human is wearing glasses or makeup, the start position may change compared to the median. 2) If the angle at which an object is viewed is not directed to the front, errors may occur in initial data acquisition. 3) If a face is positioned in front of the camera with a pointed object such as a finger or straw placed in front of the face, the starting point may be started based on the pointed object.

However, for a point produced as described above above, errors may be corrected or easily compensated for by common methods by a combination of [forming a box at a fixed position in the three-dimensional space of a hexahedron within the field of view, and calculating the unit of the object based on the fixed shape, regardless of the position of the object or point or the shape of the image] and [generating spine and shoulder axes of a human based on the input data by omitting the preprocessor of the 3D video, and extracting automatic transformation rotation angle (calculating the angle of a 2D vector in a point-dense area. Automatic rotation angle extraction for frontal tracking), Used as an initial value for the operation criteria when transforming the global coordinates through 2D and 3D transformers for acquisition of frontal data]. In the case of the problem of 1), when glasses or makeup are worn, the position value may change due to the makeup. However, the amount of change in value due to error is small because the direction of the vector according to the changed position is the same as the front. 2) If the angle at which the object is viewed is not the front, the spine axis of the head and shoulders is not initially formed. Accordingly, if this value is not acquired, the technology disclosed herein is not applied. Data is acquired in real time. Accordingly, if a human present on the acquisition camera views the front or maintains an angle correctly to form an axis, initial data may be acquired. 3) If a human is holding a finger or straw in his or her face, an error occurs in determining the data direction. However, if the direction of the object being held in the face does not deviate significantly from the center point of the human, the direction value will be similar to the value of the center point. If the direction deviates significantly, an error may occur based on the 45 degree of the vector. The above errors may occur in the process of acquiring initial data and converging in the optimal direction, but the speed of convergence does not differ significantly from the median.

Humans are more likely to have conversations with their eyes in the direction of their face. In order to easily track the eyes in detail, the resolution of the set of stored point clouds should be high. However, the resolution of the point cluster is determined by the performance of the camera to perform transmission, or errors occur due to the rendering method. Therefore, a human's general gaze is determined by the face and vector R. Additionally, the eye tracking method starts by tracking the state of the eyes. Like the object tracking method, a rectangular area may be formed on parts of a human face corresponding to the left and right eyes.

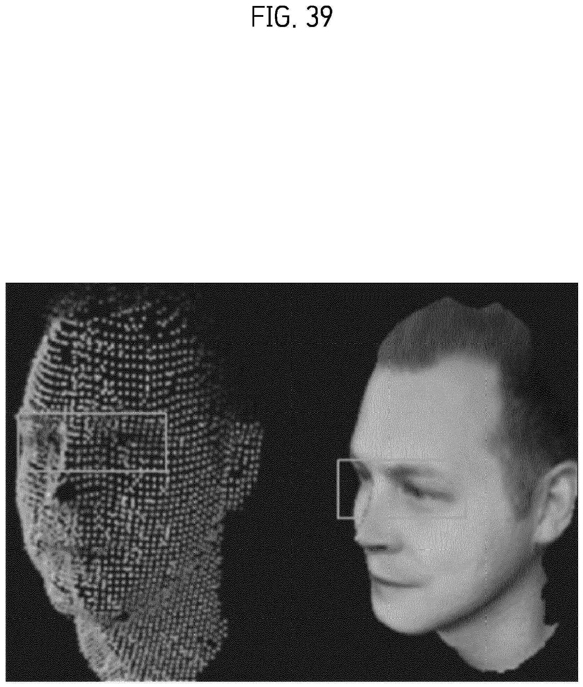

FIG. 39 illustrates mask sampling according to embodiments.

The method/device according to embodiments corresponding to the XR device 100c, a wireless communication system (FIG. 2) including an encoder/decoder, a point cloud data processing system (FIGS. 8 to 14) connected to a communication network, a point cloud data transmission/reception device (FIGS. 17 and 24 to 27), and the like may track the eyes, as shown in FIG. 39.

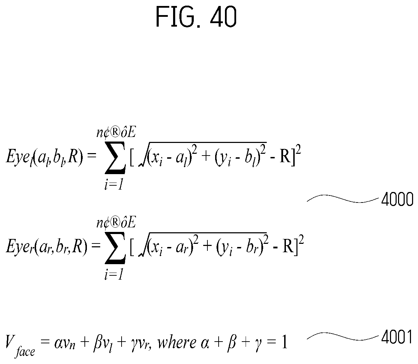

Referring to Figure 39, a mask sampling filter is used to track 3D sampling eyes in a rectangular eye plane. However, the mask sampling filter requires data based on the shape of the eyes. Accordingly, samples that are close to a circle in a 2D plane are acquired. The acquisition may be performed using the least square method, and the method may be determined as shown in FIG. 40.

FIG. 40 illustrates a method of acquiring sampling eyes according to embodiments.

In method 4000 of FIG. 40, a_l, b_l, a_r, and b_r denote a center point of a left eye and a right eye, and R denotes a fitting circle radius that may replace the pupil of the eye. X_i and y_i denote the points that be present in the point alphabet E present in each eye. When it is assumed that the direction vector of a human's nose is v_n and the direction vectors of both eyes are v_l and v_r, information about the direction recognized by the human is finally calculated as in method 4001.

Thus, the transmission device and reception device according to embodiments may provide the following effects.

In a real-time gaze processing method for recognizing the gaze and emotion of a human in a conversation with the human, the direction of the eyes and nose of the human is determined based on the intuitiveness of points, not information of existing data.

Since the existing database is not used, the method is robust to changes in the shape or directionality of a human changing in real time. The orientation of a human may be easily identified and be efficiently used in a rendering process or 3D graphic mapping information.

Since the simplified method is used, the data processing time may be shortened and the method may be properly used for the real-time conversational XR conference system requiring the low latency process.

Because it may be determined based on the point cloud data itself without the help of auxiliary information on the capture screen, the operation is not limited to the type of point cloud or capture device.

The proposed method may be easily linked to the geometry information used in general geometry-based point cloud or video-based point cloud compression methods.

The method/device according to embodiments may include and perform a method of merging multiple camera point views in a real-time realistic virtual conversation using a 5G network (Method of merging different point cloud view over 5G networks).

Embodiments relate to a method of synthesizing 3D data received from several places when a 5G network is used in a realistic virtual conversation and conference system capable of three-dimensionally acquiring the face of a user in real time and in both directions and performing a conversation in a virtual environment. In order to implement a conversation between users, a camera field capable of recognizing multiple humans, a point camera capable of physically acquireing a shape or face of a user, a color camera, and a camera capable of expressing depth are used. It is important to recognize and classify an object of a human or a thing in an environment where humans are recognizable. Most of the 3D technology uses a sensor recognition method using a LIDAR, and uses a method of recognizing point cloud data acquired in real time as an animal, a human, or an object such as a vehicle.

In order to achieve real-time point cloud conversational service, a service network is a prerequisite. Services using the 5G network connect to the Internet or wireless network to transmit user information in both directions and acquire initial data. The acquired data includes acquiring general information about the identity of a user and the service the user wants. In order to acquire a real-time point cloud service, the service may be delivered using an existing network. The service may be transmitted as media data or may be transmitted using a telephone network according to the flow of the service.

If the point data is allocated from two or more cameras or two or more resources, there is a need to synthesize the input data and transmit the synthesized data to the user. The point cloud combination method may be a method of simply combining points. However, a modified method that is not a simple combination method may be required to recognize an object in real time and transmit more high-quality immersive data.

Embodiments include VR of MTSI from 3GPP TS 26.114 and XR from TR26.928 and include the 3GPP TS26.223 standard, in which IMS-based telepresence is discussed. The standards may allow mobile or detachable receivers to attend virtual meetings to participate in immersive meetings. In the case where conversational data may be delivered in a media format, embodiments include 5G Media Architecture of 3GPP TS26.501, TS26.512, and TS26.511. Additionally, to specify services, related standards may include TS26.238, TS26.939, TS24.229, TS26.295, TS26.929, and TS26.247. Additionally, data processing-related technologies include ISO/IEC JTC 1/SC 29/WG3 NBMP.

Currently, the most widely used method of combining two point sets is the iterative closest point (ICP) method. If there are two data sets, the distance error is defined and a transform that minimizes this value is found. The ICP method uses both a source and a model set to form a comparison point of the model. However, this method assumes that a pre-defined model should exist and that all points should be 1:1 mapped to part or all of the pre-defined model set. Data cannot be defined by linking to every test or reference value one by one. Therefore, when parts of the data overlap (e.g., part of the whole data captured by one camera and the rest of the whole data captured by another camera are combined), there are practical implementation issues regarding which model to choose and which features to extract and link.. Additionally, if the color values are determined differently, problems arise in the method of expressing the color values in addition to the method of combining the positions of the points. In order to solve the existing general method, there is a method of determining a spherical model and converting the data into data present in a sphere. This method also needs to transform and compare data using limited dimensions, and there is difficulty in connecting the features suitable for the model one by one.

Embodiments propose a point combining method suitable for XR conversational services that require real-time conversation in a limit environment where points related to the above are combined. The proposed method includes acquiring point data in real time and combining the acquired data in real time, and the combined data may be exchanged as two-way data through a 5G network.

Embodiments are extended to two techniques: partial face neck orient calib and eye nose direction.

For example, the following information may be acquired in real time.

The method/device according to embodiments acquire information such as 1. the index of a point present in the bounding box, 2. point depth information, and 3. reference axis of the head and shoulders and automatic rotation angle in relation to face_neck_orientation (see FIGS. 28 to 33), and acquire information such as 4. the direction of the human figure and 5. the direction of the human eye in relation to eye_nose_direction_calibration (see FIGS. 34 to 40).

The five parameters are information that may be acquired using a point capture camera to process conversational virtual reality points in real time. The above information is designed to be suitable for an conversational virtual environment in a manner in which data is quickly acquired differently from the existing method and components of a human may be quickly identified.

In order to express the realistic state of the user at multiple angles, the point data may be acquired by photographing the user at multiple angles with multiple cameras in a large conference hall rather than from a single direction from the user's third person perspective. In this case, two or more point generation input sets may occur, and there is a need to combine the point sets rather than 1:1 delivery due to specific requirements.

The method/device according to the embodiments basically assumes that the user's face is captured from the front or back. There is a difficulty in combining user data when there is a significant amount of variation that is not related to the user's face (e.g., in environments where there are large differences between different cameras including one camera capturing the user's front, another camera capturing the user's face from the bottom of the foot, and another camera capturing the user's face from the top of the head). In the above combination method, a widely used existing method is used rather than the fast data processing method for a point cloud. A method of combining a given point set by referring to multiple models or adjusting the positions of the combined points through repetitive modification may be adopted for the combination. When photographing is performed by a camera from the head end of a human, there is no way to confirm that the points acquired from the front are the same data value without preconfigured information, and therefore a metadata index value for acquiring the value should be shared in advance. If such data is not present, the camera may recognize nearby objects, analyze how the data is combined, and connect the two point data by matching the data. Reference objects that may be present at the center of a human may be a chair, a desk, a computer, a flowerpot, a window of a building, and the like. After performing a recognition process of an object based on the existing data information about the object, data of a point of a human head and data of a front point may be equally modified based on a reference point of the recognized object to synthesize/combine the same.

When the data is combined based on the data model of the user, a Gaussian image of the data is formed and the rotation/transform is switched based on the characteristics of the accumulated data to combine the data. However, an error occurs in the information due to an imbalance in the accumulated data history and the noise and interference in the accumulated data. This method combines the data by using the feature data obtained within the point set as a reference, rather than by storing the information obtained from [face neck orientation: see FIGS. 28 to 33] and [eye nose direction calibration: see FIGS. 34 to 40], i.e., the five parameters, as random point data..

In a scene environment composed of human figures, similar points have similar values (geometry or attributes) in terms of the features of the acquired points. Therefore, a group to be observed in a set of points acquired by multiple cameras may form a normal value or an alignment shape (sphere or plane) of a point. And when similarity is found, the combination may be performed focusing on the portions having the similarity. Each point generally has a normal value as well as a point, and is acquired in the following manner.

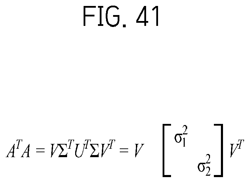

A set of neighbor points present within a radius r from one point p, close to a particular sphere or plane may be configured. In general, a point may have information on each normal value. If a normal value of the point P does not exist, the normal vector may be predicted by analyzing the normal value of a neighbor node and a normal vector of the 2x2 Matrix A composed of neighbor points is predicted and calculated as shown in FIG. 41.

FIG. 41 illustrates a normal vector of a matrix for neighbor points according to embodiments.

The method/device according to embodiments corresponding to the XR device 100c, a wireless communication system (FIG. 2) including an encoder/decoder, a point cloud data processing system (FIGS. 8 to 14) connected to a communication network, a point cloud data transmission/reception device (FIGS. 17 and 24 to 27), and the like may generate a normal vector of a matrix for combining points with similar characteristics, as shown in FIG. 41.

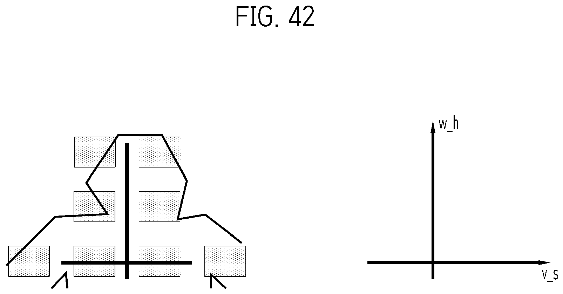

In FIG. 41, V denotes an Eigen vector and sigma denotes an Eigen value. Vector V generated in a neighbor node is used as a normal value. Once the normal values and directions of all nodes are determined, a main reference feature is formed through [face neck orientation: see FIGS. 28 to 33] and [eye nose direction calibration: see FIGS. 34 to 40] based on basic data such as point positions and normals. Through this process, a major reference feature is formed. For XR Conversational, human-centered features may be obtained. First, a vector result value of the spine of the user's shoulder is generated as a reference axis in a 2D plane, and an example thereof is shown in FIG. 42.

FIG. 42 illustrates an example of generating a plane reference axis from a vector related to a shoulder and spine of a user according to embodiments.

The method/device according to embodiments corresponding to the XR device 100c, a wireless communication system (FIG. 2) including an encoder/decoder, a point cloud data processing system (FIGS. 8 to 14) connected to a communication network, a point cloud data transmission/reception device (FIGS. 17 and 24 to 27), and the like may generate axes related to the shoulder and spine of the human object participating in the conversation based on normal information, five parameters according to the embodiments, and reference features, as shown in FIG. 42.

In FIG. 42, an example showing the axes for a human is obtained by shaping a silhouette of the human based on external angle information of a point cloud acquired from a random user, and the axes of the shoulders and head of the human are determined based on the shaped 2D data. [face neck orientation: see FIGS. 28 to 33 1]. The two axes in FIG. 42 are formed from the human axis, forming basis axes like the x and y axes of a 2D plane. v_s denotes the shoulder reference vector, and w_h denotes the head spine reference vector. reference vector). Depending on the human's behavior or the tilt type, the angle of the two basis vectors may or may not be a right angle.

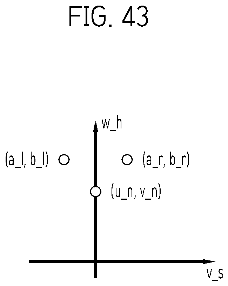

Second, the values of the face point source and eye point source, which are obtained simultaneously in the process of extracting human features, are determined as shown in FIG. 43 [eye nose direction calibration: FIGS. 34 to 40].

FIG. 43 illustrates a face point source and an eye point source according to embodiments.

The method/device according to embodiments corresponding to the XR device 100c, a wireless communication system (FIG. 2) including an encoder/decoder, a point cloud data processing system (FIGS. 8 to 14) connected to a communication network, a point cloud data transmission/reception device (FIGS. 17 and 24 to 27), and the like may generate a source point related to a face including eyes and a nose of a human object participating in a conversation, as shown in FIG. 43.

In FIG. 43, (u_n, v_n) denotes an optimal point position value representing (or predicting) a nose of a human obtained in the process of calculating a distance constant according to a reflection distance between an object plane and a reference plane. (a_l, b_l) and (a_r, b_r) denote the center points of the left eye and the right eye of the predicted human. For two dimensions, each point position is defined as n = (u_n, v_n), el = (a_l, b_l), and er = (a_r, b_r). The circles in FIG. 43 may be sources that determine the eyes and nose of the human.

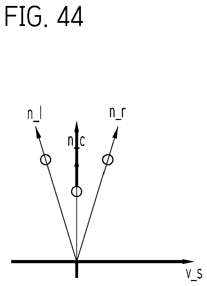

FIG. 44 illustrates a vector related to a source point according to embodiments.

[FIG. 44 illustrates an example of acquiring a vector related to the point generated in FIG. 43.

In FIG. 44, vectors of a center point (x, y) generated as an intersection of w_h and v_s and three points are defined as n_l, n_c, and n_r, where n_c = (u_n-x, v_n-y), n_l = (a_l-x, b_l-y), n_r = (a_r-x, b_r-y.

The configuration of an axis based on the direction has two advantages. One is that the axis may be easily rotated, and thus the combination may be easily performed in various ways based on the axis of the human. Because the axis is a reference point, errors caused by detailed movements may be reduced. In the existing method, which is based on a set of points, errors due to combinations or errors of some points should be taken into account. Based on a total of three reference vectors and two main reference axes, three point reference feature references may be created based on the head and shoulders.

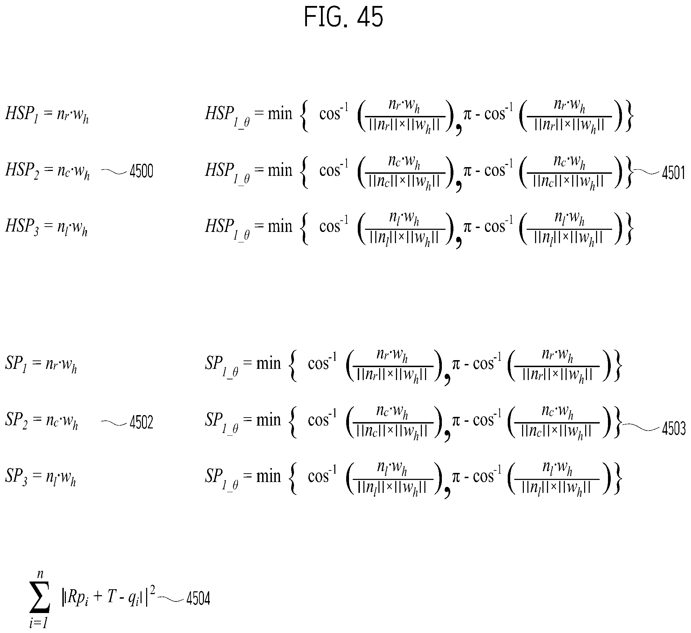

The feature references form a total of 6 feature bins by combining 3 vector directions based on the 2 main axes. The feature bins compare the degrees of repetition or overlap of the created points to combine two or more point sets. First, the head-spine feature point (HSP) is calculated as shown in FIG. 45.

FIG. 45 illustrates a head spine feature point according to embodiments.

The method/device according to embodiments corresponding to the XR device 100c, a wireless communication system (FIG. 2) including an encoder/decoder, a point cloud data processing system (FIGS. 8 to 14) connected to a communication network, a point cloud data transmission/reception device (FIGS. 17 and 24 to 27), and the like may generate a head-spine feature point (HSP) based on the method of FIGS. 43 and 44, as shown in method 4500 in FIG. 45.

In method 4500 in FIG. 45, '.' denotes the inner product of two vectors. In the same equation, HSP may be calculated as a rotation angle, and the value thereof is calculated as in method 4501 in FIG. 45.

Second, the shoulder feature point (SP) is calculated according to method 4502 in FIG. 45.

In method 4502, '.' denotes the inner product of two vectors. In the same equation, SP may be calculated as the rotation angle, and the value thereof is calculated as in method 4503.

The 12 generated feature values may be used in an existing well-known manner. 1) By forming a feature map using histogram-based data accumulation, information on features composed of a step function may be stored and categorized. 2) By using the sphere radius value, parameter restriction may be applied, such as determining the interval based on the adjacent neighbors within a point, and mathematical transformation is easily performed with a feature distribution. 3) Average based statistical values may be extracted based on the average and variance of all points, and and unique features may be found out using bias values. 4) The generated values may be compared with the existing histogram or reference values using the Kullback-Leibler distance (divergence) model to facilitate data set consistency or analysis.

Even if 6 to 12 feature references are formed by measuring actual data, the values are not accurately distinguished and errors based on decimal points or integers may occur. For example, neighbor nodes within a reference point have similarities, and their respective distances from a specific point p are similar. However, not all of them match. Therefore, a threshold or detailed range that allows the range of references to be differentiated may be defined, and this value may vary depending on the implementation.

The data may be verified through nine feature references between the point sets p and q of the data acquired by two or more cameras. If two features are similar, they may be combined. In all combination methods, the distribution and comparison of all points are performed based on points divided within the feature set, and the method for minimizing errors is the iterative closest point method, which is commonly known, and the transformation equation is the same as in method 4504.

In 4504, the point p_i for all n point indexes i performs a combining method that satisfies the error constant that minimizes the new value of q_i that is combined with the transformation value of R and the translation value of T.

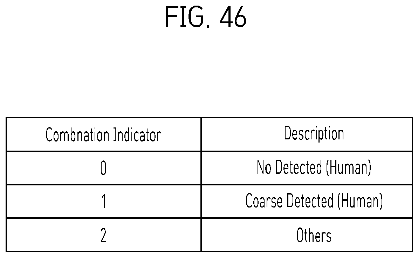

The method according to the embodiments assumes that the same type of object is acquired by multiple cameras. If the points are combined on the assumption that there are two people, the combined points cannot be combined by separating the detailed features of the people (classification of people, etc.), and accordingly two or more people may be combined. To prevent this issue, errors may be minimized by adding one or more additional well-known features (shape, sphere, plane, edge, blank, etc.) rather than the basic features. Also, there are cases where humans are combined. It may be difficult to acquire data for which the basic human features (head-spine axis, shoulder axis) have not been formed due to noise or interference. However, if the basic features are not found, the basic axes of a human may be created using the reference model or the reacquisition method. If the values of two or more points in the bounding box are not acquired, a data error signal may be detected by creating a signal flag such as No Detected. If the flag signal is not detected, an axis is formed and feature values may be extracted. Third, there are cases where basic feature values are acquired due to human features, but nose and eye values cannot be acquired. In this environment, the principal point of the image is determined as a large point set such as the human face rather than the human nose, and data may be transmitted without the detailed values of the eyes being acquired. In this case, classification for recognizing a human or as a non-human object or animal within the metadata is required. Since XR Conversational should acquire human information and process data in real time, the required error metadata is also required to be minimal, and the available recognition information is shown in FIG. 46.

FIG. 46 shows metadata according to embodiments.

The method/device according to embodiments corresponding to the XR device 100c, a wireless communication system (FIG. 2) including an encoder/decoder, a point cloud data processing system (FIGS. 8 to 14) connected to a communication network, a point cloud data transmission/reception device (FIGS. 17 and 24 to 27), and the like may generate and transmit metadata, as shown in FIG. 46. When the field combinationindicator is equal to 0, the field indicates No Detected (Human). In other words, it indicates that no human is detected. When the field is equal to 1, it indicates Coarse Detected (Human), that is, it indicates that a human is detected. When the field is equal to 2, it indicates others.

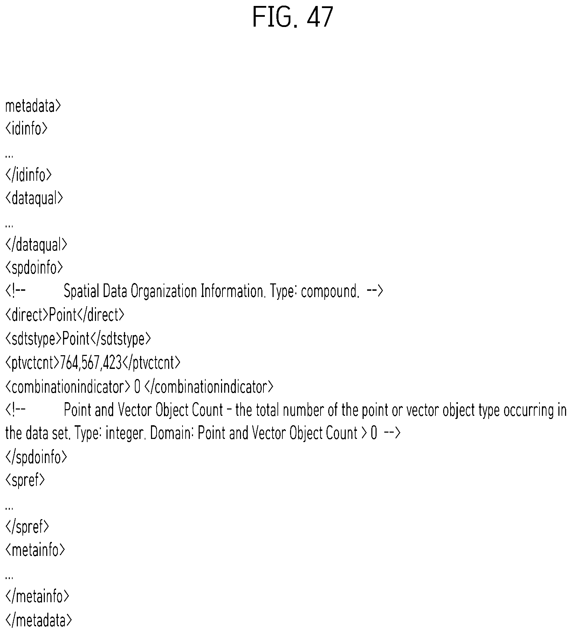

FIG. 47 shows metadata according to embodiments.

Metadata related to FIG. 46 may be created and transmitted in the form as shown in FIG. 47.

In addition, simple data may be exchanged using the telephone network by creating configured information about attributes.

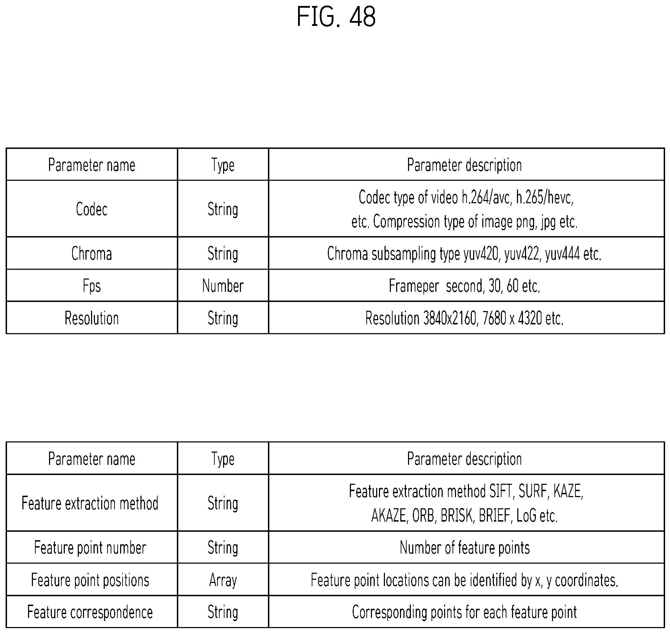

Parameters to be connected may be transmitted by forming a data reference template, and components to be transmitted according to the type of point cloud data may be transmitted along with the data as shown in FIGS. 48 to 50.

FIG. 48 shows metadata according to embodiments.

The metadata according to the embodiments may include media parameters 4800 and feature parameters 4801 as shown in FIG. 48, and the encoder may transmit a bitstream containing point cloud data, the media parameters, and the feature parameters to the decoder.

The media parameters 4800 may include the following elements.

Codec: Indicates a codec type such as 264/avc or h.265/hevc, and may indicate an image compression type such as PNG or JPG.

Chroma: Indicates a chroma subsampling type such as yuv420, yuv422, or yuv444.

Fps: Indicates the number of frames per seconds such as 30 seconds or 60 seconds.

Resolution: Indicates a resolution such as 3840x2160 or 7680 x 4320.

The feature parameters 4801 may include the following elements.

Feature extraction method: Indicates a feature extraction method such as SIFT, SURF, KAZE, AKAZE, ORB, BRISK, BRIEF, or LoG.

Feature point number: Indicates the number of feature points.

Feature point positions: Indicates feature point positions identified by X and Y coordinates.

Feature correspondence: Indicates a corresponding point for each feature point.

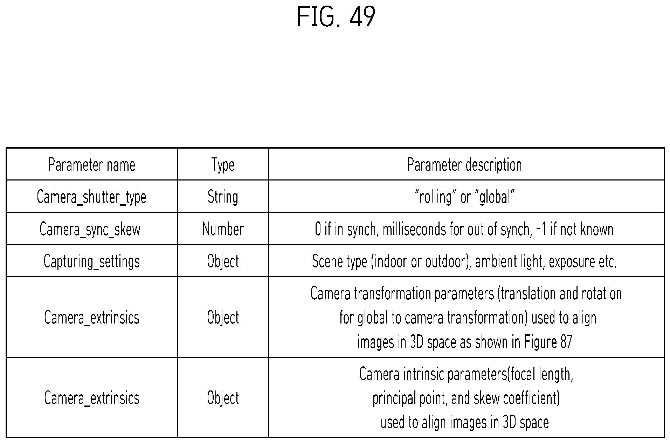

FIG. 49 shows metadata according to embodiments.

The metadata according to the embodiments may include camera parameters as shown in Figure 49, and the encoder may transmit a bitstream containing point cloud data and the camera parameters to the decoder.

The camera parameters may include the following elements.

Camera_shutter_type: may indicate "rolling" or "global."

Camera_sync_skew: 0 if synchronized; otherwise, -1 in milliseconds for out of sync.

Capturing_settings: Indicates the scene type, such as indoor or outdoor, ambient light, exposure, etc.

Camera_extrinsics: Indicates camera transformation parameters (translation and rotation for global to camera transformation) used to align images in 3D space.

Camera_intrinsics: Indicates camera intrinsic parameters (focal length, principal point, and skew coefficient) used to align images in 3D space.

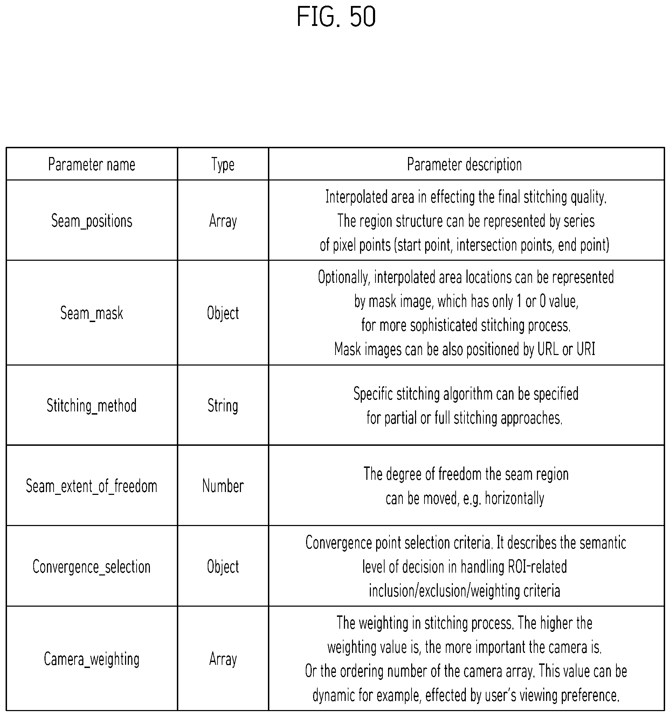

FIG. 50 shows metadata according to embodiments.

The metadata according to the embodiments may include stitching parameters as shown in FIG. 50, and the encoder may transmit a bitstream containing point cloud data and the stitching parameters to the decoder.

Seam_positions: Indicates an interpolated area in effecting the final stitching quality. The region structure can be represented as a series of pixel points (start point, intersection point, end point).

Seam_mask: Optionally, the interpolated area locations can be represented by a mask image, which has only 1 or 0 as a value, for a more sophisticated stitching process. Mask images may also be positioned by URL or URI.

Stitching_method: May indicate a specific stitching algorithm for partial or full stitching approaches.

Seam_extent_of_freedom: May indicate the degree of freedom that by which the seam region can be moved, for example, horizontally.

Convergence_selection: Indicates the convergence selection criteria. It may indicate the semantic level of decision in handling ROI-related inclusion/exclusion/weighting criteria.

Camera_weighting: Indicates the weighting in the stitching process. The higher the weighting value is, the more important the camera is. Or it may be the ordering number of the camera array. The value may be dynamic, for example, effected by the user's viewing preferences.

Thus, the transmission device and reception device according to embodiments may provide the following effects.

Data of a point cloud of a human acquired with two or more cameras may be efficiently combined.

Features are extracted in real time without a process of generating initial information of two combined data and comparing the data shape or type of the point cloud in advance.

The extracted features are composed of axes of points, allowing efficient use of the combination algorithm and reducing the convergence speed.

The preconfigured camera information, the sampling of the camera, the camera parameters, and the metadata of the media are not required, and the data may be considered independent and thus easily used when real-time fast information is exchanged.

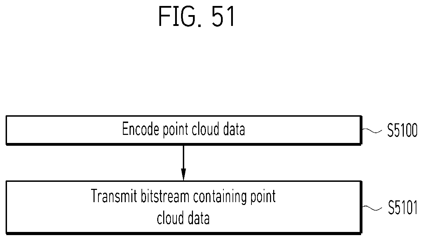

FIG. 51 illustrates a point cloud data transmission method according to embodiments.

In S5100, the method of transmitting point cloud data according to the embodiments may include encoding point cloud data.

The encoding operation according to the embodiments may correspond to or include the XR device 100c of FIG. 1, the UE of FIG. 2, the acquisition/encoding of FIG. 8, the encoders of FIGS. 9 to 14, the video/audio encoder 1700 of FIG. 17, the encoder of FIG. 24, the transmission device of FIG. 26, and the encoding of point cloud data according to FIGS. 28 to 45.

In S5101, the method of transmitting point cloud data according to the embodiments may further include transmitting a bitstream containing the point cloud data.

The transmission operation according to the embodiments may correspond to or include the transmission of FIG. 8, the transmission of FIGS. 9 and 11, the transmission of FIG. 13, the transmission and reception of FIG. 17, the bitstream transmission of FIGS. 24 and 26, and the transmission of a bitstream containing metadata of FIGS. 46 to 50.

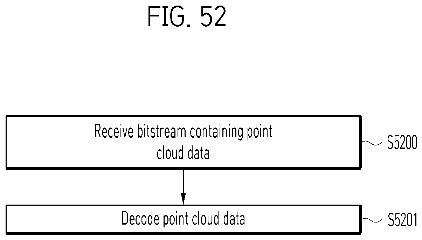

FIG. 52 illustrates a point cloud data reception method according to embodiments.

In S5200, the method of receiving point cloud data according to the embodiments may include receiving a bitstream containing point cloud data.

The reception operation according to the embodiments may correspond to or include the reception of FIG. 8, the reception of FIGS. 10 and 12, the reception of FIG. 14, the transmission and reception of FIG. 17, the bitstream reception of FIGS. 25 and 27, and the reception of a bitstream containing the metadata of FIGS. 46 to 50.

In S5201, the point cloud data reception method may further include decoding the point cloud data.

The decoding operation according to the embodiments may correspond to or include the XR device 100c of FIG. 1, the UE of FIG. 2, the decoding of FIG. 8, the decoderS of FIGS. 9 to 14, the video/audio encoder 1700 of FIG. 17, the decoder of FIG. 25, the reception device of FIG. 27, the decoding of the point cloud data according to FIGS. 28 to 45, and the decoding based on the metadata of FIGS. 46 to 50.

Referring to FIG. 51, the transmission method according to the embodiments may include encoding point cloud data, and transmitting a bitstream containing the point cloud data.

Referring to FIGS. 28 to 30, regarding 2D image filtering/outline generation, the encoding of the point cloud data may include filtering the point cloud data. The filtering may include generating a two-dimensional image related to points of the point cloud data based on a depth of attribute data about the points and position information about the points, excluding a point based on a vector for the two-dimensional image, and generating information about a shape of an object of the point cloud data.

An object of the point cloud data may be a human/person attending a meeting. Since the object includes an upper body area including the face and neck, a three-dimensionally recognized object may be efficiently processed using a 2D image. In the filtering according to the embodiments, points may be filtered on a 2D image to sense information about the outline of the object and a region where important points are densely positioned. A bounding box corresponding to a region containing points may be created, and regions of the 2D image may be partitioned into multiple bounding boxes. Based on the partitioned regions, information about the head-spine axis, head-spine angle, shoulder axis, shoulder angle, and the like may be acquired.

Referring to FIG. 31 and 32, regarding box positioning, indication of a dense point region, and generation of the shoulder/spine axis, the encoding of the point cloud data may include partitioning the two-dimensional image using a box for the point cloud data based on the information about the shape of the object and the two-dimensional image, based on a distribution of the points included in the two-dimensional image, presenting a region containing densely positioned points, and acquiring a center point of the object and two axes.

The two axes may refer to the head-spine axis and the shoulder axis. The head-spine axis and shoulder axis may be used as main information related to the human shape. Human behavior may be recognized through the two axes. The two axes may be referred to as a first axis, a second axis, or the like. To acquire the axes, based on the vectors for the points, the angle of the vector may be generated (see FIG. 33). Based on the vector, a matrix related to the coordinates of the point may be generated, and angle values or the like related to the axes may be generated based on the matrix (see FIG. 33).

Referring to FIGS. 34 to 38, regarding generating the reflection distance d, the encoding of the point cloud data may include filtering depth information about a bounding box containing a point based on a first axis of the two axes, and generating a constant for a reflection distance related to a plane for the bounding box based on a focal length of a coordinate axis.

In order to generate information about the gaze of the human of the object, data about the orientation of the human and gaze may be acquired through a matrix (see FIG. 34).

A main npoint may be present on the image plane, and the image plane may be present on the focal length and coordinate axes. The image point and camera point may be positioned in the same line, and two pieces of vector information about the main point or image center may be used (see FIG. 35).

The head/spine axis may have more influence on a human's gaze between the shoulder axis and head/spine axis. Accordingly, the distance related to the object plane and reference plane may be estimated on the bounding box or box area related to the head/spine axis (see FIGS. 36 to 38). Additionally, errors in the direction of a human's gaze may be corrected.

Referring to FIG. 40, regarding recognition of a human gaze, the encoding of the point cloud data may include generating gaze information about a center point of a left eye and a right eye related to the object, and generating a gaze direction of the object based on a direction vector of a nose of the object and direction vectors of the left eye and the right eye.

Since a person and his or eyes be present in a 3D space, a sampling filter may be used to track them (see FIG. 39). Vector values for both eyes and pupils may be generated, and direction information recognized by the object may be acquired based on the vector.

Referring to FIGS. 41 to 44, regarding shoulder/head reference vectors, the encoding of the point cloud data may include generating reference vectors related to the object based on the two axes, generating point sources related to the object based on the reference vectors, and generating vectors for three points based on the point sources.

Using the head spine axis and shoulder axis of the human as main axes, main points present on or near the axes may be estimated. The main points may be the left eye, right eye, nose, and the like, which are related to the human's gaze. Based on vector information about the main points, feature points related to the human's gaze may be extracted.

Referring to FIGS. 41 to 45, regarding generating a feature reference, the encoding of the point cloud data may include generating a point reference feature reference based on the vectors for the three points and the reference vectors. The point reference feature reference may include a head spine feature point and a shoulder feature point.

Referring to FIG. 46, regarding the combination indicator, the bitstream may contain signaling information indicating an error related to sensing of the object. The bitstream further contains a media parameter, a feature parameter, a camera parameter, and a stitching parameter.

For example, if 3D data is received from multiple sources when a 5G network is used, the data may be synthesized. In order to implement a conversation between users, a camera field capable of recognizing multiple humans, a point camera capable of physically acquireing a shape or face of a user, a color camera, and a camera capable of expressing depth may be used. In an environment where an environment where humans are recognizable, an object of a human or a thing may be recognized and classified. Point cloud data acquired in real time may be recognized as an animal, a human, or an object such as a vehicle.

Additionally, if point data is allocated from two or more cameras or two or more resources, one structure for processing the input data may be synthesized. The point cloud combining method extends beyond simply combining points. It may include recognizing objects in real time and transmitting more high-quality, realistic data. Therefore, through feature points and additional feature information, humans may be recognized and classified, and point cloud data about multiple humans may be synthesized to perform network-based communication.

The point cloud data transmission method according to the embodiments may be performed by a transmission device. The transmission device may include an encoder configured to encode point cloud data; and a transmitte configured to transmit a bitstream containing the point cloud data.

The reception method corresponding to the transmission method may include a method and/or a reverse process corresponding to the transmission method. Referring to FIG. 52, the reception method according to the embodiments may include receiving a bitstream containing point cloud data; and decoding the point cloud data.

The decoding of the point cloud data may include filtering the point cloud data. The filtering may include generating a two-dimensional image related to points of the point cloud data based on a depth of attribute data about the points and position information about the points, excluding a point based on a vector for the two-dimensional image, and generating information about a shape of an object of the point cloud data.

The decoding of the point cloud data may include partitioning the two-dimensional image using a box for the point cloud data based on the information about the shape of the object and the two-dimensional image, based on a distribution of the points included in the two-dimensional image, presenting a region containing densely positioned points, and acquiring a center point of the object and two axes.

The method of receiving point cloud data according to the embodiments may be performed by a reception device. The reception device may include a receiver configured to receive a bitstream containing point cloud data, and a decoder configured to decode the point cloud data.

The decoder that decodes point cloud data may perform an operation of filtering the point cloud data. The filtering may include generating a two-dimensional image related to points of the point cloud data based on a depth of attribute data about the points and position information about the points, excluding a point based on a vector for the two-dimensional image, and generating information about a shape of an object of the point cloud data.

The decoder that decodes point cloud data may partition the two-dimensional image using a box for the point cloud data based on the information about the shape of the object and the two-dimensional image, present, based on a distribution of the points included in the two-dimensional image, a region containing densely positioned points, and acquire a center point of the object and two axes.

Therefore, according to embodiments, the gaze direction of a human may be quickly determined in a virtual/video conference, rendering reflecting the human's gaze may be performed in real time through the acquisition of the gaze direction.

The embodiments have been described in terms of a method and/or a device. The description of the method and the description of the device may complement each other.

Although embodiments have been described with reference to each of the accompanying drawings for simplicity, it is possible to design new embodiments by merging the embodiments illustrated in the accompanying drawings. If a recording medium readable by a computer, in which programs for executing the embodiments mentioned in the foregoing description are recorded, is designed by those skilled in the art, it may also fall within the scope of the appended claims and their equivalents. The devices and methods may not be limited by the configurations and methods of the embodiments described above. The embodiments described above may be configured by being selectively combined with one another entirely or in part to enable various modifications. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this document, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." "A, B, C" may also mean "at least one of A, B, and/or C." Further, in the document, the term "or" should be interpreted as "and/or." For instance, the expression "A or B" may mean 1) only A, 2) only B, and/or 3) both A and B. In other words, the term "or" in this document should be interpreted as "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signal unless context clearly dictates otherwise.

The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to be interpreted, when a specific condition is satisfied, to perform the related operation or interpret the related definition according to the specific condition.

Operations according to the embodiments described in this specification may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory.

The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts and/or data) for the processes according to the embodiments, and a processor configured to control the operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

### [Mode for Disclosure]

As described above, related details have been described in the best mode for carrying out the embodiments.

### [Industrial Applicability]

As described above, the embodiments are fully or partially applicable to a point cloud data transmission/reception device and system.

Those skilled in the art may change or modify the embodiments in various ways within the scope of the embodiments.

Embodiments may include variations/modifications within the scope of the claims and their equivalents.

## Claims

1. A method of transmitting point cloud data, the method comprising:
encoding point cloud data; and
transmitting a bitstream containing the point cloud data.

2. The method of claim 1, wherein the encoding of the point cloud data comprises:
filtering the point cloud data,
wherein the filtering comprises:
generating a two-dimensional image related to points of the point cloud data based on a depth of attribute data about the points and position information about the points;
excluding a point based on a vector for the two-dimensional image; and
generating information about a shape of an object of the point cloud data.

3. The method of claim 2, wherein the encoding of the point cloud data comprises:
partitioning the two-dimensional image using a box for the point cloud data based on the information about the shape of the object and the two-dimensional image;
based on a distribution of the points included in the two-dimensional image, presenting a region containing densely positioned points; and
acquiring a center point of the object and two axes.

4. The method of claim 3, wherein the encoding of the point cloud data comprises:
filtering depth information about a bounding box containing a point based on a first axis of the two axes; and
generating a constant for a reflection distance related to a plane for the bounding box based on a focal length of a coordinate axis.

5. The method of claim 4, wherein the encoding of the point cloud data comprises:
generating gaze information about a center point of a left eye and a right eye related to the object; and
generating a gaze direction of the object based on a direction vector of a nose of the object and direction vectors of the left eye and the right eye.

6. The method of claim 3, wherein the encoding of the point cloud data comprises:
generating reference vectors related to the object based on the two axes;
generating point sources related to the object based on the reference vectors; and
generating vectors for three points based on the point sources.

7. The method of claim 6, wherein the encoding of the point cloud data comprises:
generating a point reference feature reference based on the vectors for the three points and the reference vectors,
wherein the point reference feature reference comprises a head spine feature point and a shoulder feature point.

8. The method of claim 7, wherein the bitstream contains signaling information indicating an error related to sensing of the object,
wherein the bitstream further contains a media parameter, a feature parameter, a camera parameter, and a stitching parameter.

9. A device for transmitting point cloud data, the device comprising:
an encoder configured to encode point cloud data; and
a transmitter configured to transmit a bitstream containing the point cloud data.

10. A method of receiving point cloud data, the method comprising:
receiving a bitstream containing point cloud data; and
decoding the point cloud data.

11. The method of claim 10, wherein the decoding of the point cloud data comprises:
wherein the filtering comprises:
generating a two-dimensional image related to points of the point cloud data based on a depth of attribute data about the points and position information about the points;
excluding a point based on a vector for the two-dimensional image; and
generating information about a shape of an object of the point cloud data.

12. The method of claim 11, wherein the decoding of the point cloud data comprises:
partitioning the two-dimensional image using a box for the point cloud data based on the information about the shape of the object and the two-dimensional image;
based on a distribution of the points included in the two-dimensional image, presenting a region containing densely positioned points; and
acquiring a center point of the object and two axes.

13. A device for receiving point cloud data, the device comprising:
a receiver configured to receive a bitstream containing point cloud data; and
a decoder configured to decode the point cloud data.

14. The device of claim 13, wherein the decoder performs an operation of filtering the point cloud data,
wherein the filtering comprises:
generating a two-dimensional image related to points of the point cloud data based on a depth of attribute data about the points and position information about the points;
excluding a point based on a vector for the two-dimensional image; and
generating information about a shape of an object of the point cloud data.

15. The device of claim 14, wherein the decoder is configured to:
partition the two-dimensional image using a box for the point cloud data based on the information about the shape of the object and the two-dimensional image;
based on a distribution of the points included in the two-dimensional image, present a region containing densely positioned points; and
acquire a center point of the object and two axes.
